# EUROPEAN PATENT APPLICATION

(11) **EP 4 538 195 A1**
(43) Date of publication of application: **16.04.2025**
(21) Application number: 23819780.0
(22) Date of filing: 02.06.2023
(51) Int. Cl.: B65D 35/10

(54) **TUBE CONTAINER, TUBE CONTAINER WITH CONTENTS, AND MANUFACTURING METHOD OF TUBE CONTAINER**

(30) Priority: 10.06.2022 JP 2022094221; 10.06.2022 JP 2022094222; 09.09.2022 JP 2022143626
(71) Applicant: Fuji Seal International, Inc., Osaka-shi, Osaka 532-0003 (JP)
(72) Inventor: ODAGIRI, Shun, Osaka-shi, Osaka 532-0003 (JP); INAGAWA, Yoshinori, Osaka-shi, Osaka 532-0003 (JP); KAMINAGA, Masahiro, Osaka-shi, Osaka 532-0003 (JP); MORITA, Kosuke, Osaka-shi, Osaka 532-0003 (JP)
(74) Representative: Prüfer & Partner mbB Patentanwälte · Rechtsanwälte
(86) International application number: PCT/JP2023/020665
(87) International publication number: WO 2023/238800

(57) **Abstract**

In a tube container (1), a tubular body (10) includes a weld portion (12) having a strip shape formed by curving or bending a single sheet (S) such that a first side end portion (SE1) of the sheet (S) in a plane direction (DP) and a second side end portion (SE2) of the sheet (S) located opposite to the first side end portion (SE1) are overlapped in the thickness direction of the sheet (S) and then welding the first side end portion (SE1) and the second side end portion (SE2) to each other. The tubular body (10) further includes a sheet base portion (11) located between the first side end portion (SE1) and the second side end portion (SE2) of the sheet (S) in the plane direction (DP). The weld portion (12) includes a first leading end edge (121). The first leading end edge (121) is a leading end edge of the first side end portion (SE1) of the tubular body (10) in a circumferential direction (DC) and is joined to a first base end portion (111). The first leading end edge (121) is located within the thickness of the first base end portion (111) when viewed from a direction along the circumferential direction (DC).

## Description

### Technical Field

The present disclosure relates to a tube container, a tube container with a content, and a manufacturing method of a tube container.

### Background Art

Tube containers in the related art are disclosed in JP 6976032 B (Patent Document 1), JP 2021-138458 A (Patent Document 2), and JP 2020-117232 A (Patent Document 3).

For example, a tube container disclosed in Patent Document 1 includes a pouring unit for pouring a content and a body portion welded to the pouring unit and for accommodating the content. The body portion is formed of a tubular body that is formed of a film having a multilayer structure. The film has a three layer structure including an inner layer, an intermediate layer and an outer layer. Examples of a non-adsorbent resin constituting the inner layer and the outer layer include a polyester resin and a cyclic polyolefin resin. The body portion includes a back seal portion. The back seal portion is a portion at which the side edges on both sides of the film having a rectangular shape are overlapped and the overlapped side edges are welded.

### Citation List

### Patent Literature

Patent Document 1: JP 6976032 B
Patent Document 2: JP 2021-138458 A
Patent Document 3: JP 2020-117232 A

### Summary of Invention

### Technical Problem

As disclosed in Patent Documents 1 to 3, in a tubular body constituting a tube container in the related art, the side edges at both ends of a sheet are overlapped and welded to each other. As the resin constituting the sheet, various kinds of resins have been studied.

However, depending on the type of the resin constituting the sheet, the strength of the weld portion of the tubular body may not be sufficient.

The present disclosure has been made in view of the above-described problem, and an object of the present disclosure is to provide a tube container which is practical as a container for accommodating a content by firmly welding sheet to form a tubular body.

### Solution to Problem

A tube container according to the present disclosure includes a tubular body and a spout portion. The tubular body includes a weld portion having a strip shape formed by curving or bending a single sheet such that a first side end portion of the sheet in a plane direction and a second side end portion of the sheet located opposite to the first side end portion are overlapped in a thickness direction of the sheet and then welding the first side end portion and the second side end portion to each other. The spout portion is joined to one end portion of the tubular body in the axial direction. The tubular body further includes a sheet base portion located between the first side end portion and the second side end portion of the sheet in the plane direction. The sheet base portion includes a first base end portion. The first base end portion is a portion continuous with the second side end portion in the sheet. The weld portion includes a first leading end edge. The first leading end edge is a leading end edge of the first side end portion of the tubular body in the circumferential direction and is joined to the first base end portion. The first leading end edge is located within the thickness of the first base end portion when viewed from a direction along the circumferential direction.

According to the above-described configuration, since the first leading end edge is joined to the first base end portion, the weld length of the weld portion when viewed from the axial direction of the tubular body is relatively long. Thus, when a peeling stress is applied to the weld portion, the stress is more dispersed. In addition, since the first leading end edge is located within the thickness of the first base end portion when viewed from the direction along the circumferential direction of the tubular body, the chance of the first leading end edge coming into contact with the outside can be reduced. Thus, it is possible to suppress the first side end portion and the second side end portion of the weld portion from being peeled from each other with the first leading end edge as a starting point. Consequently, it is possible to provide a tube container which is practical as a container for accommodating a content by firmly welding a sheet to form a tubular body.

### Advantageous Effects of Invention

According to the present disclosure, it is possible to provide a tube container which is practical as a container for accommodating a content by firmly welding a sheet to form a tubular body.

### Brief Description of Drawings

FIG. 1 is a front view of a tube container according to a first embodiment of the present disclosure.
FIG. 2 is a side view of the tube container according to the first embodiment of the present disclosure.
FIG. 3 is a cross-sectional view of a tubular body of FIG. 1 as viewed from the arrow direction of line III-III.
FIG. 4 is an exploded perspective view of the tube container according to the first embodiment of the present disclosure.
FIG. 5 is a partial cross-sectional view of a sheet constituting the tubular body according to the first embodiment of the present disclosure.
FIG. 6 is a partial cross-sectional view of the tubular body of FIG. 1 as viewed from the arrow direction of line VI-VI.
FIG. 7 is an enlarged partial cross-sectional view of a region VII of FIG. 6.
FIG. 8 is an enlarged partial cross-sectional view of a region VIII of FIG. 6.
FIG. 9 is a partial cross-sectional view of a tubular body according to a first modification of the first embodiment of the present disclosure.
FIG. 10 is a view illustrating a tube container including a tubular body according to a second modification of the first embodiment of the present disclosure.
FIG. 11 is a partial cross-sectional view of the tube container of FIG. 1 as viewed from the arrow direction of line XI-XI.
FIG. 12 is a flowchart illustrating a manufacturing method of the tube container according to the first embodiment of the present disclosure.
FIG. 13 is a schematic view of a sheet in an overlapping step and an ultrasonic welding step.
FIG. 14 is a plan view of an ultrasonic horn used in the manufacturing method of the tube container according to the first embodiment of the present disclosure, as viewed from a direction facing an anvil.
FIG. 15 is a cross-sectional view of the ultrasonic horn of FIG. 14 as viewed from the arrow direction of line XV-XV.
FIG. 16 is a schematic view of a sheet in the overlapping step and the ultrasonic welding step when an ultrasonic horn having a flat region is used.
FIG. 17 is a schematic cross-sectional view of a mold and a tubular body when a spout portion is joined to the tubular body by insert molding in a spout portion joining step.
FIG. 18 is a flowchart illustrating a spout portion joining step by compression molding.
FIG. 19 is a schematic cross-sectional view of a mold, a molding material, and a tubular body when a spout portion is joined to the tubular body by compression molding.
FIG. 20 is a flowchart illustrating a spout portion joining step by ultrasonic welding.
FIG. 21 is a schematic cross-sectional view of an apparatus used when a spout portion is joined to a tubular body by ultrasonic welding.
FIG. 22 is a front view of a tube container according to a second embodiment of the present disclosure.
FIG. 23 is a front view of a state in which a cap portion is removed from the tube container according to the second embodiment of the present disclosure.
FIG. 24 is a side view of the state in which the cap portion is removed from the tube container according to the second embodiment of the present disclosure.
FIG. 25 is a cross-sectional view of a tubular body of FIG. 22 as viewed from the arrow direction of line XXV-XXV.
FIG. 26 is an exploded perspective view of the tubular body and a spout portion according to the second embodiment of the present disclosure.
FIG. 27 is a partial cross-sectional view of a sheet constituting the tubular body according to the second embodiment of the present disclosure.
FIG. 28 is a partial cross-sectional view of a sheet constituting the tubular body according to the second embodiment of the present disclosure in a case where the sheet further includes a third substrate layer.
FIG. 29 is a cross-sectional view of the tubular body of FIG. 22 as viewed from the arrow direction of line XXIX-XXIX.
FIG. 30 is an enlarged partial cross-sectional view of a region XXX of FIG. 29.
FIG. 31 is an enlarged partial cross-sectional view of a region XXXI of FIG. 29.
FIG. 32 is a partial cross-sectional view of a tubular body according to a first modification of the second embodiment of the present disclosure.
FIG. 33 is a partial cross-sectional view of the tube container of FIG. 22 as viewed from the arrow direction of line XXXIII-XXXIII.
FIG. 34 is an enlarged partial cross-sectional view of a joined part between the tubular body and the spout portion of the tube container according to the second embodiment of the present disclosure.
FIG. 35 is an enlarged partial cross-sectional view of a joined part between a tubular body and a spout portion of a tube container according to a second modification of the second embodiment of the present disclosure.
FIG. 36 is an enlarged partial cross-sectional view of a joined part between a tubular body and a spout portion of a tube container according to a third modification of the second embodiment of the present disclosure.
FIG. 37 is a perspective view of a cap portion of the tube container according to the second embodiment of the present disclosure.
FIG. 38 is a flowchart illustrating a manufacturing method of the tube container according to the second embodiment of the present disclosure.
FIG. 39 is a schematic view of a sheet in an overlapping step and an ultrasonic welding step of the second embodiment of the present disclosure.
FIG. 40 is a plan view of an ultrasonic horn used in the manufacturing method of the tube container according to the second embodiment of the present disclosure, as viewed from a direction facing an anvil.
FIG. 41 is a cross-sectional view of the ultrasonic horn of FIG. 40 as viewed from the arrow direction of line XLI-XLI.
FIG. 42 is a plan view of an ultrasonic horn in which convex portions of a concavo-convex shape are connected to each other in the second embodiment of the present disclosure.
FIG. 43 is a front view of a state in which a cap portion is removed from a tube container according to a third embodiment of the present disclosure.
FIG. 44 is a partial cross-sectional view of a tube container according to a fourth embodiment of the present disclosure.
FIG. 45 is a bottom view of a spout portion according to the fourth embodiment of the present disclosure as viewed from an extending portion side.
FIG. 46 is a perspective view of the spout portion according to the fourth embodiment of the present disclosure.
FIG. 47 is a front view of a tube container according to a fifth embodiment of the present disclosure.
FIG. 48 is a partial cross-sectional view of a tube container according to a sixth embodiment of the present disclosure.
FIG. 49 is a partial cross-sectional view of a tube container according to a seventh embodiment of the present disclosure.
FIG. 50 is a partial cross-sectional view of a sheet constituting a tubular body according to an eighth embodiment of the present disclosure.
FIG. 51 is a partial cross-sectional view of a tubular body in a tube container according to the eighth embodiment of the present disclosure.
FIG. 52 is a partial perspective view of a tube container according to a first modification example in which the shape of a spout portion is different from that of each embodiment.
FIG. 53 is a partial cross-sectional view of the tube container according to the first modification example in which the shape of the spout portion is different from that of each embodiment.
FIG. 54 is a partial perspective view of a tube container according to a second modification example in which the shape of a spout portion is different from that of each embodiment.
FIG. 55 is a partial front view of a tube container according to a third modification example in which the shape of a spout portion is different from that of each embodiment.
FIG. 56 is a partial front view of a tube container according to a modification example in which the shape of a cap portion is different from that of each embodiment.

### Description of Embodiments

Hereinafter, a tube container, a tube container with a content, and a manufacturing method of a tube container according to a first embodiment of the present disclosure will be described. Note that in the description of the embodiments below, identical or corresponding portions are denoted by the same reference signs in the drawings, and description thereof will not be repeated.

### Tube Container

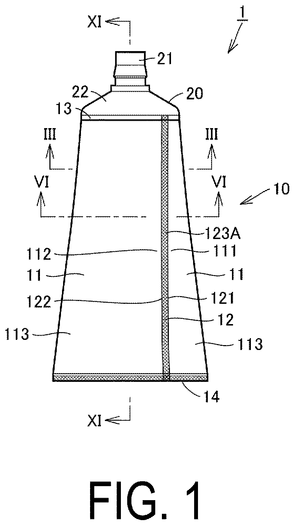

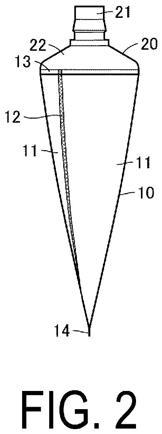

FIG. 1 is a front view of a tube container according to the first embodiment of the present disclosure. FIG. 2 is a side view of the tube container according to the first embodiment of the present disclosure. As illustrated in FIGS. 1 and 2, a tube container 1 includes a tubular body 10 and a spout portion 20.

### Tubular Body

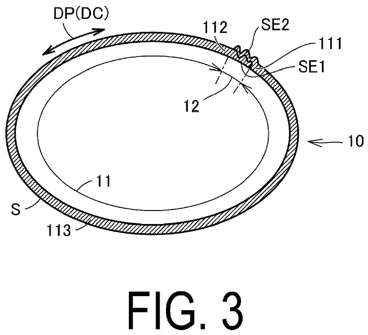

FIG. 3 is a cross-sectional view of the tubular body of FIG. 1 as viewed from the arrow direction of line III-III. As illustrated in FIGS. 1 to 3, the tubular body 10 includes a sheet base portion 11, a weld portion 12, one end portion 13, and another end portion 14.

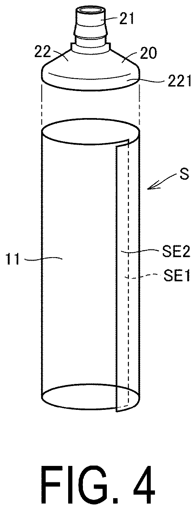

FIG. 4 is an exploded perspective view of the tube container according to the first embodiment of the present disclosure. As illustrated in FIGS. 3 and 4, the sheet base portion 11 is located between a first side end portion SE1 of a single sheet S in a plane direction DP and a second side end portion SE2 of the sheet S located opposite to the first side end portion SE1. The weld portion 12 is formed by curving or bending the sheet S such that the first side end portion SE1 and the second side end portion SE2 are overlapped in a thickness direction of the sheet S and then welding the first side end portion SE1 and the second side end portion SE2 to each other. The thickness direction is a direction orthogonal to the plane direction DP of the sheet S.

As described above, in the present embodiment, the tubular body 10 is formed of the single sheet S. First, the sheet S will be described in detail.

The sheet S in a state before the first side end portion SE1 and the second side end portion SE2 are welded to each other has a rectangular outer shape when viewed from the thickness direction of the sheet S. However, the shape of the sheet S when viewed from the thickness direction is not limited as long as the tubular body 10 can be formed by curving or bending the sheet S.

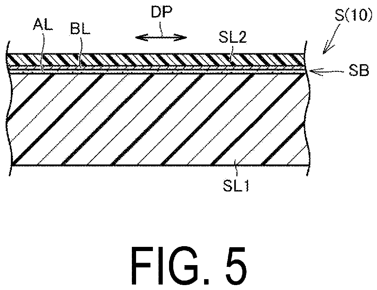

FIG. 5 is a partial cross-sectional view of the sheet constituting the tubular body according to the first embodiment of the present disclosure. As illustrated in FIG. 5, the sheet S includes at least a first substrate layer SL1. The first substrate layer SL1 is located on the center side of the tubular body 10 in the radial direction of the tubular body 10. That is, the first substrate layer SL1 is the innermost layer of the tubular body 10.

**In** the present embodiment, the first substrate layer SL1 contains a polyester resin as a main component. **In** the sheet S constituting the tubular body 10 of the tube container 1, when the first substrate layer SL1 contains a polyester resin as a main component, the recyclability of the tube container 1 is excellent as compared with the case where the first substrate layer SL1 contains a polyolefin resin as a main component. When the first substrate layer SL1 contains a polyester resin as a main component, the content accommodated in the tube container 1 can be relatively suppressed from adsorbing to the tube container 1. The polyester resin is not particularly limited as long as the polyester resin can be used for the tubular body 10 of the tube container 1. Examples of the polyester resin include polyethylene terephthalate, polyethylene naphthalate, glycol-modified polyethylene terephthalate (PETG, that is, polyethylene terephthalate in which a part of the glycol component is modified with cyclohexanedimethanol (CHDM), neopentyl glycol, or the like), and polylactic acid. The first substrate layer SL1 preferably contains only a polyester resin as a resin component.

From the viewpoint of the recyclability of the tubular body 10, the polyester resin in the first substrate layer SL1 is preferably homopolyethylene terephthalate, or polyethylene terephthalate such as copolymerized polyethylene terephthalate obtained by copolymerizing ethylene glycol, terephthalic acid, and a third component, or glycol-modified polyethylene terephthalate, and more preferably homopolyethylene terephthalate. Further, the polyester resin in the first substrate layer SL1 is preferably an amorphous polyester resin (polyethylene terephthalate, glycol-modified polyethylene terephthalate, or the like having an amorphous property) from the viewpoint of welding the sheet S at the weld portion 12 with a relatively low energy and from the viewpoint of efficiently transmitting ultrasonic vibration. When the polyester resin in the first substrate layer SL1 is glycol-modified polyethylene terephthalate, the amorphous property of the resin contained in the first substrate layer SL1 is further increased, and the weldability of the first substrate layer SL1 is improved. However, the first substrate layer SL1 is most preferably made of amorphous homopolyethylene terephthalate from the viewpoint of both the recyclability of the tubular body 10 and the adhesiveness of the sheet S at the weld portion 12. From the viewpoint of reducing environmental loads, the polyester resin in the first substrate layer SL1 is preferably made of a recycled material or a biomass material. However, in the case where the content is accommodated inside the tubular body 10, the polyester resin in the first substrate layer SL1 is preferably made of a virgin material.

The first substrate layer SL1 may be a single-layer film or may be a part of a layered film. The single-layer film or the layered film constituting the first substrate layer SL1 may be a non-stretched film, a uniaxially stretched film, or a biaxially stretched film. From the viewpoint of further strengthening the welding at the weld portion 12, the film constituting the first substrate layer SL1 is preferably a non-stretched or uniaxially stretched film, and more preferably a non-stretched or uniaxially stretched single-layer film. When the film constituting the first substrate layer SL1 is a non-stretched film or a uniaxially stretched film, the progress of crystallization of the resin in the vicinity of a surface of the first substrate layer SL1 on the inner side in the radial direction can be relatively suppressed as compared with the case where the film is a biaxially stretched film. Consequently, the welding of the first side end portion SE1 and the second side end portion SE2 at the weld portion 12 is facilitated, and the strength of the weld portion 12 can be improved.

**In** the present embodiment, the sheet S further includes a second substrate layer SL2. The second substrate layer SL2 is layered on the first substrate layer SL1. The second substrate layer SL2 is located on the outer side of the tubular body 10 in the radial direction when viewed from the first substrate layer SL1. The sheet S does not necessarily include the second substrate layer SL2.

**In** the present embodiment, the second substrate layer SL2 contains a resin component as a main component, and contains, for example, a polyester resin or a polyolefin resin as a main component. From the viewpoint of improving recyclability, the second substrate layer SL2 preferably contains a polyester resin as a main component, similarly to the first substrate layer SL1. Even in the case where the sheet S includes a plurality of layers, when the second substrate layer SL2 contains a polyester resin as a main component, a decrease in the recyclability of the tube container 1 can be suppressed. In the present embodiment, since the first substrate layer SL1 is formed of a non-stretched film or a uniaxially stretched film, high weldability of the sheet S at the weld portion 12 is ensured. Thus, the second substrate layer SL2 can be formed of a biaxially stretched film.

**In** the case where the second substrate layer SL2 contains a polyolefin resin as a main component, examples of the polyolefin resin include polyethylene, polypropylene, and cyclic olefin polymer. From the viewpoint of recyclability, the polyolefin resin is preferably polypropylene.

As the polyester resin of the second substrate layer SL2, the same polyester resin as that of the first substrate layer SL1 can be used. The second substrate layer SL2 preferably contains only a polyester resin as a resin component. From the viewpoint of the recyclability of the tubular body 10 and the tube container 1, the polyester resin of the second substrate layer SL2 is preferably homopolyethylene terephthalate, or polyethylene terephthalate such as copolymerized polyethylene terephthalates obtained by copolymerizing ethylene glycol, terephthalic acid, and a third component, or glycol-modified polyethylene terephthalate, and more preferably homopolyethylene terephthalate. From the viewpoint of reducing environmental loads, the polyester resin in the second substrate layer SL2 is preferably made of a recycled material or a biomass material. However, from the viewpoint of reducing the manufacturing cost of the tubular body 10, it is also preferable that the polyester resin in the second substrate layer SL2 is made of a virgin material.

The second substrate layer SL2 may be a single-layer film or may be a part of a layered film. The single-layer film or the layered film constituting the second substrate layer SL2 may be a non-stretched film, a uniaxially stretched film, or a biaxially stretched film. From the viewpoint of making the tubular body 10 thinner in the radial direction while maintaining the toughness of the tubular body 10, the film constituting the second substrate layer SL2 is preferably a biaxially stretched film. In the case where the sheet S includes a barrier layer BL to be described below, when the film constituting the second substrate layer SL2 is a biaxially stretched film, cracking or the like of the barrier layer BL can be suppressed. When the second substrate layer SL2 is a part of a layered film, the second substrate layer SL2 may be formed as one layer of the layered film together with the first substrate layer SL1, or may be directly layered on the first substrate layer SL1 without interposition of an adhesive layer or the like.

In the present embodiment, the sheet S further includes the barrier layer BL. The barrier layer BL is located on the first substrate layer SL1 side when viewed from the second substrate layer SL2, but may be located on the side opposite to the first substrate layer SL1 when viewed from the second substrate layer SL2. Note that the sheet S does not necessarily include the barrier layer BL.

The material constituting the barrier layer BL is not particularly limited. Examples of the barrier layer BL include a ceramic barrier layer such as a silica barrier layer or an alumina barrier layer, and a metal barrier layer such as an aluminum barrier layer. In the present embodiment, the barrier layer BL is layered on the second substrate layer SL2 (specifically, the film constituting the second substrate layer SL2) by vapor deposition.

In the present embodiment, the sheet S further includes an adhesive layer AL. The adhesive layer AL is located between the first substrate layer SL1 and the second substrate layer SL2. More specifically, the adhesive layer AL is located between the first substrate layer SL1 and the barrier layer BL and bonds them to each other. When the barrier layer BL is not located between the first substrate layer SL1 and the second substrate layer SL2, the adhesive layer AL bonds the first substrate layer SL1 and the second substrate layer SL2 to each other. The adhesive constituting the adhesive layer AL is not particularly limited, but an adhesive for dry lamination is preferably used. As the adhesive for dry lamination, a conventionally known adhesive can be used.

The sheet S may further include another layer. For example, the sheet S may further include a third substrate layer containing a resin component as a main component. When the sheet S further includes the third substrate layer, the third substrate layer may be located between the first substrate layer SL1 and the second substrate layer SL2. The third substrate layer may contain a polyolefin resin or a polyester resin as a main component. As the resin component of the third substrate layer, a polyolefin resin and a polyester resin similar to the polyolefin resin and the polyester resin that can be employed as the main component of the second substrate layer SL2 can be used. The polyester resin that can be employed as the main component of the third substrate layer is preferably polyethylene terephthalate or glycol-modified polyethylene terephthalate, and more preferably homopolyethylene terephthalate. From the viewpoint of reducing environmental loads, the polyester resin in the third substrate layer is preferably made of a recycled material or a biomass material. However, from the viewpoint of reducing the manufacturing cost of the tubular body 10, it is also preferable that the polyester resin in the third substrate layer is made of a virgin material.

The sheet S may further include a print layer for improving a design quality. For example, the print layer may be located on the side opposite to the first substrate layer SL1 when viewed from the second substrate layer SL2, may be located between the first substrate layer SL1 and the second substrate layer SL2, or may be located on the side opposite to the second substrate layer SL2 when viewed from the first substrate layer SL1. The print layer is made of ink, for example. Examples of the ink include an oil-based ink (including a solvent-based ink using an organic solvent as a solvent), a water-based ink (including a water-dispersed emulsion ink), and a UV-curable ink.

The sheet S may further include an anchor coat layer. The anchor coat layer is located between the print layer and another layer. The anchor coat layer increases adhesiveness between the print layer and another layer. The anchor coat layer can be formed using a conventionally known anchor coat agent or the like.

The total thickness of the sheet S is preferably 12 µm or more and 300 µm or less, for example, from the viewpoint of forming the sheet S into a tubular shape and from the viewpoint of handleability of the tube container 1. Accordingly, when the tubular body 10 is used as a part of a container, the tubular body 10 can be provided with a squeezability that allows the content accommodated in the container to be discharged by being pushed out. Consequently, since the sheet S includes at least the first substrate layer SL1 containing a polyester resin as a main component, when the total thickness of the sheet S is 12 µm or more and 300 µm or less, a folding line can be easily formed on the tubular body 10. Accordingly, the tubular body 10 can be provided with a good squeezability.

The thickness of the first substrate layer SL1 is preferably 10 µm or more and 300 µm or less, for example. The thickness of the second substrate layer SL2 is preferably 5 µm or more and 200 µm or less, and more preferably 5 µm or more and 100 µm or less, for example. In the case where the sheet S includes a plurality of layers layered on each other, the first substrate layer SL1 is preferably thicker than the second substrate layer SL2 and is more preferably the thickest layer in the sheet S from the viewpoint that the first substrate layer SL is the innermost layer of the tubular body 10 and is necessarily bonded to another layer at the time of welding. Accordingly, it is possible to reduce the influence of the resin component contained in the second substrate layer SL2 on the strength of the welding of the sheet S at the time of welding at the weld portion 12. More specifically, it is considered that since the second substrate layer SL2 is relatively thin, the second substrate layer SL2 is mixed with the first substrate layer SL1 at the time of welding, and thus the above-described influence of the resin component contained in the second substrate layer SL2 is reduced. From the viewpoint of further reducing the influence, the thickness of the first substrate layer SL1 is preferably 1.5 times or more, more preferably 3 times or more, and still more preferably 5 times or more the thickness of the second substrate layer SL2. In the present specification, the thicknesses of the sheet S and the layers constituting the sheet S refer to the thicknesses of the sheet S and the layers constituting the sheet S in a state before the tubular body 10 is formed, and correspond to the thicknesses of the layers constituting an extension portion 113 (to be described in detail below) in the radial direction of the tubular body 10 at the sheet base portion 11.

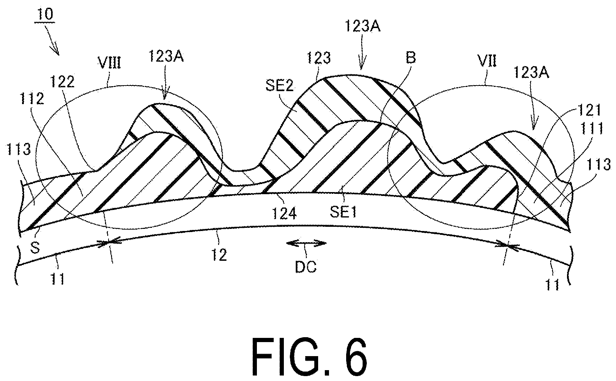

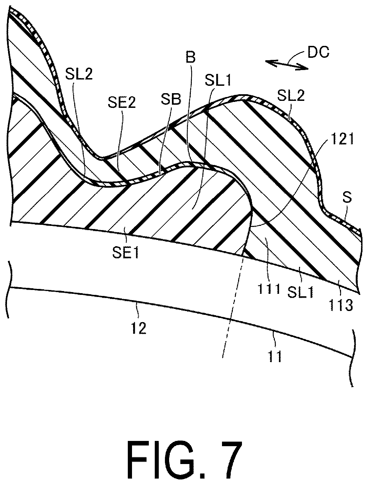

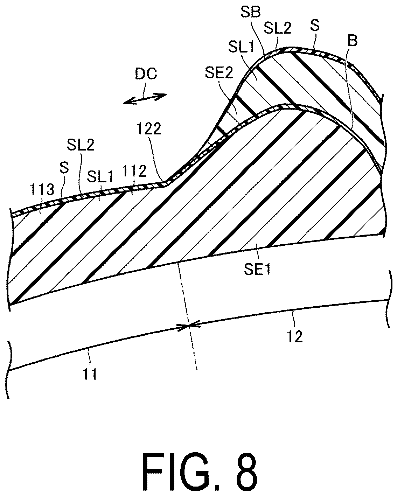

Next, the sheet base portion 11 and the weld portion 12 will be described in detail. FIG. 6 is a partial cross-sectional view of the tubular body of FIG. 1 as viewed from the arrow direction of line VI-VI. FIG. 7 is an enlarged partial cross-sectional view of a region VII of FIG. 6. FIG. 8 is an enlarged partial cross-sectional view of a region VIII of FIG. 6.

As illustrated in FIGS. 1, 3, and 6 to 8, the sheet base portion 11 includes a first base end portion 111, a second base end portion 112, and an extension portion 113.

The first base end portion 111 is a portion continuous with the second side end portion SE2 in the sheet S. The second base end portion 112 is a portion continuous with the first side end portion SE1 in the sheet S. Each of the first base end portion 111 and the second base end portion 112 extends along the weld portion 12 from the one end portion 13 to the another end portion 14 of the tubular body 10 (see FIG. 1).

The thicknesses of the first base end portion 111 and the second base end portion 112 in the radial direction are different from the thickness of the sheet S (the thickness of the extension portion 113 in the radial direction) in a state before the tubular body 10 is formed. In the cross-sectional view illustrated in FIG. 6, the thickness of the first base end portion 111 in the radial direction is thicker than the thickness of the sheet S (the thickness of the extension portion 113 in the radial direction) in a state before the tubular body 10 is formed, but may be thinner. The thickness of the second base end portion 112 in the radial direction is slightly thinner than the thickness of the sheet S (the thickness of the extension portion 113 in the radial direction) in a state before the tubular body 10 is formed, but may be thicker.

The extension portion 113 is a portion located between the first base end portion 111 and the second base end portion 112 in the plane direction DP of the sheet S (a circumferential direction DC of the tubular body 10). The extension portion 113 has a substantially C-shaped outer shape when viewed from the axial direction of the tubular body 10. The thickness of the extension portion 113 in the radial direction of the tubular body 10 is equal to the thickness of the sheet S before the tubular body 10 is formed.

The weld portion 12 having a strip shape is formed by curving or bending the sheet S such that the first side end portion SE1 and the second side end portion SE2 are overlapped in the thickness direction of the sheet S and then welding the first side end portion SE1 and the second side end portion SE2 to each other. In the present embodiment, the outer circumferential surface of the first side end portion SE1 and the inner circumferential surface of the second side end portion SE2 are welded to each other. The weld portion 12 extends along the axial direction of the tubular body 10. The weld portion 12 extends continuously from the one end portion 13 to the another end portion 14.

As described above, the weld portion 12 includes a first leading end edge 121, a second leading end edge 122, a weld portion outer circumferential surface 123, and a weld portion inner circumferential surface 124.

As illustrated in FIGS. 6 and 7, the first leading end edge 121 is a leading end edge of the first side end portion SE1 in the circumferential direction DC of the tubular body 10. The first leading end edge 121 is joined to the first base end portion 111. Accordingly, the weld length of the weld portion 12 when viewed from the axial direction of the tubular body 10 is relatively long. Consequently, when a peeling stress is applied to the weld portion 12, the stress is dispersed. Further, the first leading end edge 121 is located within the thickness of the first base end portion 111 when viewed from a direction along the circumferential direction DC. Accordingly, it is possible to reduce the chance of the first leading end edge 121 coming into contact with the outside. In particular, in the present embodiment, the outer circumferential surface of the first side end portion SE1 and the inner circumferential surface of the second side end portion SE2 are welded to each other. Thus, since the first leading end edge 121 is located within the thickness of the first base end portion 111 when viewed from a direction along the circumferential direction DC, when the tubular body 10 is formed as a part of a container, it is possible to reduce the chance of the content of the container coming into contact with the first leading end edge 121. At this time, at least a part of the first leading end edge 121 needs to be located within the thickness of the first base end portion 111 when viewed from a direction along the circumferential direction DC. The thickness of a portion of the first leading end edge 121 located within the thickness of the first base end portion 111 when viewed from a direction along the circumferential direction DC may be 1/10 or more, preferably 1/4 or more, and more preferably 1/3 or more of the thickness of the sheet S (the thickness of the extension portion 113 in the radial direction). As illustrated in FIGS. 6 and 7, it is most preferable that the entirety of the first leading end edge 121 is located within the thickness of the first base end portion 111 when viewed from a direction along the circumferential direction DC. A boundary portion SB between the first substrate layer SL1 and the second substrate layer SL2 at the first side end portion SE1 is in contact with the first base end portion 111 within the thickness of the first base end portion 111 when viewed from a direction along the circumferential direction DC. Accordingly, when the tubular body 10 is formed as a part of a container, the content of the container is less likely to come into contact with the boundary portion SB at the first side end portion SE1. Consequently, the occurrence of interlayer peeling between the first substrate layer SL1 and the second substrate layer SL2 due to contact of the content with the boundary portion SB can be suppressed. Note that the first leading end edge 121 extends from the one end portion 13 to the another end portion 14 in the axial direction of the tubular body 10 (see FIG. 1).

As illustrated in FIGS. 6 and 8, the second leading end edge 122 is a leading end edge of the second side end portion SE2 in the circumferential direction DC. The second leading end edge 122 is joined to the second base end portion 112. The second leading end edge 122 is located within the thickness of the second base end portion 112 when viewed from a direction along the circumferential direction DC. At this time, at least a part of the second leading end edge 122 needs to be located within the thickness of the second base end portion 112 when viewed from a direction along the circumferential direction DC. As illustrated in FIGS. 6 and 8, it is most preferable that the entirety of the second leading end edge 122 is located within the thickness of the second base end portion 112 when viewed from a direction along the circumferential direction DC. The boundary portion SB between the first substrate layer SL1 and the second substrate layer SL2 at the second side end portion SE2 is in contact with the second base end portion 112 within the thickness of the second base end portion 112 when viewed from a direction along the circumferential direction DC. Note that the second leading end edge 122 extends from the one end portion 13 to the another end portion 14 in the axial direction of the tubular body 10 (see FIG. 1).

At a boundary surface B between the first side end portion SE1 and the second side end portion SE2, the first side end portion SE1 and the second side end portion SE2 are airtightly welded to each other such that the inner circumferential side and the outer circumferential side of the tubular body 10 do not communicate with each other from the first leading end edge 121 to the second leading end edge 122.

As illustrated in FIG. 6, the weld portion outer circumferential surface 123 faces outward in the radial direction of the tubular body 10. The weld portion outer circumferential surface 123 is formed of the second side end portion SE2. The weld portion outer circumferential surface 123 is formed with irregularities. That is, the irregularities are formed on the second side end portion SE2 on the outer side in the radial direction.

At the weld portion 12, the irregularities are formed on the entirety of the weld portion outer circumferential surface 123 in the circumferential direction DC from the one end portion 13 to the another end portion 14 of the tubular body 10 (see FIG. 1). At the weld portion 12, the boundary surface B between the first side end portion SE1 and the second side end portion SE2 extends along the shape of the irregularities of the weld portion outer circumferential surface 123.

In the present embodiment, convex portions 123A of the irregularities formed on the weld portion outer circumferential surface 123 are formed in a lattice pattern when viewed from the radial direction of the tubular body 10. However, the shape of the convex portions 123A when viewed from the radial direction of the tubular body 10 is not particularly limited. Concave portions may be formed in a lattice pattern on the weld portion outer circumferential surface 123. When the convex portions 123A or the concave portions of the irregularities formed on the weld portion outer circumferential surface 123 are formed in a lattice pattern, the area of the boundary surface B can be expanded in both of a direction along the circumferential direction DC and a direction along the axial direction of the tubular body 10. The convex portions 123A or the concave portions may be formed in a pattern of a plurality of dots or may be formed in a pattern of a plurality of lines parallel to each other when viewed from the radial direction of the tubular body 10. In addition, the height of the convex portion 123A in the irregularities formed on the weld portion outer circumferential surface 123 is larger than the thickness of the sheet S (thickness of 113) before the tubular body 10 is formed. The height of the convex portion 123A in the irregularities formed on the weld portion outer circumferential surface 123 is preferably 1.1 times or more, more preferably 1.2 times or more, and still more preferably 1.5 times or more the thickness of the sheet S (thickness of the extension portion 113) before the tubular body 10 is formed. As the height of the convex portion 123A increases, the area of the boundary surface B extending along the shape of the irregularities increases. Thus, a peeling stress applied to the weld portion 12 is dispersed, and the strength of the weld portion 12 is improved.

When the sheet S includes the barrier layer and/or the print layer and the anchor coat layer as layers located on the side opposite to the first substrate layer SL1 when viewed from the second substrate layer SL2, these layers are mixed with the second substrate layer SL2 of the first side end portion SE1 or the first substrate layer SL1 of the second side end portion SE2 which is partially melted. In this may, at the weld portion 12, even when the sheet S does not include a sealant layer as the outermost layer in the radial direction, the first substrate layer SL1 and the second substrate layer SL2 can be welded to each other by ultrasonic welding. As a result, since the sealant layer is not required, the thickness of the tubular body 10 in the radial direction can be reduced.

On the other hand, the weld portion inner circumferential surface 124 faces inward in the radial direction of the tubular body 10. The weld portion inner circumferential surface 124 is smooth along the circumferential direction DC. Since the above-described weld portion outer circumferential surface 123 and the above-described weld portion inner circumferential surface 124 are provided, the weld portion 12 includes portions being relatively thick in the radial direction (portions where the convex portions 123A are located) and portions being relatively thin in the radial direction. At the weld portion 12, the thickness in the radial direction of a portion having the largest thickness in the radial direction is, for example, more than twice and three times or less the thickness of the extension portion 113 of the sheet base portion 11 in the radial direction (i.e., the thickness of the sheet S in a state before the first side end portion SE1 and the second side end portion SE2 are welded to each other). At the weld portion 12, the thickness in the radial direction of a portion having the smallest thickness in the radial direction is, for example, 0.5 times or more and 1.5 times or less the thickness of the extension portion 113 of the sheet base portion 11 in the radial direction (i.e., the thickness of the sheet S before the first side end portion SE1 and the second side end portion SE2 are welded to each other).

The tubular body 10 is joined to the spout portion 20 at the one end portion 13 in the axial direction of the tubular body 10. The one end portion 13 may be configured not to have flexibility and to be able to maintain its outer shape by being joined to the spout portion 20. The one end portion 13 has an annular outer shape when viewed from the axial direction of the tubular body 10. The one end portion 13 may have a polygonal annular outer shape when viewed from the axial direction of tubular body 10.

The one end portion 13 of the tubular body 10 in the axial direction includes one end portion of the sheet base portion 11 and one end portion of the weld portion 12 in the axial direction. Also at the one end portion 13, the first leading end edge 121 is preferably located within the thickness of the first base end portion 111 when viewed from a direction along the circumferential direction DC. Accordingly, the surface (the inner surface in the present embodiment) of the tubular body 10 is relatively smooth in the vicinity of the first leading end edge 121 at the one end portion 13, and thus the tubular body 10 and another component (specifically, the spout portion 20) can be easily joined to each other. Also at the one end portion 13, the second leading end edge 122 may be located within the thickness of the second base end portion 112 when viewed from a direction along the circumferential direction DC. In the present embodiment, also at the one end portion 13, irregularities are formed on the weld portion outer circumferential surface 123, and the weld portion inner circumferential surface 124 is smooth along the circumferential direction DC. Thus, the inner circumferential surface of the tubular body 10 and the spout portion 20 can be easily joined to each other at the one end portion 13.

In the tubular body 10, the another end portion 14 of the tubular body 10 in the axial direction is closed. In the present embodiment, at the another end portion 14, portions of the sheet S facing each other in a direction orthogonal to the axial direction of the tubular body 10 are welded to each other, whereby the tubular body 10 is closed at the another end portion 14. The another end portion 14 extends in a direction intersecting the axial direction of the tubular body 10. The method of closing the another end portion 14 of the tubular body 10 is not limited to the above-described method. The another end portion 14 of the tubular body 10 may be closed by joining a bottom portion or the like, which is formed of a member different from the sheet S, to the another end portion 14.

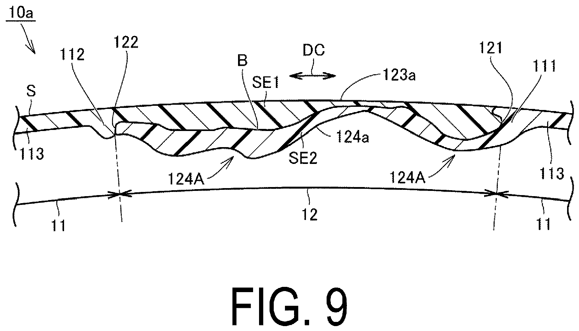

In the present embodiment, the irregularities are formed on the weld portion outer circumferential surface 123, but the irregularities may be formed on the weld portion inner circumferential surface 124. FIG. 9 is a partial cross-sectional view of a tubular body according to a first modification of the first embodiment of the present disclosure. FIG. 9 illustrates a tubular body 10a according to a first modification of the present embodiment in a cross-sectional view similar to FIG. 6. As illustrated in FIG. 9, in the present modification, a weld portion outer circumferential surface 123a is smooth along the circumferential direction DC. Irregularities are formed on a weld portion inner circumferential surface 124a. At the weld portion 12, the boundary surface B between the first side end portion SE1 and the second side end portion SE2 extends along the shape of the irregularities of the weld portion inner circumferential surface 124a. In the present modification, a convex portion 124A and a concave portion of the irregularities on the weld portion inner circumferential surface 124a may have the same outer shapes as the convex portion 123A and the concave portion of the irregularities in the present embodiment. In addition, the height of the convex portion 124A in the irregularities formed on the weld portion inner circumferential surface 124a is larger than the thickness of the sheet S (thickness of the extension portion 113) before the tubular body 10 is formed. The height of the convex portion 124A in the irregularities formed on the weld portion inner circumferential surface 124a is preferably 1.1 times or more, more preferably 1.2 times or more, and still more preferably 1.5 times or more the thickness of the sheet S (thickness of the extension portion 113) before the tubular body 10 is formed. As the height of the convex portion 124A increases, the area of the boundary surface B extending along the shape of the irregularities increases. Thus, a peeling stress applied to the weld portion 12 is dispersed, and the strength of the weld portion 12 is improved.

In the first modification of the present embodiment, the weld portion outer circumferential surface 123a is formed of the first side end portion SE1, and the weld portion inner circumferential surface 124a is formed of the second side end portion SE2. Also in the present modification, the first leading end edge 121 is located within the thickness of the first base end portion 111 when viewed from a direction along the circumferential direction DC.

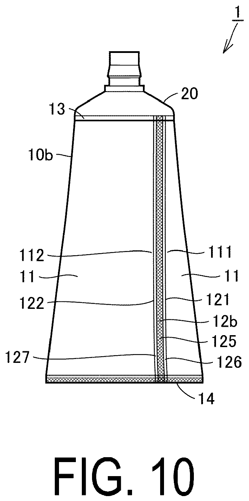

Further, in the present embodiment and the first modification of the present embodiment, the irregularities formed on the weld portion outer circumferential surface 123 or the weld portion inner circumferential surface 124 are not necessarily formed over the entirety of the weld portion 12. FIG. 10 is a view illustrating a tube container including a tubular body according to a second modification of the first embodiment of the present disclosure. As illustrated in FIG. 10, in a tubular body 10b according to the second modification of the present embodiment, a weld portion 12b may include an irregular region 125 in which irregularities formed on the weld portion outer circumferential surface 123 or the weld portion inner circumferential surface 124 spreads, and two smooth regions 126 and 127 in which both the weld portion outer circumferential surface 123 and the weld portion inner circumferential surface 124 are smoothly formed along the radial direction of the tubular body 10b.

The irregular region 125 extends from the one end portion 13 to the another end portion 14 along the axial direction of the tubular body 10b. One smooth region 126 is located on one side in the circumferential direction of the tubular body 10b when viewed from the irregular region 125. The other smooth region 127 is located on the other side in the circumferential direction of the tubular body 10b when viewed from the irregular region 125. The smooth regions 126 and 127 extend from the one end portion 13 to the another end portion 14 along the axial direction of tubular body 10b. The smooth regions 126 and 127 do not necessarily extend from the one end portion 13 to the another end portion 14. Only one of the smooth regions 126 and 127 may be formed. The inner circumferential surface and the outer circumferential surface of the tubular body 10 are preferably formed smoothly along the circumferential direction of the tubular body 10 from the smooth region 126 to the first base end portion 111. The inner circumferential surface and the outer circumferential surface of the tubular body 10 are formed smoothly along the circumferential direction of the tubular body 10 from the smooth region 127 to the second base end portion 112.

### Spout Portion

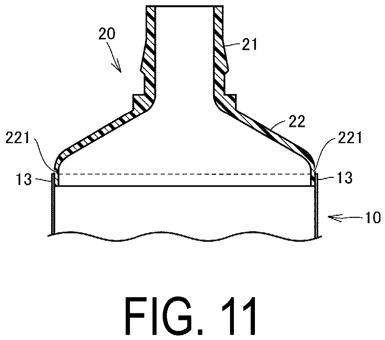

FIG. 11 is a partial cross-sectional view of the tube container of FIG. 1 as viewed from the arrow direction of line XI-XI. As illustrated in FIGS. 1, 4, and 11, the spout portion 20 is joined to the one end portion 13 of the tubular body 10 in the axial direction.

The spout portion 20 includes a spout port 21 and a shoulder portion 22. The spout port 21 has a tubular shape. The spout port 21 allows the inside and the outside of the tube container 1 to communicate with each other. An external thread extending spirally may be formed on the outer circumferential surface of the spout port 21. The tube container 1 may further include a cap that can be fitted to the spout port 21 and is configured to open and close the spout port 21.

The shoulder portion 22 connects the spout port 21 and the one end portion 13 of the tubular body 10. The shoulder portion 22 has a substantially frustoconical outer shape. The shoulder portion 22 may have a disc-like outer shape. The outer shape of the shoulder portion 22 when viewed from the axial direction of the tubular body 10 is circular, but may be elliptical or polygonal.

The shoulder portion 22 includes a joint end portion 221 that is joined to the tubular body 10 on the side opposite to the spout port 21 side. The joint end portion 221 has an annular shape when viewed from the axial direction of the tubular body 10 and extends along the axial direction. The joint end portion 221 is located on the inner side of the one end portion 13 of the tubular body 10 in the radial direction. That is, the joint end portion 221 is joined to the first substrate layer SL1 constituting the inner circumferential surface of the one end portion 13 of the tubular body 10. At this location, a part of a resin composition constituting the spout portion 20 and a part of a polyester resin contained as a main component in the first substrate layer SL1 are integrated with each other. Accordingly, the spout portion 20 and the tubular body 10 are firmly joined to each other. Note that the joint end portion 221 may be located on the outer side of the one end portion 13 of the tubular body 10 in the radial direction. The joint end portion 221 may be located both on the inner side and the outer side of the one end portion 13 of the tubular body 10 in the radial direction.

In the present embodiment, the joint end portion 221 of the spout portion 20 is directly joined to the tubular body 10, but the joint end portion 221 of the spout portion 20 may be joined to the tubular body 10 via another layer covering the spout portion 20. For example, the outer surface of the spout portion 20 may be covered with a gas barrier layer. In that case, the joint end portion 221 of the spout portion 20 may be bonded to the tubular body 10 via the gas barrier layer. The gas barrier layer may be provided in the middle of the spout portion 20.

The thickness of the shoulder portion 22 is not particularly limited, but is 0.5 mm or more and 2.0 mm or less, for example. The thickness of the joint end portion 221 in the radial direction is 0.5 mm or more and 2.0 mm or less, for example.

The spout portion 20 is made of a resin composition containing a polyester resin as a main component. As the polyester resin in the spout portion 20, the same polyester resin as that in the first substrate layer SL1 can be used. From the viewpoint of the recyclability of the tube container 1, the polyester resin of the spout portion 20 is preferably homopolyethylene terephthalate, or polyethylene terephthalate such as copolymerized polyethylene terephthalate obtained by copolymerizing ethylene glycol, terephthalic acid, and a third component, or glycol-modified polyethylene terephthalate, and more preferably homopolyethylene terephthalate. From the viewpoint of the formability of the spout portion 20, the polyester resin in the spout portion 20 is preferably an amorphous polyester resin (polyethylene terephthalate, glycol-modified polyethylene terephthalate, or the like having an amorphous property). When the polyester resin in the spout portion 20 is amorphous polyethylene terephthalate, the recyclability of the spout portion is improved. When the polyester resin in the spout portion 20 is glycol-modified polyethylene terephthalate, the amorphous property of the resin contained in the spout portion 20 is further improved, and thus the joint strength between the spout portion 20 and the tubular body 10 is further improved. Note that the polyester resin in the spout portion 20 may be a crystalline polyester resin (for example, crystalline polyethylene terephthalate). From the viewpoint of the recyclability of the tube container 1, the resin composition constituting the spout portion 20 preferably contains only a polyester resin as a resin component. The resin composition constituting the spout portion 20 may further contain a conventionally known additive. From the viewpoint of reducing environmental loads, the polyester resin in the resin composition is preferably made of a recycled material or a biomass-derived material. However, from the viewpoint of reducing the manufacturing cost of the spout portion 20, it is also preferable that the polyester resin in the resin composition is made of a virgin material.

The intrinsic viscosity (IV) value of a polyester resin material used for molding the spout portion 20 may be, for example, 0.60 or more and 0.90 or less when measured in accordance with JIS standard (K7390-1: 2015). When the IV value is 0.60 or more and 0.90 or less, molding of the spout portion 20 is facilitated.

### Tube Container with Content

The tube container 1 can accommodate a content in an internal space formed by the tubular body 10 and the spout portion 20. The content is not particularly limited, and may be a content accommodated in a conventionally known tube container. Examples of the content include a cosmetic, a food, a pharmaceutical product, and an oral composition. The content may contain at least one of an oil-soluble compound, an oily component, a volatile oily component, a flavoring agent, and a sweetener which can be adsorbed to a polyolefin resin, or a surfactant. In the tube container 1 according to the present embodiment, since the resin that comes into direct contact with the content is a polyester resin, the above-described components that can be adsorbed to a polyolefin resin can be relatively suppressed from being adsorbed to the tube container 1, and the tube container 1 can be relatively suppressed from swelling by absorbing these components. In addition, since the weld portion 12 is firmly joined, the leakage of the surfactant from the weld portion 12 to the outside can be prevented.

Examples of the oil-soluble compound include: tocopherol such as DL-α-tocopherol, D-δ-tocopherol, DL-α-tocopherol acetate, DL-α-tocopherol succinate, DL-α-tocopherol nicotinate, and DL-α-tocopherol linoleate; and 3-methyl-4-isopropylphenol (also referred to as isopropylmethylphenol). The oil-soluble compound is contained in the content, for example, when the content is a pharmaceutical product, a food, or a cosmetic. The above-mentioned tocopherol is so-called vitamin E and a derivative thereof, and is blended in the content with the expectation of anti-aging action, peripheral vasodilator action, blood circulation promoting action, and the like. The 3-methyl-4-isopropylphenol is blended in cosmetics such as acne cosmetics, pharmaceutical products, and the like as a bactericide and antiseptic.

Examples of the oily component include: natural oils and fats, hydrocarbon oils and fats, synthetic oily components, and silicones. The natural oils and fats include camellia oil, macadamia nut oil, olive oil, castor oil, safflower oil, soybean oil, tea seed oil, cocoa butter, coconut oil, hydrogenated coconut oil, palm oil, Japan wax, hydrogenated castor oil, beeswax, candelilla wax, carnauba wax, lanolin, liquid lanolin, jojoba wax, hard lanolin, polyoxyethylene lanolin alcohol ether, polyoxyethylene cholesterol ether. The hydrocarbon oils and fats includes liquid paraffin, ozokerite, squalene, paraffin, ceresin, vaseline, microcrystalline wax. The synthetic oily components include isopropyl myristate, octyldodecyl myristate, isopropyl palmitate, cholesteryl 12-hydroxystearate, ethylene glycol di-2-ethylhexylate, dipentaerythritol fatty acid ester, pentaerythritol tetra-2-ethylhexylate, glycerin tri-2-ethylhexylate, trimethylolpropane triisostearate, cetyl-2-ethylhexanoate, and castor oil fatty acid methyl ester. The silicones include: chain polysiloxanes such as dimethylpolysiloxane, methylphenylpolysiloxane, and methylhydrogenpolysiloxane; cyclic polysiloxanes such as decamethylpolysiloxane, dodecamethylpolysiloxane, and tetramethyltetrahydrogenpolysiloxane; a silicone resins capable of forming a three dimensional network structure; and silicone rubbers. For example, when the content is a cosmetic, these oily components are contained in the content.

Examples of the volatile oily component include silicone oil having a relatively low molecular weight, hydrocarbon oil having a relatively low molecular weight, and an ether oil. Examples of the silicone oil include linear silicones and cyclic silicones. Specific examples of the silicone oil include chain dimethylpolysiloxane and cyclic dimethylpolysiloxane. The chain dimethylpolysiloxane may be straight-chain or branched-chain dimethylpolysiloxane. Examples of the straight-chain dimethylpolysiloxane include dimethylpolysiloxane (1.5 cs) and dimethylpolysiloxane (2 cs). Examples of the branched-chain dimethylpolysiloxane include methyltrimethicone, tris (trimethylsilyl) methylsilane, and tetrakis (trimethylsilyl) silane. Examples of the cyclic dimethylpolysiloxane include octamethylcyclotetrasiloxane, decamethylcyclopentasiloxane, and dodecamethylcyclohexasiloxane. Examples of the hydrocarbon include isododecane, isotridecane, isohexadecane, light isoparaffin, and light liquid isoparaffin. Examples of the ether oil include ethyl perfluorobutyl ether. These volatile oily components are contained in the content mainly when the content is a cosmetic such as a sunscreen oil-in-water emulsion cosmetic.

Examples of the flavoring agent include natural flavoring agents or flavoring agents obtained by processing the natural flavoring agents (for example, cutting of head, cutting of tail, fractional distillation, liquid-liquid extraction, producing essence, producing powder flavoring agent), single flavoring agents, and mixed flavoring agents. The natural flavoring agents and the products thereof include peppermint oil, spearmint oil, anise oil, eucalyptus oil, wintergreen oil, cassia oil, clove oil, thyme oil, sage oil, lemon oil, orange oil, Japanese mint oil, cardamom oil, coriander oil, mandarin oil, lime oil, lavender oil, rosemary oil, laurel oil, chamomile oil, caraway oil, marjoram oil, bay oil, lemongrass oil, origanum oil, pine needle oil, neroli oil, rose oil, jasmine oil, grapefruit oil, sweetie oil, citron oil, cinnamon oil, Japanese basil oil, wintergreen oil, clove oil, piment oil, tea tree oil, tabana oil, star anise oil, fennel oil, diatom oil, basil oil, iris concrete, absolute peppermint, absolute rose, orange flower, and nutmeg. The single flavoring agents include camphor, menthol, carvone, benzyl succinate, anethole, cineol, methyl salicylate, cinnamic aldehyde, eugenol, methyl eugenol, 3-1-menthoxypropane-1, 2-diol, thymol, linalool, linalyl acetate, limonene, menthone, menthyl acetate, N-substituted-paramenthane-3-carboxamide, pinene, octylaldehyde, citral, pulegone, carvyl acetate, anisaldehyde, ethyl acetate, ethyl butyrate, allyl cyclohexanepropionate, methyl anthranilate, ethyl methylphenylglycidate, vanillin, undecalactone, hexanal, butanol, isoamyl alcohol, hexenol, dimethyl sulfide, cyclotene, furfural, trimethylpyrazine, ethyl lactate, ethyl thioacetate, ocimene, n-decyl alcohol, methyl acetate, citronellyl acetate, ethyl linalool, vanillin, and benzaldehyde. The mixed flavoring agents include strawberry flavor, apple flavor, banana flavor, pineapple flavor, grape flavor, mango flavor, butter flavor, milk flavor, fruit mix flavor, and tropical fruit flavor. For example, when the content is an oral composition, these flavoring agents are contained in the content. The flavoring agent may be contained in the content as a flavor component of foods such as wasabi, oriental mustard, and mustard.

Examples of the sweetener include saccharin, saccharin sodium, acesulfame potassium, stevia extract, stevioside, neohesperidyl dihydrochalcone, glycyrrhizin, perillartine, thaumatin, aspartyl phenylalanine methyl ester, methoxycinnamic aldehyde, Palatinose, Palatinit, erythritol, maltitol, xylitol, and lactitol. For example, when the content is an oral composition, these sweeteners are contained in the content.

Examples of the surfactant include an anionic surfactant, a cationic surfactant, an amphoteric surfactant, and a nonionic surfactant. Examples of the anionic surfactant include fatty acid soap, higher alkylsulfate ester salt, alkyl ether sulfate, N-acyl sarcosine acid, higher fatty acid amide sulfonate, phosphate, sulfosuccinate, alkylbenzene sulfonate, higher fatty acid ester sulfate, N-acyl glutamate, sulfated oil, POE-alkyl ether carboxylic acid, POE-alkyl allyl ether carboxylate, α-olefin sulfonate, higher fatty acid ester sulfonate, secondary alcohol sulfate, higher fatty acid alkylol amide sulfate, sodium lauroyl monoethanolamide succinate, N-palmitoyl aspartic acid ditriethanolamine, and sodium caseinate. Examples of the cationic surfactant include alkyltrimethylammonium salt, alkylpyridinium salt, distearyldimethylammonium chloride, dialkyldimethylammonium salt, poly (N, N'-dimethyl-3, 5-methylenepiperidinium) chloride, alkylquaternary ammonium salt, alkyldimethylbenzylammonium salt, alkylisoquinolinium salt, dialkylmorpholinium salt, POE-alkylamine, alkylamine salt, polyamine fatty acid derivative, amyl alcohol fatty acid derivative, benzalkonium chloride, and benzethonium chloride. Examples of the amphoteric surfactant include an imidazoline amphoteric surfactant and a betaine surfactant. Examples of the nonionic surfactant include polyoxyethylene hydrogenated castor oil, polyoxyethylene alkyl ether, sucrose fatty acid ester, alkyl glycoside, polyoxyethylene-polyoxypropylene block copolymer, polyoxyethylene ether of glycerin ester, fatty acid alkylolamide, and glycerin fatty acid ester.

### Manufacturing Method of Tube Container

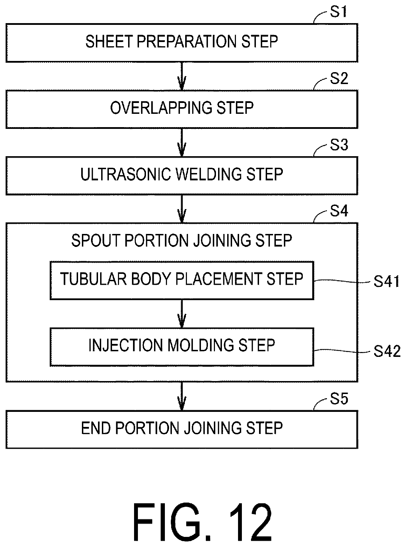

Next, a manufacturing method of the tube container 1 according to the first embodiment of the present disclosure will be described. FIG. 12 is a flowchart illustrating the manufacturing method of the tube container 1 according to the first embodiment of the present disclosure. As illustrated in FIG. 12, the manufacturing method of the tube container 1 according to the present embodiment includes a sheet preparation step S1, an overlapping step S2, an ultrasonic welding step S3, a spout portion joining step S4, and an end portion joining step S5.

In the sheet preparation step S1, the sheet S is prepared by layering a plurality of layers on each other. For example, the sheet S may be prepared by bonding the first substrate layer SL1 formed of a single-layer film and the second substrate layer SL2 formed of a single-layer film on which the barrier layer BL is vapor-deposited with the adhesive layer AL by dry lamination. A commercially available layered film including the first substrate layer SL1 and the second substrate layer SL2 may be prepared.

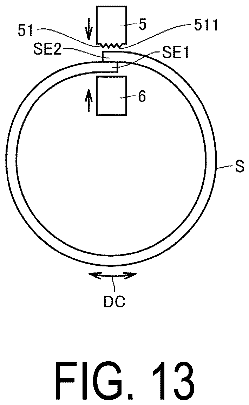

FIG. 13 is a schematic view of the sheet in the overlapping step and the ultrasonic welding step. As illustrated in FIG. 13, in the overlapping step S2, the prepared sheet S is formed into a tubular shape, and the first side end portion SE1 and the second side end portion SE2 are overlapped with each other.

In the ultrasonic welding step S3, the first side end portion SE1 and the second side end portion SE2 are sandwiched between an ultrasonic horn 5 positioned on one side out of the inner side and the outer side in the radial direction of the sheet S formed in the tubular shape and an anvil 6 positioned on the other side out of the inner side and the outer side in the radial direction, and then ultrasonically welded to each other. At this time, the first side end portion SE1 and the second side end portion SE2 are pressed in the thickness direction of the sheet S by the ultrasonic horn 5 and the anvil 6 while being oscillated by ultrasonic waves from the ultrasonic horn 5. In the present embodiment, the ultrasonic horn 5 is positioned on the outer side of the sheet S in the radial direction, and the anvil 6 is positioned on the inner side of the sheet S in the radial direction. Note that the ultrasonic horn 5 may be positioned on the inner side of the sheet S in the radial direction, and the anvil 6 may be positioned on the outer side of the sheet S in the radial direction.

At least one of the ultrasonic horn 5 and the anvil 6 includes a concavo-convex shape 51 to be pressed against the sheet S when sandwiching the sheet S. In the present embodiment, only the ultrasonic horn 5 includes the concavo-convex shape 51. Both of the ultrasonic horn 5 and the anvil 6 may include the concavo-convex shape, or only the anvil 6 may include the concavo-convex shape.

In the present embodiment, the ultrasonic horn 5 including the concavo-convex shape 51 is positioned on the outer side in the radial direction of the sheet S formed in the tubular shape, and the anvil 6 is positioned on the inner side in the radial direction of the sheet S formed in the tubular shape. Thus, irregularities are formed on the weld portion outer circumferential surface 123 along the concavo-convex shape 51 of the ultrasonic horn 5. The ultrasonic horn 5 including the concavo-convex shape 51 may be positioned on the inner side of the sheet S in the radial direction, and the anvil 6 may be positioned on the outer side of the sheet S in the radial direction. In that case, as in the first modification of the present embodiment, irregularities are formed on the weld portion inner circumferential surface 124 along the concavo-convex shape 51 (see FIG. 9). In the present embodiment, the second side end portion SE2 is locally pushed into the first side end portion SE1 at a plurality of locations by convex portions 511 of the concavo-convex shape 51. Accordingly, the resin components are partially mixed with each other during the welding. Consequently, the first side end portion SE1 and the second side end portion SE2 are firmly welded to each other.

The concavo-convex shape 51 is positioned so as to overlap with the entirety of the first side end portion SE1 and the second side end portion SE2 when viewed from the radial direction of the sheet S formed in the tubular shape. Accordingly, in the present embodiment, the irregularities are formed on the entirety of the weld portion 12 in the circumferential direction DC. In addition, when viewed from the radial direction of the sheet S formed in the tubular shape, the width of the concavo-convex shape 51 in the circumferential direction of the sheet S formed in the tubular shape is preferably larger than the width of the region where the first side end portion SE1 and the second side end portion SE2 overlap with each other in the sheet S. Accordingly, the first side end portion SE1 and the second side end portion SE2 can be more reliably welded to each other even when the length of the width of the region where the first side end portion SE1 and the second side end portion SE2 overlap with each other is changed from a designed length or even when the ultrasonic horn 5 and the anvil 6 are displaced.

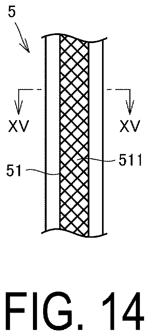

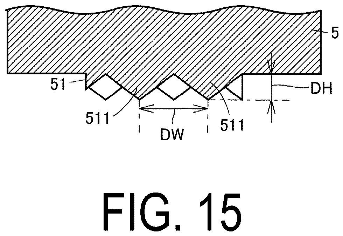

FIG. 14 is a plan view of the ultrasonic horn used in the manufacturing method of the tube container according to the first embodiment of the present disclosure, as viewed from a direction facing the anvil. FIG. 15 is a cross-sectional view of the ultrasonic horn of FIG. 14 as viewed from the arrow direction of line XV-XV.

As illustrated in FIGS. 14 and 15, a height DH of the convex portion 511 of the concavo-convex shape 51 is preferably larger than the thickness of the sheet S. The height DH is more preferably 1.1 times or more, still more preferably 1.2 times or more, and most preferably 1.5 times or more the thickness of the sheet S. By locally pressurizing the overlapped portions of the first side end portion SE1 and the second side end portion SE2 with the convex portions 511, frictional heat due to ultrasonic waves is easily applied to the overlapped surfaces of the first side end portion SE1 and the second side end portion SE2. When the height DH is larger than the thickness of the sheet S, both the first side end portion SE1 and the second side end portion SE2 which are melted easily flow between the convex portions 511. As a result, the boundary surface B between the first side end portion SE1 and the second side end portion SE2 is easily deformed along the concavo-convex shape 51. Accordingly, the area of the boundary surface B is increased, the peeling stress applied to the weld portion 12 is further dispersed, and the strength of the weld portion 12 is further improved. The height DH is preferably three times or less the thickness of the sheet S. When the height DH is three times or less, it is possible to prevent the convex portions 511 from penetrating the sheet S. The height DH is, for example, about 300 µm.

The shape of each of the plurality of convex portions 511 is not particularly limited, but is preferably a substantially quadrangular pyramid shape, for example. The convex portions 511 are positioned so as to be arranged along one direction and a direction orthogonal to the one direction when viewed from an opposing direction of the ultrasonic horn 5 and the anvil 6. Accordingly, the convex portions 123A of the weld portion 12 are formed in a lattice pattern.

A separation distance DW between the apexes of the plurality of convex portions 511 is preferably 0.5 mm or more and 2.0 mm or less. When the separation distance DW is 0.5 mm or more, the resin components of the sheet S are more likely to flow in. When the separation distance DW is 2.0 mm or less, it is possible to suppress the resin components having flowed between the convex portions 511 from leaking from the concavo-convex shape 51.

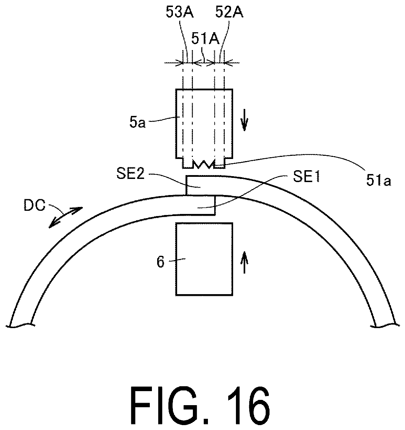

The concavo-convex shape 51 is not necessarily formed so as to overlap the entirety of the first side end portion SE1 and the second side end portion SE2. FIG. 16 is a schematic view of the sheet in the overlapping step and the ultrasonic welding step when an ultrasonic horn having a flat region is used. As illustrated in FIG. 16, an ultrasonic horn 5a may include a concavo-convex region 51A, a first flat region 52A, and a second flat region 53A as regions for sandwiching the sheet S together with the anvil 6.

A concavo-convex shape 51a is disposed in the concavo-convex region 51A. The first flat region 52A is adjacent to the concavo-convex region 51A. The second flat region 53A is located on a side opposite to the first flat region 52A when viewed from the concavo-convex region 51A. When the ultrasonic horn 5a described above is used, the leading end edge of the first side end portion SE1 in the circumferential direction DC is sandwiched between the anvil 6 and the first flat region 52A. The leading end edge of the second side end portion SE2 in the circumferential direction DC is sandwiched between the anvil 6 and the second flat region 53A. Accordingly, the weld portion 12b as in the second modification of the present embodiment is formed (see FIG. 10).

In the spout portion joining step S4, the spout portion 20 is joined to the tubular body 10. In the present embodiment, the spout portion 20 is joined to the tubular body 10 by so-called insert molding. As illustrated in FIG. 12, the spout portion joining step S4 includes a tubular body placement step S41 and an injection molding step S42.

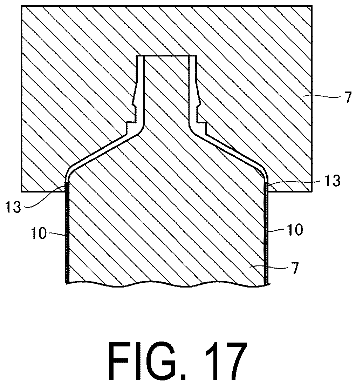

FIG. 17 is a schematic cross-sectional view of a mold and the tubular body when the spout portion is joined to the tubular body by insert molding in the spout portion joining step. As illustrated in FIG. 17, in the tubular body placement step S41, the tubular body 10 is placed inside a mold 7. Specifically, at least the one end portion 13 of the tubular body 10 is placed inside the mold 7. In the injection molding step S42, the spout portion 20 is injection-molded on the tubular body 10 by filling a melted resin composition onto the tubular body 10 (the one end portion 13 thereof) inside the mold 7 in a state in which the one end portion 13 of the tubular body 10 is placed inside the mold 7.

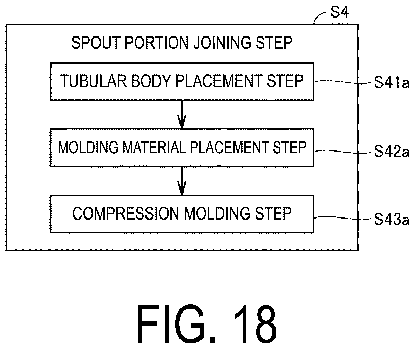

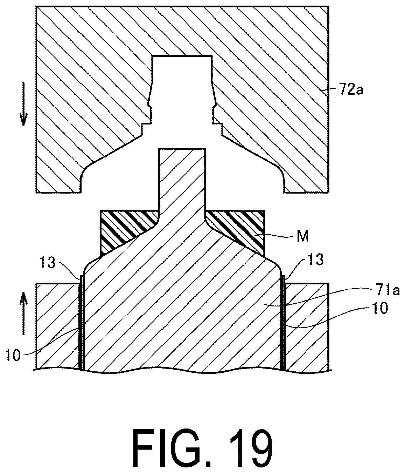

In the spout portion joining step S4, the spout portion 20 may be joined to the tubular body 10 by so-called compression molding instead of the above-described insert molding. FIG. 18 is a flowchart illustrating the spout portion joining step by compression molding. FIG. 19 is a schematic cross-sectional view of a mold, a molding material, and the tubular body when the spout portion is joined to the tubular body by compression molding.

As illustrated in FIGS. 18 and 19, the spout portion joining step S4 by compression molding includes a tubular body placement step S41a, a molding material placement step S42a, and a compression molding step S43a. In the tubular body placement step S41a, the tubular body 10 is placed on a first mold 71a. In the molding material placement step S42a, a molding material M made of a resin composition is placed on the first mold 71a. In the compression molding step S43a, the molding material M is compressed by the first mold 71a and a second mold 72a placed so as to face the first mold 71a via the molding material M, whereby the spout portion 20 is compression-molded on the tubular body 10 (the one end portion 13 thereof). According to this manufacturing method, the spout portion 20 can be joined to the tubular body 10 by a simple manner while the spout portion 20 is being molded.

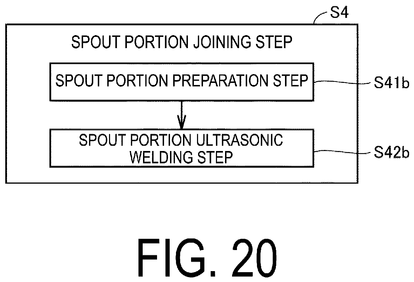

Further, in the spout portion joining step S4, the spout portion 20 may be joined to the tubular body by ultrasonic welding instead of the insert molding and the compression molding described above. FIG. 20 is a flowchart illustrating the spout portion joining step by ultrasonic welding. As illustrated in FIG. 20, the step S4 of joining the spout portion 20 includes a step S41b of preparing the molded spout portion 20 and a step S42b of welding the prepared spout portion 20 to the tubular body 10 by ultrasonic waves. According to this manufacturing method, the spout portion 20 can be joined to the tubular body 10 regardless of the molding method of the spout portion 20. In the present embodiment, even with the ultrasonic welding, the first substrate layer SL1 is formed of a non-stretched or uniaxially stretched film, and thus surface crystallization of the first substrate layer SL1 is suppressed. Thus, the tubular body 10 and the spout portion 20 can be joined relatively easily. As the molding method of the spout portion 20, a conventionally known method such as injection molding or compression molding can be employed.

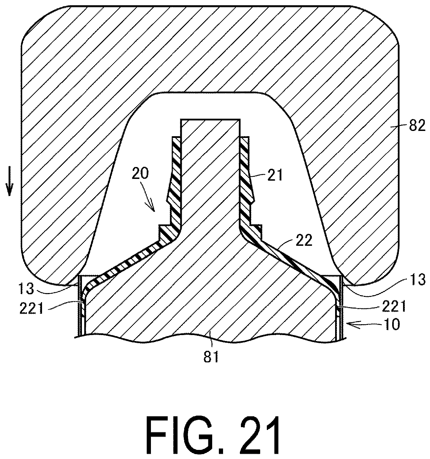

FIG. 21 is a schematic cross-sectional view of an apparatus used when the spout portion is joined to the tubular body by the ultrasonic welding. As illustrated in FIG. 21, in the spout portion ultrasonic welding step S42b, a spout portion anvil 81 is placed inside the tubular body 10, and the spout portion 20 is placed on an upper portion of the spout portion anvil 81. The upper portion of the spout portion anvil 81 has an outer shape corresponding to the inner surface of the spout port 21 and the inner surface of the shoulder portion 22. Thus, the spout portion 20 on the spout portion anvil 81 is easily positioned. The spout portion anvil 81 is placed such that at least the joint end portion 221 of the shoulder portion 22 is positioned on the inner side in the radial direction of the one end portion 13 of the tubular body 10. When viewed from the radial direction of the tubular body 10, the one end portion 13 protrudes above the joint end portion 221.

Then, a spout portion ultrasonic horn 82 is pressed against the one end portion 13 along the axial direction of the tubular body 10 from the one end portion 13 side of the tubular body 10. At this time, the one end portion 13 is bent inward in the radial direction of the tubular body 10. The one end portion 13, which has been bent, is positioned along a part of the shoulder portion 22 including the joint end portion 221. The shoulder portion 22 and the one end portion 13 positioned along a part of the shoulder portion 22 are sandwiched between the spout portion anvil 81 positioned as described above and the spout portion ultrasonic horn 82 having bent the one end portion 13. In this state, the shoulder portion 22 of the spout portion 20 and the one end portion 13 are ultrasonically welded to each other by the spout portion ultrasonic horn 82.

In the end portion joining step S5, a pair of portions of the sheet S facing each other in a direction orthogonal to the axial direction of the tubular body 10 are welded to each other at the another end portion 14. At this time, the pair of portions of the sheet S are preferably ultrasonically welded to each other. In this way, the tube container 1 according to the present embodiment is manufactured. When a tube container with a content is manufactured, for example, the content may be filled into the tubular body 10 from the another end portion 14 side after the spout portion joining step S4 and before the end portion joining step S5.

The tubular body 10 according to the first embodiment of the present disclosure and the tube container 1 including the tubular body 10 have excellent recyclability. Therefore, the tubular body 10 according to the first embodiment of the present disclosure and the tube container 1 including the tubular body 10 comply with the sustainable circular economy demanded by the SDGs (sustainable development goals) and can greatly contribute to the reduction of plastic waste.

Hereinafter, the tube container according to the first embodiment of the present disclosure will be described in more detail with reference to Examples, but the present invention is not limited thereto. First, a manufacturing method of the tube container according to each Example and each Reference Example will be described.

### Example 1

As a first substrate layer, a non-stretched film having a thickness of 100 µm and made of amorphous homopolyethylene terephthalate produced from a recycled material was prepared. As a second substrate layer with a vapor-deposited barrier layer, a transparent silica-deposited polyethylene terephthalate film having a thickness of 12 µm was prepared. These were bonded to each other by a dry lamination method to prepare a sheet constituting a tubular body. At this time, the first substrate layer and the second substrate layer were bonded to each other via an adhesive layer. The thickness of the sheet was 112 µm.

After the sheet was formed in a tubular shape, a first side end portion and a second side end portion of the sheet were bonded to each other by ultrasonic welding to produce the tubular body. Then, a spout portion was joined to the tubular body by insert molding. As the material of the spout portion, amorphous homopolyethylene terephthalate having an IV value of 0.72 was used. In this manner, the tube container according to Example 1 was obtained.

### Example 2

A tube container according to Example 2 was obtained by the same manufacturing method as in Example 1 except that an aluminum-deposited polyethylene terephthalate film having a thickness of 12 µm was prepared as the second substrate layer with a vapor-deposited barrier layer. The thickness of the sheet was 112 µm.

### Example 3

A tube container according to Example 3 was obtained by the same manufacturing method as in Example 1 except that a non-stretched film having a thickness of 150 µm and made of amorphous homopolyethylene terephthalate produced from a recycled material was prepared as the first substrate layer. The thickness of the sheet was 162 µm.

### Example 4

A tube container according to Example 4 was obtained by the same manufacturing method as in Example 3 except that the same film as in Example 2 was prepared as the second substrate layer with a vapor-deposited barrier layer. The thickness of the sheet was 162 µm.

### Example 5

A tube container according to Example 5 was obtained by the same manufacturing method as in Example 1 except that a non-stretched film having a thickness of 100 µm and made of amorphous homopolyethylene terephthalate produced from a virgin material was prepared as the first substrate layer. The thickness of the sheet was 112 µm.

### Example 6

A tube container according to Example 6 was obtained by the same manufacturing method as in Example 5 except that the same film as in Example 2 was prepared as the second substrate layer with a vapor-deposited barrier layer. The thickness of the sheet was 112 µm.

### Example 7

A tube container according to Example 7 was obtained by the same manufacturing method as in Example 1 except that a non-stretched layered film having a thickness of 200 µm was prepared as the sheet constituting the tubular body, the non-stretched layered film including glycol-modified polyethylene terephthalate layers made of a virgin material as the first substrate layer and the second substrate layer and including an amorphous homopolyethylene terephthalate layer made of a recycled material as a third substrate layer located between the first substrate layer and the second substrate layer.

### Example 8

A tube container according to Example 8 was obtained by the same manufacturing method as in Example 7 except that the spout portion was joined to the tubular body by compression molding and that glycol-modified polyethylene terephthalate having an IV value of 0.75 was used as the material of the spout portion.

### Example 9

A tube container according to Example 9 was obtained by the same manufacturing method as in Example 1 except that a uniaxially stretched film having a thickness of 100 µm and made of amorphous homopolyethylene terephthalate having a so-called VRV structure produced from a virgin material and a recycled material was prepared as the first substrate layer. The thickness of the sheet was 112 µm.

### Example 10

A tube container according to Example 10 was obtained by the same manufacturing method as in Example 9 except that the same film as in Example 2 was prepared as the second substrate layer with a vapor-deposited barrier layer. The thickness of the sheet was 112 µm.

### Reference Example 1

A tube container according to Reference Example 1 was produced by the same manufacturing method as in Example 1 except that a biaxially stretched film having a thickness of 100 µm and made of homopolyethylene terephthalate produced from a virgin material was used as the first substrate layer and that an anchor coat layer and a print layer were provided on the side opposite to the first substrate layer when viewed from the second substrate layer. The thickness of the sheet was 112 µm.

### Reference Example 2

A tube container according to Reference Example 2 was obtained by the same manufacturing method as in Reference Example 1 except that the joining method (molding method) of the spout portion and the material of the spout portion were the same as those in Example 8.

### Reference Example 3

A tube container according to Reference Example 3 was obtained by the same manufacturing method as in Reference Example 1 except that the same film as in Example 2 was prepared as the second substrate layer with a vapor-deposited barrier layer.

### Reference Example 4

A tube container according to Reference Example 4 was obtained by the same manufacturing method as in Reference Example 3 except that the joining method (molding method) of the spout portion and the material of the spout portion were the same as those in Example 8.

For each of the tube containers according to Examples 1 to 10 and Reference Examples 1 to 4, the evaluation results of the adhesiveness of the sheet at the weld portion of the tubular body and the joint strength between the tubular body and the spout portion are shown in Table 1. The evaluation results in Table 1 are shown as follows.

### Evaluation I: Adhesiveness of Sheet at Weld Portion

A: After welding, peeling of the first side end portion and the second side end portion from each other at the weld portion was not visually confirmed.
B: After welding, peeling of the first side end portion and the second side end portion from each other at the weld portion was visually confirmed.

### Evaluation II: Joint Strength between Tubular Body and Spout Portion

A: After joining, the position of the tubular body was fixed and the spout portion was pushed with a finger in the axial direction of tubular body, then the spout portion was not detached from the tubular body.
B: After joining, the position of the tubular body was fixed and the spout portion was pushed with a finger in the axial direction of tubular body, then the spout portion was detached from the tubular body.

**Table 1**

| | Sheet (tubular body) | | | | | | Spout portion | Evaluation I | Evaluation II |
|---|---|---|---|---|---|---|---|---|---|
| | First substrate layer | | | Second substrate layer | Barrier layer | Thickness [µm] | | | |
| | Film | Resin component | Material | Resin component | | | Resin component | | |
| Example 1 | Non-stretched | Amorphous homo-PET | Recycled material | PET | Transparent silica | 112 | Amorphous homo-PET | A | A |
| Example 2 | Non-stretched | Amorphous homo-PET | Recycled material | PET | Aluminum | 112 | Amorphous homo-PET | A | A |
| Example 3 | Non-stretched | Amorphous homo-PET | Recycled material | PET | Transparent silica | 162 | Amorphous homo-PET | A | A |
| Example 4 | Non-stretched | Amorphous homo-PET | Recycled material | PET | Aluminum | 162 | Amorphous homo-PET | A | A |
| Example 5 | Non-stretched | Amorphous homo-PET | Virgin material | PET | Transparent silica | 112 | Amorphous homo-PET | A | A |
| Example 6 | Non-stretched | Amorphous homo-PET | Virgin material | PET | Aluminum | 112 | Amorphous homo-PET | A | A |
| Example 7 | Non-stretched | Glycol-modified PET | Virgin material | Glycol-modified PET | - | 200 | Amorphous homo-PET | A | A |
| Example 8 | Non-stretched | Glycol-modified PET | Virgin material | Glycol-modified PET | - | 200 | Glycol-modified PET | A | A |
| Example 9 | Uniaxially stretched | Amorphous homo-PET | VRV | PET | Transparent silica | 112 | Amorphous homo-PET | A | A |
| Example 10 | Uniaxially stretched | Amorphous homo-PET | VRV | PET | Aluminum | 112 | Amorphous homo-PET | A | A |
| Reference Example 1 | Biaxially stretched | Homo PET | Virgin material | PET | Transparent silica | 112 | Amorphous homo-PET | B | B |
| Reference Example 2 | Biaxially stretched | Homo PET | Virgin material | PET | Transparent silica | 112 | Glycol-modified PET | B | B |
| Reference Example 3 | Biaxially stretched | Homo PET | Virgin material | PET | Aluminum | 112 | Amorphous homo-PET | B | B |
| Reference Example 4 | Biaxially stretched | Homo PET | Virgin material | PET | Aluminum | 112 | Glycol-modified PET | B | B |

In addition, the cross-section of the tubular body of the tube container according to each of Examples was observed. The cross section of the tubular body was exposed by cutting the tubular body in a direction orthogonal to the axial direction. Observation of the cross section was carried out with a scanning electron microscope (SEM). As a result, in the tube containers according to Examples 1 to 10, the first leading end edge was joined to the first base end portion and was located within the thickness of the first base end portion when viewed from a direction along the circumferential direction of the tubular body.

As shown in Table 1, in the tube containers according to Examples 1 to 10 in which the first substrate layer was formed of a non-stretched film or a uniaxially stretched film, peeling of the sheet at the weld portion was not observed, and detachment of the spout portion from the tubular body was not observed. On the other hand, in the tube containers according to Reference Examples 1 to 4 in which the first substrate layer was formed of a biaxially stretched film, peeling of the sheet at the weld portion was confirmed, and detachment of the spout portion from the tubular body was also confirmed. In Examples 1 to 10, since the first substrate layer was formed of a non-stretched film or a uniaxially stretched film, the orientation of the resin in a plane direction was relatively low in the vicinity of the surface of the first substrate layer on the inner side in the radial direction as compared with the case where the first substrate layer was formed of a biaxially stretched film. Thus, it is considered that the sheet was more firmly bonded at the weld portion, and the tubular body and the spout portion were firmly joined to each other. Accordingly, the detachment of the spout portion from the tubular body was suppressed, and the strength of the tube container could be further improved.

As described above, the tube container 1 according to the first embodiment of the present disclosure includes the tubular body 10 and the spout portion 20. The tubular body 10 includes the weld portion 12 having a strip shape formed by curving or bending the single sheet S such that the first side end portion SE1 of the sheet S in the plane direction DP and the second side end portion SE2 of the sheet S located opposite to the first side end portion SE are overlapped in the thickness direction of the sheet S and then welding the first side end portion SE1 and the second side end portion SE2 to each other. The spout portion 20 is joined to the one end portion 13 of the tubular body 10 in the axial direction. The tubular body 10 further includes the sheet base portion 11 located between the first side end portion SE1 and the second side end portion SE2 in the plane direction DP of the sheet S. The sheet base portion 11 includes the first base end portion 111. The first base end portion 111 is a portion continuous with the second side end portion SE2 in the sheet S. The weld portion 12 includes the first leading end edge 121. The first leading end edge 121 is a leading end edge of the first side end portion SE1 of the tubular body 10 in the circumferential direction DC and is joined to the first base end portion 111. The first leading end edge 121 is located within the thickness of the first base end portion 111 when viewed from a direction along the circumferential direction DC.

As in the above-described configuration, since the first leading end edge 121 is joined to the first base end portion 111, the weld length of the weld portion 12 when viewed from the axial direction of the tubular body 10 is relatively long. Thus, when a peeling stress is applied to the weld portion 12, the stress is more dispersed. In addition, since the first leading end edge 121 is located within the thickness of the first base end portion 111 when viewed from the direction along the circumferential direction DC of the tubular body 10, the chance of the first leading end edge 121 coming into contact with the outside can be reduced. Thus, it is possible to suppress the first side end portion SE1 and the second side end portion SE2 of the weld portion 12 from being peeled from each other with the first leading end edge 121 as a starting point. Consequently, the strength of the weld portion 12 can be improved.

The above-described configuration is particularly useful when the sheet S is a sheet containing a polyester resin such as polyethylene terephthalate. For example, in a conventionally known method, it is extremely difficult to weld side edges of both ends of a sheet containing a polyester resin such as polyethylene terephthalate by high-frequency welding. Thus, they are preferably welded by ultrasonic welding. However, even by ultrasonic welding, it is difficult to sufficiently firmly weld the end edges of such a sheet to each other in a conventionally known method. Therefore, a tube container including a tubular body formed by conventionally known ultrasonic welding using a sheet containing a polyester resin such as polyethylene phthalate does not have sufficient welding and joint strengths at the weld portion and may not be practical for containing a content. However, in the tube container 1 according to the first embodiment of the present disclosure, the first leading end edge 121 is located within the thickness of the first base end portion 111 when viewed from a direction along the circumferential direction DC of the tubular body 10. Therefore, even when the sheet S is a sheet containing a polyester resin such as polyethylene terephthalate, the strength of the weld portion 12 is improved as compared with the conventionally known tube container, and thus the tube container 1 can be practical for containing a content.

Further, in the present embodiment, the sheet S includes the first substrate layer SL1. The first substrate layer SL1 is located on the centermost side of the tubular body 10 in the radial direction. The first substrate layer SL1 contains a polyester resin as a main component. The first substrate layer SL1 is formed of a non-stretched film or a uniaxially stretched film.

As in the above-described configuration, since the first substrate layer SL1 containing a polyester resin as a main component is formed of a non-stretched film or a uniaxially stretched film, the orientation of the resin in a plane direction is relatively low in the vicinity of the surface of the first substrate layer SL1 on the inner side in the radial direction as compared with the case where the first substrate layer SL1 is formed of a biaxially stretched film. Thus, even when the first substrate layer SL1 contains, as a main component, a polyester resin that is difficult to be welded, the sheet S is more firmly bonded at the weld portion 12, and peeling of the sheet S is suppressed.

Further, in the present embodiment, the first substrate layer SL1 preferably contains amorphous polyethylene terephthalate as a main component.

According to the above-described configuration, the recyclability of the tube container 1 is improved. Note that in the present embodiment, the first substrate layer SL1 is formed of a non-stretched film or a uniaxially stretched film, and thus even when the first substrate layer SL1 is formed of amorphous polyethylene terephthalate, crystallization in the vicinity of the surface is prevented. Accordingly, the sheet S is relatively firmly joined at the weld portion 12, and peeling of the sheet S is suppressed.

Further, in the present embodiment, the first substrate layer SL1 preferably contains, as a main component, a polyester resin made of a recycled material or a biomass-derived material.

With the above-described configuration, environmental loads at the time of manufacturing the tubular body 10 are reduced. Consequently, the tube container 1 with low environmental loads can be provided.

Furthermore, in the present embodiment, the sheet S further includes the second substrate layer SL2 that is layered on the first substrate layer SL1 and contains a polyester resin as a main component.

With the above-described configuration, even when the sheet S includes a plurality of layers, decrease in the recyclability of the tube container 1 can be suppressed because the second substrate layer SL2 contains a polyester resin as a main component. In the present embodiment, since the first substrate layer SL1 is formed of a non-stretched film or a uniaxially stretched film, high weldability of the sheet S at the weld portion 12 is ensured. Thus, the second substrate layer SL2 can be formed of a biaxially stretched film.

Further, in the present embodiment, the tubular body 10 includes the another end portion 14 in the axial direction. Portions of the sheet S facing each other in a direction orthogonal to the axial direction are welded to each other at the another end portion 14, whereby the tubular body 10 is closed at the another end portion 14. The thickness of the sheet S is 12 µm or more and 300 µm or less.

With the above-described configuration, it is possible to provide a squeezability that allows the content accommodated in the tube container 1 to be discharged by being pushed out from the another end portion 14 side toward the spout portion 20 from the outside of the tubular body 10. Further, since the sheet S includes at least the first substrate layer SL1 containing a polyester resin as a main component, when the thickness of the sheet S is 12 µm or more and 300 µm or less, a folding line can be easily formed on the tubular body 10. Accordingly, the tube container 1 can be provided with a good squeezability.

Further, in the present embodiment, the spout portion 20 is made of a resin composition containing a polyester resin as a main component. The spout portion 20 includes the spout port 21 and the shoulder portion 22. The spout port 21 allows the inside and the outside of the tube container 1 to communicate with each other. The shoulder portion 22 connects the spout port 21 and the one end portion 13 of the tubular body 10. The shoulder portion 22 includes the joint end portion 221 that is joined to the first substrate layer SL1 constituting the inner circumferential surface of the one end portion 13 of the tubular body 10.

With the above-described configuration, a part of a resin composition constituting the spout portion 20 and a part of a polyester resin contained as a main component in the first substrate layer SL1 are integrated with each other. Accordingly, the spout portion 20 and the tubular body 10 are firmly joined to each other.

Further, in the present embodiment, the spout portion 20 is preferably made of a resin composition containing amorphous polyethylene terephthalate as a main component.

With the above-described configuration, the recyclability of the spout portion 20 is improved. Consequently, the recyclability of the tube container 1 is improved.

Further, in the present embodiment, the spout portion is preferably made of a resin composition containing a polyester resin produced from a recycled material or a biomass-derived material.

With the above-described configuration, environmental loads at the time of manufacturing the spout portion 20 are reduced. Consequently, the tube container 1 with low environmental loads can be provided.

The manufacturing method of a tube container according to the present embodiment includes: step S1 of preparing the sheet S; step S2 of forming the prepared sheet S into a tubular shape and overlapping the first side end portion SE1 and the second side end portion SE2 with each other; step S3 of ultrasonically welding the first side end portion SE1 and the second side end portion SE2 by sandwiching the first side end portion SE1 and the second side end portion SE2 between the ultrasonic horn 5 and the anvil 6, the ultrasonic horn 5 being positioned on one side out of the inner side and the outer side in the radial direction of the sheet S formed in the tubular shape, the anvil 6 being positioned on the other side out of the inner side and the outer side in the radial direction; and step S4 of joining the spout portion 20 to the tubular body 10. At least one of the ultrasonic horn 5 and the anvil 6 includes the concavo-convex shape 51 to be pressed against the sheet S when sandwiching the sheet S.

According to the above-described configuration, by locally pressurizing the overlapped portions of the first side end portion SE1 and the second side end portion SE2 with the convex portions of the concavo-convex shape 51, frictional heat due to ultrasonic waves is easily applied to the overlapped surfaces of the first side end portion SE1 and the second side end portion SE2. Then, a part of the melted resin in the first side end portion SE1 and the second side end portion SE2 of the sheet S flows into the concave portions of the concavo-convex shape 51, whereby the resin is suppressed from flowing in the circumferential direction DC. As a result, the second side end portion SE2 is largely deformed in the radial direction of the tubular body 10 in the vicinity of the first leading end edge 121. Accordingly, the first leading end edge 121 can be easily positioned within the thickness of the first base end portion 111 of the sheet base portion 11 when viewed from a direction along the circumferential direction DC.

Further, in the present embodiment, step S4 of joining the spout portion 20 includes step S41 of placing the tubular body 10 inside the mold 7 and step S42 of inj ection-molding the spout portion 20 on the tubular body 10 by filling a melted resin composition onto the tubular body 10 inside the mold 7 in a state in which the tubular body 10 is placed inside the mold 7.

According to the above-described configuration, the spout portion 20 can be firmly joined to the tubular body 10 while the spout portion 20 is being molded by so-called insert molding.

### Second Embodiment

Hereinafter, a tube container according to a second embodiment of the present disclosure will be described. In the description of the second embodiment below, identical or corresponding portions are denoted by the same reference signs in the drawings, and description thereof will not be repeated. Further, in the following description, description of configurations and effects similar to those in the first embodiment of the present disclosure may not be repeated.

### Tube Container

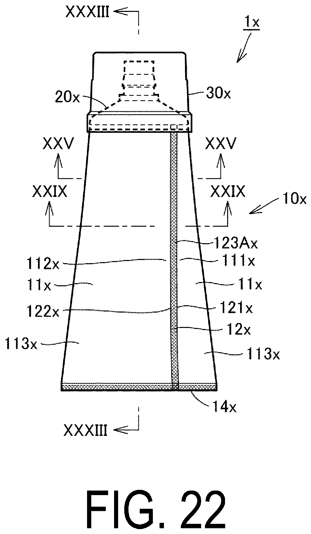

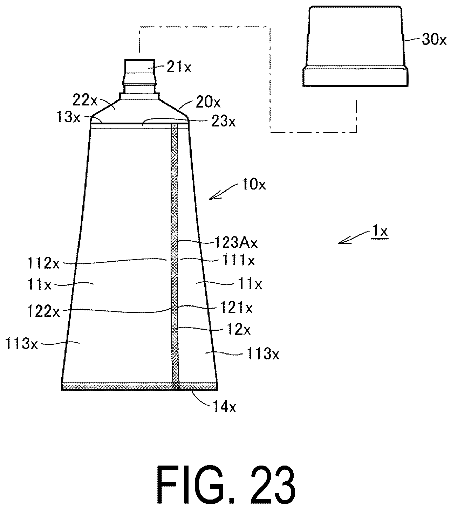

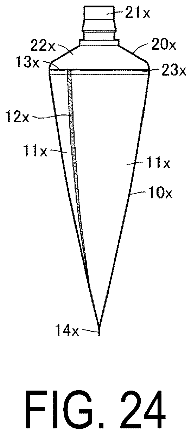

FIG. 22 is a front view of the tube container according to the second embodiment of the present disclosure. FIG. 23 is a front view of a state in which a cap portion is removed from the tube container according to the second embodiment of the present disclosure. FIG. 24 is a side view of the state in which the cap portion is removed from the tube container according to the second embodiment of the present disclosure. As illustrated in FIGS. 22 to 24, a tube container 1x includes a tubular body 10x, a spout portion 20x, and a cap portion 30x.

When the tube container 1x according to the present embodiment is dropped in a state in which a content is accommodated therein, the cap portion side faces downward, and the axial direction of the tubular body 10x is along the vertical direction, breakage of the tubular body 10x due to collision between the tube container 1x and a drop point is suppressed. Hereinafter, in the present specification, the dropping of the tube container 1x as described above may be simply referred to as "vertical dropping".

### Tubular Body

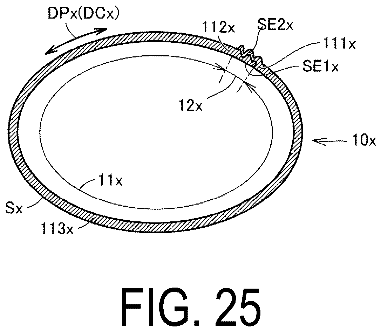

FIG. 25 is a cross-sectional view of the tubular body of FIG. 22 as viewed from the arrow direction of line XXV-XXV. As illustrated in FIGS. 22 to 25, the tubular body 10x includes a sheet base portion 11x, a weld portion 12x, one end portion 13x, and another end portion 14x.

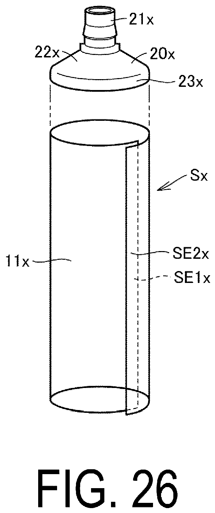

FIG. 26 is an exploded perspective view of the tubular body and the spout portion according to the second embodiment of the present disclosure. As illustrated in FIGS. 25 and 26, the sheet base portion 11x is located between a first side end portion SE1x of a sheet Sx in a plane direction DPx and a second side end portion SE2x of the single sheet S located opposite to the first side end portion SE1x. The weld portion 12x is formed by curving or bending the sheet Sx such that the first side end portion SE1x and the second side end portion SE2x are overlapped in a thickness direction of the sheet Sx and then welding the first side end portion SE1x and the second side end portion Se2x to each other. The thickness direction is a direction orthogonal to the plane direction DPx of the sheet Sx.

As described above, in the present embodiment, the tubular body 10x is formed of the single sheet Sx. First, the sheet Sx will be described in detail.

The sheet Sx in a state before the first side end portion SE1x and the second side end portion SE2x are welded to each other has a rectangular outer shape when viewed from the thickness direction of the sheet Sx. However, the shape of the sheet Sx when viewed from the thickness direction is not limited as long as the tubular body 10x can be formed by curving or bending the sheet Sx.

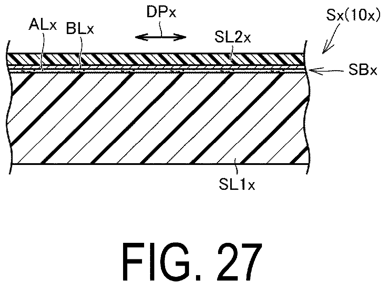

FIG. 27 is a partial cross-sectional view of the sheet constituting the tubular body according to the second embodiment of the present disclosure. As illustrated in FIG. 27, the sheet Sx includes at least a first substrate layer SL1x. The first substrate layer SL1x is located on the center side of the tubular body 10x in the radial direction of the tubular body 10x. That is, the first substrate layer SL1x is the innermost layer of the tubular body 10x.

The first substrate layer SL1x contains a polyester resin as a main component. The polyester resin is not particularly limited as long as the polyester resin can be used for the tubular body 10x of the tube container 1x. Examples of the polyester resin include polyethylene terephthalate, polyethylene naphthalate, glycol-modified polyethylene terephthalate (PETG, that is, polyethylene terephthalate in which a part of the glycol component is modified with cyclohexanedimethanol (CHDM), neopentyl glycol, or the like), and polylactic acid. The first substrate layer SL1x preferably contains only a polyester resin as a resin component.

From the viewpoint of the recyclability of the tubular body 10x, the polyester resin in the first substrate layer SL1x is preferably homopolyethylene terephthalate, or polyethylene terephthalate such as copolymerized polyethylene terephthalate obtained by copolymerizing ethylene glycol, terephthalic acid, and a third component, or glycol-modified polyethylene terephthalate, and more preferably homopolyethylene terephthalate. Further, the polyester resin in the first substrate layer SL1x is preferably an amorphous polyester resin (polyethylene terephthalate, glycol-modified polyethylene terephthalate, and the like having an amorphous property) from the viewpoint of welding the sheet Sx at the weld portion 12x with a relatively low energy and from the viewpoint of efficiently transmitting ultrasonic vibration. Thus, the first substrate layer SL1x is most preferably made of amorphous homopolyethylene terephthalate from the viewpoint of both the recyclability of the tubular body 10x and the adhesiveness of the sheet Sx at the weld portion 12x. From the viewpoint of reducing environmental loads, the polyester resin in the first substrate layer SL1x is preferably made of a recycled material or a biomass material. However, in the case where the content is accommodated inside the tubular body 10x, the polyester resin in the first substrate layer SL1x is preferably made of a virgin material.

The first substrate layer SL1x may be a single-layer film or may be a part of a layered film. From the viewpoint of further improving the adhesiveness of the sheet Sx in the tubular body 10x and the joint strength between the tubular body 10x and the spout portion 20x, the film (single-layer film or layered film) constituting the first substrate layer SL1x is made of a non-stretched or uniaxially stretched film, and is preferably made of a non-stretched film. Since the joint strength between the tubular body 10x and the spout portion 20x is improved as a whole, when the tube container 1x is vertically dropped, it is possible to prevent the tubular body 10x from being broken due to collision between a drop point and the tube container 1x, with a portion at which the joint strength between the tubular body 10x and the spout portion 20x is low as a starting point.

**In** the present embodiment, the sheet Sx further includes a second substrate layer SL2x. The second substrate layer SL2x is layered on the first substrate layer SL1x. The second substrate layer SL2x is located on the outer side of the tubular body 10x in the radial direction when viewed from the first substrate layer SL1x. The sheet Sx does not necessarily include the second substrate layer SL2x.

**In** the present embodiment, the second substrate layer SL2x contains a polyester resin as a main component. As the polyester resin of the second substrate layer SL2x, the same polyester resin as that of the first substrate layer SL1x can be used. The second substrate layer SL2x preferably contains only a polyester resin as a resin component. From the viewpoint of the recyclability of the tubular body 10x and the tube container 1x, the polyester resin of the second substrate layer SL2x is preferably homopolyethylene terephthalate, or polyethylene terephthalate such as copolymerized polyethylene terephthalates obtained by copolymerizing ethylene glycol, terephthalic acid, and a third component, or glycol-modified polyethylene terephthalate, and more preferably homopolyethylene terephthalate. From the viewpoint of reducing environmental loads, the polyester resin in the second substrate layer SL2x is preferably made of a recycled material or a biomass material. However, from the viewpoint of reducing the manufacturing cost of the tubular body 10x, it is also preferable that the polyester resin in the second substrate layer SL2x is made of a virgin material.

The second substrate layer SL2x may be a single-layer film or may be a part of a layered film. The film (a single-layer film or a layered film) constituting the second substrate layer SL2x is preferably made of a biaxially stretched film from the viewpoint of making the tubular body 10x thinner in the radial direction while maintaining the toughness of the tubular body 10x. In the case where the sheet Sx includes a barrier layer BLx to be described below, when the film constituting the second substrate layer SL2x is a biaxially stretched film, cracking or the like of the barrier layer BLx can be suppressed. When the second substrate layer SL2x is a part of a layered film, the second substrate layer SL2x may be formed as one layer of the layered film together with the first substrate layer SL1x, or may be directly layered on the first substrate layer SL1x without interposition of an adhesive layer or the like.

In the present embodiment, the sheet Sx further includes the barrier layer BLx. The barrier layer BLx is located on the first substrate layer SL1x side when viewed from the second substrate layer SL2x, but may be located on the side opposite to the first substrate layer SL1x when viewed from the second substrate layer SL2x. Note that the sheet Sx does not necessarily include the barrier layer BLx.

The material constituting the barrier layer BLx is not particularly limited. Examples of the barrier layer BLx include a ceramic barrier layer such as a silica barrier layer or an alumina barrier layer, and a metal barrier layer such as an aluminum barrier layer. In the present embodiment, the barrier layer BLx is layered on the second substrate layer SL2x (specifically, the film constituting the second substrate layer SL2x) by vapor deposition.

**In** the present embodiment, the sheet Sx further includes an adhesive layer ALx. The adhesive layer ALx is located between the first substrate layer SL1x and the second substrate layer SL2x. More specifically, the adhesive layer ALx is located between the first substrate layer SL1x and the barrier layer BLx and bonds them to each other. When the barrier layer BLx is not located between the first substrate layer SL1x and the second substrate layer SL2x, the adhesive layer ALx bonds the first substrate layer SL1x and the second substrate layer SL2x to each other. The adhesive constituting the adhesive layer ALx is not particularly limited, but an adhesive for dry lamination is preferably used. As the adhesive for dry lamination, a conventionally known adhesive can be used.

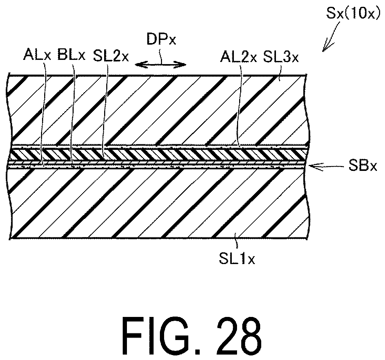

The sheet Sx may further include another layer. FIG. 28 is a partial cross-sectional view of a sheet constituting the tubular body according to the second embodiment of the present disclosure in the case where the sheet further includes a third substrate layer. As illustrated in FIG. 28, for example, the sheet Sx may further include a third substrate layer SL3x containing a resin component as a main component. When the sheet Sx further includes the third substrate layer SL3x, the third substrate layer SL3x may be layered on the side opposite to the first substrate layer SL1x when viewed from the second substrate layer SL2x as illustrated in FIG. 28, or may be located between the first substrate layer SL1x and the second substrate layer SL2x.

The third substrate layer SL3x may contain a polyolefin resin or a polyester resin as a main component. As the resin component of the third substrate layer SL3x, a polyolefin resin, or a polyester resin similar to the polyester resin that can be employed as the main component of the first substrate layer SL1x and the second substrate layer SL2x can be used. **In** the case where the third substrate layer SL3x is layered on the side opposite to the first substrate layer SL1x when viewed from the second substrate layer SL2x, the third substrate layer SL3x preferably contains, as a main component, a polyester resin of the same type as the polyester resin that is the main component of the first substrate layer SL1x from the viewpoint of adhesiveness of the sheet Sx at the weld portion 12x. Accordingly, the first substrate layer SL1x and the third substrate layer SL3x are welded to each other at the weld portion 12x, and the joint strength of the sheet Sx can be further improved at the weld portion 12x.

The polyester resin that can be employed as the main component of the third substrate layer SL3x is preferably polyethylene terephthalate or glycol-modified polyethylene terephthalate, and more preferably homopolyethylene terephthalate. From the viewpoint of reducing environmental loads, the polyester resin in the third substrate layer SL3x is preferably made of a recycled material or a biomass material. However, from the viewpoint of reducing the manufacturing cost of the tubular body 10x, it is also preferable that the polyester resin in the third substrate layer SL3x is made of a virgin material.

The third substrate layer SL3x may be a single-layer film or may be a part of a layered film. The film (a single-layer film or a layered film) constituting the third substrate layer SL3x may be made of any of a non-stretched film, a uniaxially stretched film, and a biaxially stretched film. From the viewpoint of the adhesiveness of the sheet Sx in the tubular body 10x (that is, ease of welding between the first substrate layer SL1x and the third substrate layer SL3x at the weld portion 12x), the third substrate layer SL3x is preferably made of a non-stretched film or a uniaxially stretched film, and more preferably made of a non-stretched film.

When the sheet Sx includes the third substrate layer SL3x, the sheet Sx further includes a second adhesive layer AL2x. In the example illustrated in FIG. 28, the second adhesive layer AL2x is located between the second substrate layer SL2x and the third substrate layer SL3x to bond them to each other. The adhesive constituting the second adhesive layer AL2x is not particularly limited, but an adhesive for dry lamination is preferably used. As the adhesive for dry lamination, a conventionally known adhesive can be used.

The sheet Sx may further include a print layer for improving design quality. For example, the print layer may be located on the side opposite to the first substrate layer SL1x when viewed from the second substrate layer SL2x, may be located between the first substrate layer SL1x and the second substrate layer SL2x, or may be located on the side opposite to the second substrate layer SL2x when viewed from the first substrate layer SL1x. When the sheet Sx includes the third substrate layer SL3x, the print layer may be located on the side opposite to the second substrate layer SL2x when viewed from the third substrate layer SL3x, or may be located between the third substrate layer SL3x and the second substrate layer SL2x. The print layer is made of ink, for example. Examples of the ink include an oil-based ink (including a solvent-based ink using an organic solvent as a solvent), a water-based ink (including a water-dispersed emulsion ink), and a UV-curable ink.

The sheet Sx may further include an anchor coat layer. The anchor coat layer is located between the print layer and another layer. The anchor coat layer increases adhesiveness between the print layer and another layer. The anchor coat layer can be formed using a conventionally known anchor coat agent or the like.

The total thickness of the sheet Sx is preferably 12 µm or more and 300 µm or less, for example, from the viewpoint of forming the sheet Sx into a tubular shape and from the viewpoint of handleability of the tube container 1x. Accordingly, when the tubular body 10x is used as a part of a container, the tubular body 10x can be provided with a squeezability that allows the content accommodated in the container to be discharged by being pushed out. Consequently, since the sheet Sx includes at least the first substrate layer SL1x containing a polyester resin as a main component, when the total thickness of the sheet Sx is 12 µm or more and 300 µm or less, a folding line can be easily formed on the tubular body 10x. Accordingly, the tubular body 10x can be provided with a good squeezability.

The thickness of the first substrate layer SL1x is preferably 10 µm or more and 300 µm or less, for example. The thickness of the second substrate layer SL2x is preferably 5 µm or more and 200 µm or less, and more preferably 5 µm or more and 100 µm or less, for example. In the case where the sheet Sx includes a plurality of layers layered on each other, the first substrate layer SL1x is preferably thicker than the second substrate layer SL2x from the viewpoint that the first substrate layer SL1x is the innermost layer of the tubular body 10x and is necessarily bonded to another layer at the time of welding. Accordingly, it is possible to reduce the influence of the resin component contained in the second substrate layer SL2x on the strength of the welding of the sheet Sx at the time of welding at the weld portion 12x. More specifically, it is considered that since the second substrate layer SL2x is relatively thin, the second substrate layer SL2x is mixed with the first substrate layer SL1x at the time of welding, and thus the above-described influence of the resin component contained in the second substrate layer SL2x is reduced. From the viewpoint of further reducing the influence, the thickness of the first substrate layer SL1x is preferably 1.5 times or more, more preferably 3 times or more, and still more preferably 5 times or more the thickness of the second substrate layer SL2x. The first substrate layer SL1x may be the thickest layer in the sheet Sx. In the present specification, the thicknesses of the sheet Sx and the layers constituting the sheet Sx refer to the thicknesses of the sheet Sx and the layers constituting the sheet Sx before the tubular body 10x is formed, and correspond to the thicknesses of the layers constituting an extension portion 113x (to be described in detail below) in the radial direction of the tubular body 10x at the sheet base portion 11x.

When the sheet Sx further includes the third substrate layer SL3x, the thickness of the third substrate layer SL3x is preferably 10 µm or more and 300 µm or less, for example. The thickness of the third substrate layer SL3x may be the same as the thickness of the first substrate layer SL1x. Accordingly, the third substrate layer SL3x can be made of the same film as the film constituting the first substrate layer SL1x. The thickness of the third substrate layer SL3x may be different from the thickness of the first substrate layer SL1x. It is also preferable that the third substrate layer SL3x is thicker than the first substrate layer SL1x. When the third substrate layer SL3x is thicker than the first substrate layer SL1x, the sheet Sx can be easily curled in a concave shape on the first substrate layer SL1x side, and the sheet Sx is more easily formed into a tubular shape. The third substrate layer SL3x may be the thickest layer in the sheet Sx. The third substrate layer SL3x is preferably thicker than the second substrate layer SL2x.

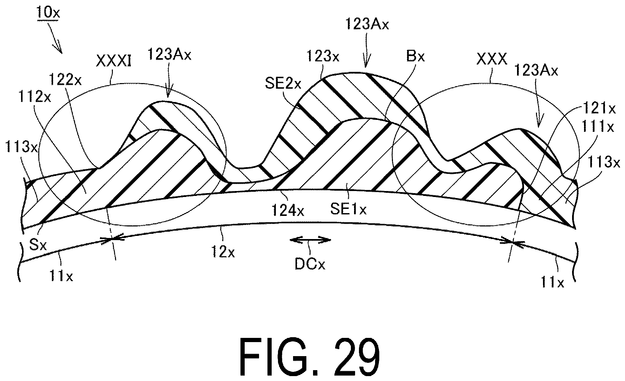

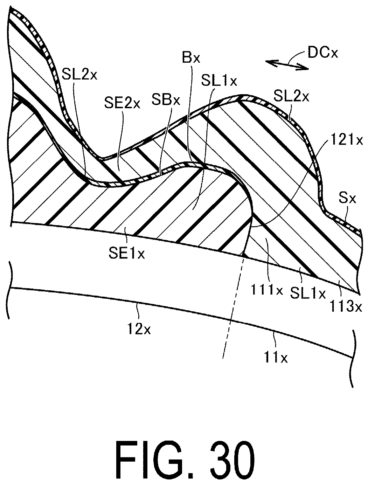

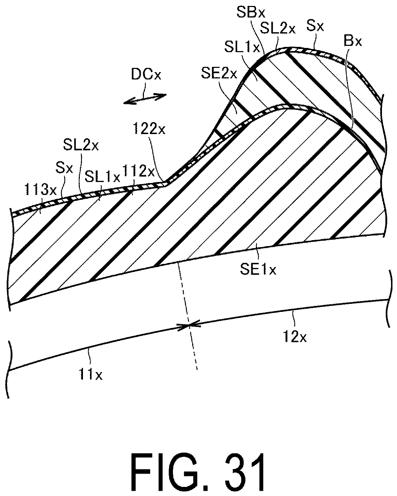

Next, the sheet base portion 11x and the weld portion 12x will be described in detail. FIG. 29 is a cross-sectional view of the tubular body of FIG. 22 as viewed from the arrow direction of line XXIX-XXIX. FIG. 30 is an enlarged partial cross-sectional view of a region XXX of FIG. 29. FIG. 31 is an enlarged partial cross-sectional view of a region XXXI of FIG. 29.

As illustrated in FIGS. 22, 25, and 29 to 31, the sheet base portion 11x includes a first base end portion 111x, a second base end portion 112x, and the extension portion 113x.

The first base end portion 111x is a portion continuous with the second side end portion SE2x in the sheet Sx. The second base end portion 112x is a portion continuous with the first side end portion SE1x in the sheet Sx. Each of the first base end portion 111x and the second base end portion 112x extends along the weld portion 12x from the one end portion 13x to the another end portion 14x of the tubular body 10x (see FIGS. 22 and 23).

The thicknesses of the first base end portion 111x and the second base end portion 112x in the radial direction are different from the thickness of the sheet Sx (the thickness of the extension portion 113x in the radial direction) in a state before the tubular body 10x is formed. In the cross-sectional view illustrated in FIG. 29, the thickness of the first base end portion 111x in the radial direction is thicker than the thickness of the sheet Sx (the thickness of the extension portion 113x in the radial direction) in a state before the tubular body 10x is formed, but may be thinner. The thickness of the second base end portion 112x in the radial direction is slightly thinner than the thickness of the sheet Sx (the thickness of the extension portion 113x in the radial direction) in a state before the tubular body 10x is formed, but may be thicker.

The extension portion 113x is a portion located between the first base end portion 111x and the second base end portion 112x in the plane direction DPx of the sheet Sx (a circumferential direction DCx of the tubular body 10x). The extension portion 113x has a substantially C-shaped outer shape when viewed from the axial direction of the tubular body 10x. The thickness of the extension portion 113x in the radial direction of the tubular body 10x is equal to the thickness of the sheet Sx before the tubular body 10x is formed.

The weld portion 12x having a strip shape is formed by curving or bending the sheet Sx such that the first side end portion SE1x and the second side end portion SE2x are overlapped in the thickness direction of the sheet Sx and then welding the first side end portion SE1x and the second side end portion Se2x to each other. In the present embodiment, the outer circumferential surface of the first side end portion SE1x and the inner circumferential surface of the second side end portion SE2x are welded to each other. The weld portion 12x extends along the axial direction of the tubular body 10x. The weld portion 12x extends continuously from the one end portion 13x to the another end portion 14x.

As described above, the weld portion 12x includes a first leading end edge 121x, a second leading end edge 122x, a weld portion outer circumferential surface 123x, and a weld portion inner circumferential surface 124x.

As illustrated in FIGS. 29 and 30, the first leading end edge 121x is a leading end edge of the first side end portion SE1x in the circumferential direction DCx of the tubular body 10x. The first leading end edge 121x is joined to the first base end portion 111x. Accordingly, the weld length of the weld portion 12x when viewed from the axial direction of the tubular body 10x is relatively long. Consequently, when a peeling stress is applied to the weld portion 12x, the stress is dispersed. Further, the first leading end edge 121x is located within the thickness of the first base end portion 111x when viewed from a direction along the circumferential direction DCx. Accordingly, it is possible to reduce the chance of the first leading end edge 121x coming into contact with the outside. In particular, in the present embodiment, the outer circumferential surface of the first side end portion SE1x and the inner circumferential surface of the second side end portion SE2x are welded to each other. Thus, since the first leading end edge 121x is located within the thickness of the first base end portion 111x when viewed from a direction along the circumferential direction DCx, when the tubular body 10x is formed as a part of a container, it is possible to reduce the chance of the content of the container coming into contact with the first leading end edge 121x. At this time, at least a part of the first leading end edge 121x needs to be located within the thickness of the first base end portion 111x when viewed from a direction along the circumferential direction DCx. The thickness of a portion of the first leading end edge 121x located within the thickness of the first base end portion 111x when viewed from the direction along the circumferential direction DCx may be 1/10 or more, preferably 1/4 or more, and more preferably 1/3 or more of the thickness of the sheet Sx (the thickness of the extension portion 113x in the radial direction). As illustrated in FIGS. 29 and 30, it is most preferable that the entirety of the first leading end edge 121x is located within the thickness of the first base end portion 111x when viewed from a direction along the circumferential direction DCx. A boundary portion SB between the first substrate layer SL1x and the second substrate layer SL2x at the first side end portion SE1x is in contact with the first base end portion 111x within the thickness of the first base end portion 111x when viewed from a direction along the circumferential direction DCx. Accordingly, when the tubular body 10x is formed as a part of a container, the content of the container is less likely to come into contact with the boundary portion SB at the first side end portion SE1x. Consequently, the occurrence of interlayer peeling between the first substrate layer SL1x and the second substrate layer SL2x due to contact of the content with the boundary portion SB can be suppressed. Note that the first leading end edge 121x extends from the one end portion 13x to the another end portion 14x in the axial direction of the tubular body 10x (see FIGS. 22 and 23).

As illustrated in FIGS. 29 and 31, the second leading end edge 122x is a leading end edge of the second side end portion SE2x in the circumferential direction DCx. The second leading end edge 122x is joined to the second base end portion 112x. The second leading end edge 122x is located within the thickness of the second base end portion 112x when viewed from a direction along the circumferential direction DCx. At this time, at least a part of the second leading end edge 122x needs to be located within the thickness of the second base end portion 112x when viewed from a direction along the circumferential direction DCx. As illustrated in FIGS. 29 and 31, it is most preferable that the entirety of the second leading end edge 122x is located within the thickness of the second base end portion 112x when viewed from a direction along the circumferential direction DCx. The boundary portion SB between the first substrate layer SL1x and the second substrate layer SL2x at the second side end portion SE2x is in contact with the second base end portion 112x within the thickness of the second base end portion 112x when viewed from a direction along the circumferential direction DCx. Note that the second leading end edge 122x extends from the one end portion 13x to the another end portion 14x in the axial direction of the tubular body 10x (see FIGS. 22 and 23).

At a boundary surface Bx between the first side end portion SE1x and the second side end portion SE2x, the first side end portion SE1x and the second side end portion SE2x are airtightly welded to each other such that the inner circumferential side and the outer circumferential side of the tubular body 10x do not communicate with each other from the first leading end edge 121x to the second leading end edge 122x.

As illustrated in FIG. 29, the weld portion outer circumferential surface 123x faces outward in the radial direction of the tubular body 10x. The weld portion outer circumferential surface 123x is formed of the second side end portion SE2x. The weld portion outer circumferential surface 123x is formed with irregularities. That is, the irregularities are formed on the second side end portion SE2x on the outer side in the radial direction.

At the weld portion 12x, the irregularities are formed on the entirety of the weld portion outer circumferential surface 123x in the circumferential direction DCx from the one end portion 13x to the another end portion 14x of the tubular body 10x (see FIGS. 22 and 23). At the weld portion 12x, the boundary surface Bx between the first side end portion SE1x and the second side end portion SE2x extends along the shape of the irregularities of the weld portion outer circumferential surface 123x.

In the present embodiment, convex portions 123Ax of the irregularities formed on the weld portion outer circumferential surface 123x are formed in a lattice pattern when viewed from the radial direction of the tubular body 10x. However, the shape of the convex portions 123Ax when viewed from the radial direction of the tubular body 10x is not particularly limited. Concave portions may be formed in a lattice pattern on the weld portion outer circumferential surface 123x. When the convex portions 123Ax or the concave portions of the irregularities formed on the weld portion outer circumferential surface 123x are formed in a lattice pattern, the area of the boundary surface B can be expanded in both of a direction along the circumferential direction DCx and a direction along the axial direction of the tubular body 10x. The convex portions 123Ax or the concave portions may be formed in a pattern of a plurality of dots or may be formed in a pattern of a plurality of lines parallel to each other when viewed from the radial direction of the tubular body 10x. In addition, the height of the convex portion 123Ax in the irregularities formed on the weld portion outer circumferential surface 123x is larger than the thickness of the sheet Sx (thickness of 113x) before the tubular body 10x is formed. The height of the convex portion 123Ax in the irregularities formed on the weld portion outer circumferential surface 123x is preferably 1.1 times or more, more preferably 1.2 times or more, and still more preferably 1.5 times or more the thickness of the sheet Sx (thickness of the extension portion 113x) before the tubular body 10x is formed. As the height of the convex portion 123Ax increases, the area of the boundary surface Bx extending along the shape of the irregularities increases. Thus, a peeling stress applied to the weld portion 12x is dispersed, and the strength of the weld portion 12x is improved.

When the sheet Sx includes a barrier layer and/or a print layer and an anchor coat layer as layers located on the side opposite to the first substrate layer SL1x when viewed from the second substrate layer SL2x, these layers are mixed with the second substrate layer SL2x of the first side end portion SE1x or the first substrate layer SL1x of the second side end portion SE2x which is partially melted. In this may, at the weld portion 12x, even when the sheet Sx does not include a sealant layer as the outermost layer in the radial direction, the first substrate layer SL1x and the second substrate layer SL2x can be welded to each other by ultrasonic welding. As a result, since the sealant layer is not required, the thickness of the tubular body 10x in the radial direction can be reduced.

On the other hand, the weld portion inner circumferential surface 124x faces inward in the radial direction of the tubular body 10x. The weld portion inner circumferential surface 124x is smooth along the circumferential direction DCx. Since the weld portion outer circumferential surface 123x and the weld portion inner circumferential surface 124x are provided as described above, the weld portion 12x includes portions being relatively thick in the radial direction (portions where the convex portions 123Ax are located) and portions being relatively thin in the radial direction. At the weld portion 12x, the thickness in the radial direction of a portion having the largest thickness in the radial direction is, for example, more than twice and three times or less the thickness of the extension portion 113x of the sheet base portion 11x in the radial direction (i.e., the thickness of the sheet Sx in a state before the first side end portion SE1x and the second side end portion SE2x are welded to each other). At the weld portion 12x, the thickness in the radial direction of a portion having the smallest thickness in the radial direction is, for example, 0.5 times or more and 1.5 times or less the thickness of the extension portion 113x of the sheet base portion 11x in the radial direction (i.e., the thickness of the sheet Sx in a state before the first side end portion SE1x and the second side end portion SE2x are welded to each other).

The tubular body 10x is joined to the spout portion 20x at the one end portion 13x in the axial direction of the tubular body 10x. The one end portion 13x may be configured not to have flexibility and to be able to maintain its outer shape by being joined to the spout portion 20x. The one end portion 13x has an annular outer shape when viewed from the axial direction of the tubular body 10x. The one end portion 13x may have a polygonal annular outer shape when viewed in the axial direction of tubular body 10x.

The one end portion 13x of the tubular body 10x in the axial direction includes one end portion of the sheet base portion 11x and one end portion of the weld portion 12x in the axial direction. Also at the one end portion 13x, the first leading end edge 121x is preferably located within the thickness of the first base end portion 111x when viewed from a direction along the circumferential direction DCx. Accordingly, the surface (the inner surface in the present embodiment) of the tubular body 10x is relatively smooth in the vicinity of the first leading end edge 121x of the one end portion 13x, and thus the tubular body 10x and another component (specifically, the spout portion 20x) can be easily joined to each other. Also at the one end portion 13x, the second leading end edge 122x may be located within the thickness of the second base end portion 112x when viewed from a direction along the circumferential direction DCx. In the present embodiment, also at the one end portion 13x, irregularities are formed on the weld portion outer circumferential surface 123x, and the weld portion inner circumferential surface 124x is smooth along the circumferential direction DCx. Thus, the inner circumferential surface of the tubular body 10x and the spout portion 20x can be easily joined to each other at the one end portion 13x.

In the tubular body 10x, the another end portion 14x of the tubular body 10x in the axial direction is closed. In the present embodiment, portions of the sheet Sx facing each other in a direction orthogonal to the axial direction of the tubular body 10x at the another end portion 14x are welded to each other, whereby the tubular body 10x is closed at the another end portion 14x. The another end portion 14x extends in a direction intersecting the axial direction of the tubular body 10x. The method of closing the another end portion 14x of the tubular body 10x is not limited to the above-described aspect. The another end portion 14x of the tubular body 10x may be closed by joining a bottom portion or the like formed of a member different from the sheet Sx to the another end portion 14x.

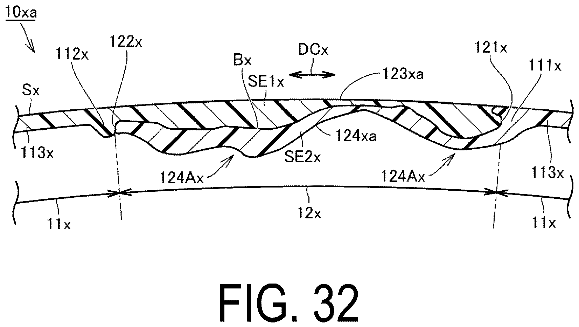

In the present embodiment, the irregularities are formed on the weld portion outer circumferential surface 123x, but the irregularities may be formed on the weld portion inner circumferential surface 124x. FIG. 32 is a partial cross-sectional view of a tubular body according to a first modification of the second embodiment of the present disclosure. FIG. 32 illustrates a tubular body 10xa according to the first modification of the present embodiment in a cross-sectional view similar to FIG. 29. As illustrated in FIG. 32, in the present modification, a weld portion outer circumferential surface 123xa is smooth along the circumferential direction DCx. Irregularities are formed on a weld portion inner circumferential surface 124xa. At the weld portion 12x, the boundary surface Bx between the first side end portion SE1x and the second side end portion SE2x extends along the shape of the irregularities of the weld portion inner circumferential surface 124xa. In the present modification, a convex portion 124Ax and a concave portion of the irregularities on the weld portion inner circumferential surface 124xa may have the same outer shapes as the convex portion 123Ax and the concave portion of the irregularities in the present embodiment. In addition, the height of the convex portion 124Ax in the irregularities formed on the weld portion inner circumferential surface 124xa is larger than the thickness of the sheet Sx (thickness of the extension portion 113x) before the tubular body 10x is formed. The height of the convex portion 124Ax in the irregularities formed on the weld portion inner circumferential surface 124xa is preferably 1.1 times or more, more preferably 1.2 times or more, and still more preferably 1.5 times or more the thickness of the sheet Sx (thickness of the extension portion 113x) before the tubular body 10x is formed. As the height of the convex portion 124Ax increases, the area of the boundary surface Bx extending along the shape of the irregularities increases. Thus, a peeling stress applied to the weld portion 12x is dispersed, and the strength of the weld portion 12x is improved.

In the first modification of the present embodiment, the weld portion outer circumferential surface 123xa is formed of the first side end portion SE1x, and the weld portion inner circumferential surface 124xa is formed of the second side end portion SE2x. Also in the present modification, the first leading end edge 121x is located within the thickness of the first base end portion 111x when viewed from a direction along the circumferential direction DCx.

### Spout Portion

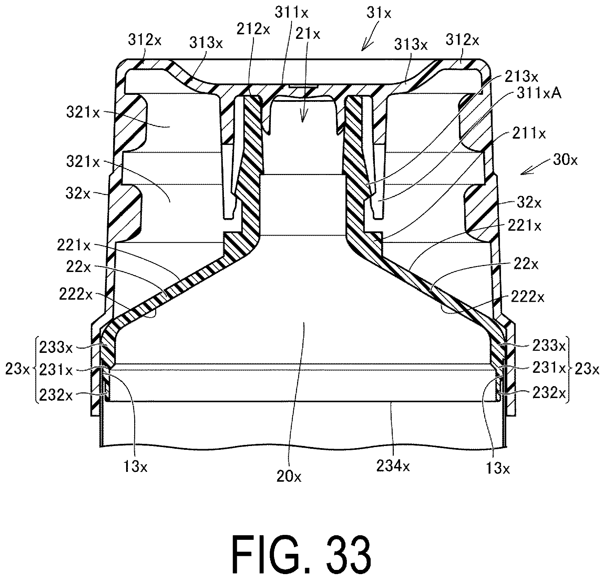

FIG. 33 is a partial cross-sectional view of the tube container of FIG. 22 as viewed from the arrow direction of line XXXIII-XXXIII. As illustrated in FIGS. 22 to 24, 26, and 33, the spout portion 20x is joined to the one end portion 13x of the tubular body 10x in the axial direction. More specifically, the spout portion 20x is located on the inner side in the radial direction of the one end portion 13x of the tubular body 10x. Thus, the spout portion 20x can discharge the content accommodated in the tubular body 10x. In the present embodiment, the spout portion 20x also has a shape capable of accommodating the content, and the tube container 1x is formed of the tubular body 10x and the spout portion 20x so as to accommodate the content therein.

The spout portion 20x includes a spout port 21x, a shoulder portion 22x, and an extending portion 23x. The spout port 21x is provided for discharging the content. In other words, the spout port 21x allows the inside and the outside of the tube container 1x from which the cap portion 30x has been removed to communicate with each other. The spout port 21x extends along the axial direction of the tubular body 10x and has a substantially tubular outer shape.

The spout port 21x includes a connection end portion 211x, a spout end portion 212x, and a locked portion 213x (see FIG. 33). The connection end portion 211x is one end portion of the spout port 21x in the axial direction of the tubular body 10x, and is connected to the shoulder portion 22x. The spout end portion 212x is the another end portion of the spout port 21x in the axial direction. In the case where the tubular body 10x (the tube container 1x) accommodates a content having fluidity, when the content is pressed from the outside of the tubular body 10x in a state in which the cap portion 30x is removed, the content flows in a direction from the connection end portion 211x toward the spout end portion 212x. As a result, the content is discharged from the spout end portion 212x.

The locked portion 213x is formed on the outer circumferential surface of the spout port 21x. The locked portion 213x is configured to be lockable with the cap portion 30x. In the present embodiment, the locked portion 213x has a recessed outer shape extending along the circumferential direction on the outer circumferential surface of the spout port 21x. The locked portion 213x may be an external thread formed to extend spirally.

When viewed from the axial direction of the tubular body 10x, the shoulder portion 22x expands in the radial direction from the spout port 21x (the connection end portion 211x) with the spout port 21x as the center. In the present embodiment, the outer shape of the shoulder portion 22x is circular when viewed from the axial direction, but may be elliptical or polygonal. Further, in the present embodiment, the shoulder portion 22x has a substantially truncated conical outer shape, but may have a disk-like outer shape.

In the present embodiment, an outer surface 221x and an inner surface 222x of the shoulder portion 22x are formed smoothly. In other words, the entirety of the outer surface 221x and the entirety of the inner surface 222x of the shoulder portion 22x extend substantially parallel to each other. Note that, the shoulder portion 22x only needs to be designed such that the outer surface 221x and the inner surface 222x are formed smoothly, and slight irregularities such as burrs generated in manufacturing may be formed on the outer surface 221x and the inner surface 222x.

The thickness of the shoulder portion 22x is not particularly limited, and is 0.5 mm or more and 2.0 mm or less, for example. Note that the thickness of the shoulder portion 22x is the shortest distance from a certain point on the outer surface 221x of the shoulder portion 22x to the inner surface 222x.

The extending portion 23x extends from the shoulder portion 22x along the axial direction of the tubular body 10x. The extending portion 23x has an annular outer shape when viewed from the axial direction (see FIGS. 26, 33, and the like).

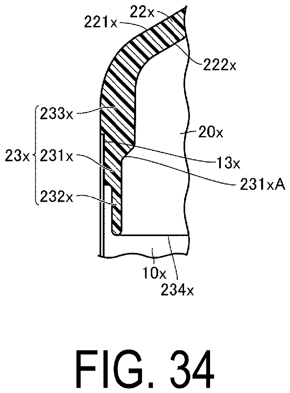

FIG. 34 is an enlarged partial cross-sectional view of a joined part between the tubular body and the spout portion of the tube container according to the second embodiment of the present disclosure. As illustrated in FIGS. 33 and 34, the extending portion 23x includes a joint portion 231x, a leading end portion 232x, and a base end portion 233x.

The joint portion 231x is joined to the tubular body 10x on the outer circumference side when viewed from the axial direction. In the present embodiment, the joint portion 231x is directly joined to the tubular body 10x, but the joint portion 231x may be joined to the tubular body 10x via another layer covering the spout portion 20x. For example, the outer surface of the spout portion 20x may be covered with a gas barrier layer. When the spout portion 20x has a multilayer structure in the thickness direction, a gas barrier layer may be provided between two layers adjacent to each other in the spout portion 20x.

The joint portion 231x includes a step portion 231Ax formed on the inner circumference side. Since the step portion 231Ax is formed, the thickness of a portion of the joint portion 231x located on the side opposite to the shoulder portion side when viewed from the step portion 231Ax is thinner than the thickness of a portion of the joint portion 231x located on the shoulder portion side when viewed from the step portion 231Ax. In this way, by thinning the joint portion 231x to the extent that the strength is not excessively reduced, environmental loads at the time of manufacturing the spout portion 20x is reduced. The thickness of the joint portion 231x is 0.5 mm or more and 2.0 mm or less, for example.

The leading end portion 232x extends from the joint portion 231x to the side opposite to the shoulder portion side (the base end portion 233x side) along the axial direction of the tubular body 10x. The leading end portion 232x is not joined to the tubular body 10x.

When the tube container 1x is vertically dropped, the impact due to the collision between the drop point and the tube container 1x (the cap portion 30x) is transmitted to the spout port 21x via the cap portion 30x. The impact transmitted to the spout port 21x is transmitted to the extending portion 23x via the shoulder portion 22x in the axial direction. The impact transmitted to the extending portion 23x is further transmitted from the joint portion 231x to the tubular body 10x. Here, in the tube container 1x according to the present embodiment, the impact transmitted along the axial direction is transmitted from the joint portion 231x not only to the tubular body 10x but also to the leading end portion 232x of the extending portion 23x. Since the leading end portion 232x is not joined to the tubular body 10x, the impact is converted into vibration of the leading end portion 232x and is attenuated over time. Accordingly, the impact transmitted from the joint portion 231x to the tubular body 10x is reduced, and a concentrated stress at a joint end edge between the joint portion 231x and the tubular body 10x is also reduced. Thus, breakage of the tubular body 10x due to the impact is suppressed.

The leading end portion 232x is separated from the tubular body 10x. Thus, it is possible to further suppress the impact from being transmitted from the leading end portion 232x to the tubular body 10x when the tube container 1x is vertically dropped. Consequently, breakage of the tubular body 10x due to the impact can be further suppressed. Note that the leading end portion 232x may be in close contact with the tubular body 10x without being joined to the tubular body 10x. At this time, no step may be formed between the outer circumferential surface of the leading end portion 232x and the outer circumferential surface of the joint portion 231x, and the outer peripheral surface of the leading end portion 232x may be located in alignment with the outer circumferential surface of the joint portion 231x in the axial direction.

In the present embodiment, the inner circumferential surface and the outer circumferential surface of the leading end portion 232x extend parallel to each other. Thus, both the inner circumferential surface and the outer circumferential surface of the leading end portion 232x extend along the axial direction. Further, the thickness of the leading end portion 232x is formed to be thinner than the thickness of the joint portion 23 1x. In this way, by thinning the leading end portion 232x to the extent that the strength is not excessively reduced, environmental loads at the time of manufacturing the spout portion 20x is reduced.

The base end portion 233x connects the joint portion 231x and the shoulder portion 22x to each other. The thickness of the base end portion 233x is slightly thicker than the thickness of the joint portion 23 1x. When viewed from the axial direction, the outer circumferential surface of the base end portion 233x is located on the outer side in the radial direction of the outer circumferential surface of the joint portion 23 1x by an amount corresponding to the thickness of the sheet Sx constituting the tubular body 10x. Thus, the chance that an end edge of the one end portion 13x of the tubular body 10x will come into contact with another article or the like is reduced, and the tubular body 10x can be prevented from being peeled off from the spout portion 20x.

The extending portion 23x does not necessarily include the base end portion 233x. In that case, the joint portion 23 1x may be directly connected to the shoulder portion 22x. Further, when the joint portion 231x is directly connected to the shoulder portion 22x, the one end portion 13x of the tubular body 10x may also be joined to a part of the outer surface 221x of the shoulder portion 22x.

In the present embodiment, a leading end edge 234x of the extending portion 23x (i.e., a leading end edge of the leading end portion 232x) is located on a virtual plane orthogonal to the axial direction of the tubular body 10x. In other words, the length of the extending portion 23x in the axial direction is substantially constant when viewed from a direction orthogonal to the axial direction. Further, the leading end edge 234x has a chamfered shape, to be specific, is chamfered in a curved surface shape.

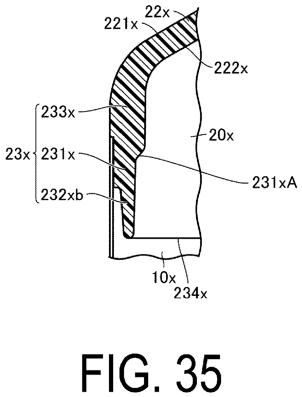

The shapes of the joint portion 23 1x and the leading end portion 232x are not limited to the shapes in the above-described embodiment. FIG. 35 is an enlarged partial cross-sectional view of a joined part between a tubular body and a spout portion of a tube container according to a second modification of the second embodiment of the present disclosure. For example, as illustrated in FIG. 35, in the second modification of the second embodiment of the present disclosure, the inner circumferential surface and the outer circumferential surface of a leading end portion 232xb extend so as to approach each other as the distance from the shoulder portion 22x increases. Thus, the leading end portion 232xb is formed so as to become thinner as the distance from the shoulder portion 22x increases. Therefore, in the case where the spout portion 20x is formed by injection molding as will be described below, at least one of the inner circumferential surface and the outer circumferential surface of the leading end portion 232xb can function as a draft angle.

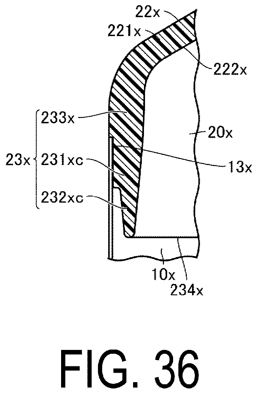

FIG. 36 is an enlarged partial cross-sectional view of a joined part between a tubular body and a spout portion of a tube container according to a third modification of the second embodiment of the present disclosure. For example, as illustrated in FIG. 36, in the third modification of the second embodiment of the present disclosure, a joint portion 231xc does not include a step portion on the inner circumference side. The inner circumferential surface of the joint portion 231xc extends so as to gradually approach the outer circumferential surface of the joint portion 231xc as the distance from the shoulder portion 22x increases. The inner circumferential surface and the outer circumferential surface of a leading end portion 232xc have the same relationship as that in the second modification of the present embodiment, and the inner circumferential surface of the leading end portion 232xc is smoothly connected to the inner circumferential surface of the joint portion 231xc. Accordingly, in the case where the spout portion 20x is formed by injection molding as will be described below, the inner circumferential surface of the leading end portion 232xc and the inner circumferential surface of the joint portion 231xc can function as a draft angle.

In the tube container 1x according to the second embodiment of the present disclosure, the spout portion 20x is made of a resin composition containing a polyester resin as a main component. As the polyester resin in the spout portion 20x, the same polyester resin as that in the first substrate layer SL1x can be used. From the viewpoint of the recyclability of the tube container 1x, the polyester resin of the spout portion 20x is preferably homopolyethylene terephthalate, or polyethylene terephthalate such as copolymerized polyethylene terephthalate obtained by copolymerizing ethylene glycol, terephthalic acid, and a third component, or glycol-modified polyethylene terephthalate, and more preferably homopolyethylene terephthalate. From the viewpoint of the formability of the spout portion 20x, the polyester resin in the spout portion 20x is preferably an amorphous polyester resin (amorphous polyethylene terephthalate, glycol-modified polyethylene terephthalate, or the like). Note that the polyester resin in the spout portion 20x may be a crystalline polyester resin (for example, crystalline polyethylene terephthalate). From the viewpoint of the recyclability of the tube container 1x, the resin composition constituting the spout portion 20x preferably contains only a polyester resin as a resin component. The resin composition constituting the spout portion 20x may further contain a conventionally known additive. From the viewpoint of reducing environmental loads, the polyester resin in the resin composition is preferably made of a recycled material or a biomass-derived material. However, from the viewpoint of reducing the manufacturing cost of the spout portion 20x, it is also preferable that the polyester resin in the resin composition is made of a virgin material.

The intrinsic viscosity (IV) value of a polyester resin material used for molding the spout portion 20x may be, for example, 0.60 or more and 0.90 or less when measured in accordance with JIS standard (K7390-1: 2015). When the IV value is 0.60 or more and 0.90 or less, molding of the spout portion 20x is facilitated.

### Cap Portion

As illustrated in FIGS. 22 and 23, the cap portion 30x is detachably attached to the spout portion 20x.

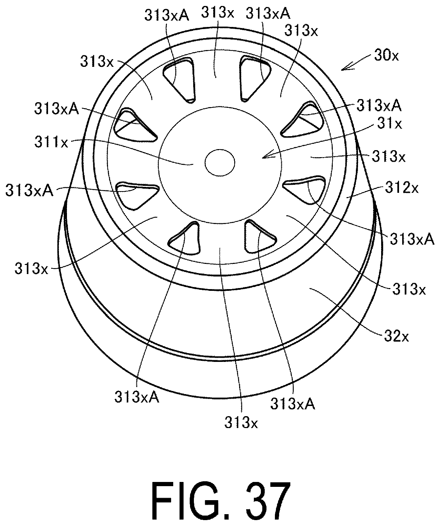

FIG. 37 is a perspective view of the cap portion of the tube container according to the second embodiment of the present disclosure. As illustrated in FIGS. 33 and 37, the cap portion 30x includes a top surface portion 31x and a circumferential side portion 32x. The top surface portion 31x is in contact with the spout port 21x (the spout end portion 212x) in the axial direction of the tubular body 10x. The circumferential side portion 32x is located around the spout portion 20x while extending from a circumferential end edge of the top surface portion 31x when viewed from the axial direction.

The top surface portion 31x includes a fitting portion 311x, an annular end surface portion 312x, and at least one beam portion 313x.

The fitting portion 311x of the top surface portion 31x is in contact with the spout end portion 212x in the axial direction. The fitting portion 311x is detachably fitted to the spout port 21x. In the present embodiment, the fitting portion 311x includes a locking portion 311Ax extending in the axial direction of the tubular body 10x. The locking portion 311Ax is locked with the locked portion 213x of the spout port 21x. In the present embodiment, the locking portion 311Ax is specifically a so-called snap fit. When the locked portion 213x is an external thread, the locking portion 311Ax is an internal thread.

The annular end surface portion 312x is located so as to surround the fitting portion 311x and is continuous with the circumferential side portion 32x when viewed from the axial direction. At least a part of the annular end surface portion 312x is located farther away from the tubular body 10x in the axial direction than the fitting portion 311x. Accordingly, when the tube container 1x is vertically dropped, the annular end surface portion 312x is likely to collide with a drop point earlier than the fitting portion 311x. Thus, when compared to the case where the fitting portion 311x directly collides with a drop point, it is possible to reduce the impact transmitted to the spout portion 20x (the spout port 21x) via the fitting portion 311x. Consequently, breakage of the tubular body 10x due to the impact can be further suppressed.

More specifically, the entirety of the annular end surface portion 312x is located farther away from the tubular body 10x in the axial direction than the fitting portion 311x. Thus, the fitting portion 311x is formed in a concave shape when viewed from the outside of the cap portion 30x. In the present embodiment, the annular end surface portion 312x extends along a virtual plane orthogonal to the axial direction.

Note that the annular end surface portion 312x may extend along the same virtual plane as the fitting portion 311x when viewed from the outside of the cap portion 30x. That is, the top surface portion 31x may be configured such that the outer surface thereof is a flat surface extending in a direction orthogonal to the axial direction of the tubular body 10x.

The beam portion 313x connects the fitting portion 311x and the annular end surface portion 312x to each other. Accordingly, when the tube container 1x is vertically dropped and an impact on the annular end surface portion 312x is transmitted to the fitting portion 311x via the beam portion 313x, the beam portion 313x is bent like a plate spring, whereby the impact is mitigated. Thus, it is possible to further reduce the impact transmitted from the fitting portion 311x to the spout port 21x. Consequently, breakage of the tubular body 10x due to the impact can be further suppressed.

The beam portion 313x is provided by forming at least one through hole 313Ax between the fitting portion 311x and the annular end surface portion 312x in the top surface portion 31x. The beam portion 313x extends along the radial direction centered on the fitting portion 311x when viewed from the axial direction.

In the present embodiment, the top surface portion 31x includes a plurality of beam portions 313x because a plurality of through holes 313Ax is formed. The beam portions 313x are arranged to be separated from each other in the circumferential direction centered on the fitting portion 311x when viewed from the axial direction. Note that the top surface portion 31x is not necessarily formed with the through hole 313Ax. That is, the top surface portion 31x does not necessarily include the beam portion 313x.

The circumferential side portion 32x is configured such that at least a part of the one end portion 13x of the tubular body 10x is located between the circumferential side portion 32x and the joint portion 231x. Accordingly, when the tube container 1x is vertically dropped, it is possible to prevent the one end portion 13x of the tubular body 10x from being peeled from the joint portion 231x. More specifically, the circumferential side portion 32x is configured such that the entirety of the one end portion 13x of the tubular body 10x is located between the circumferential side portion 32x and the joint portion 231x. The circumferential side portion 32x is located in contact with the one end portion 13x of the tubular body 10x.

Further, the circumferential side portion 32x is configured such that at least a part of the one end portion 13x is located between the circumferential side portion 32x and the leading end portion 232x, to be specific, the entirety of the one end portion 13x is located between the circumferential side portion 32x and the leading end portion 232x. Further, the circumferential side portion 32x is located so as to straddle the leading end edge 234x of the extending portion 23x in the axial direction.

Note that, in the present embodiment, the circumferential side portion 32x is configured such that at least a part of the one end portion 13x of the tubular body 10x is located between the circumferential side portion 32x and the joint portion 231x. However, for example, the circumferential side portion 32x may be located so as not to be located on the outer circumference side of the base end portion 233x and so as to be located only on the side opposite to the joint portion 231x when viewed from the base end portion 233x.

The circumferential side portion 32x may include at least one rib 321x formed on the inner surface thereof. According to this configuration, when an impact of the collision between a drop point and the tube container 1x (the cap portion 30x) propagates in the circumferential side portion 32x along the axial direction, a transmission direction of the impact can be disturbed by the rib 321x. Accordingly, it is possible to reduce the impact transmitted from the circumferential side portion 32x to the shoulder portion 22x, the extending portion 23x, or the tubular body 10x.

The rib 321x extends along the circumferential direction centered on the spout port 21x when viewed from the axial direction. The circumferential side portion 32x includes a plurality of ribs 321x arranged in the axial direction. The rib 321x is not necessarily formed on the inner circumferential surface of the circumferential side portion 32x.

In the cap portion 30x according to the present embodiment, the above-described configurations that can be combined with each other may be appropriately combined. However, in the present embodiment, it is preferable that the circumferential side portion 32x is configured such that at least a part of the one end portion 13x of the tubular body 10x is located between the circumferential side portion 32x and the joint portion 231x. Further, it is particularly preferable that the circumferential side portion 32x is configured as described above, and at least a part of the annular end surface portion 312x is located farther away from the tubular body 10x in the axial direction than the fitting portion 311x, and the top surface portion 31x includes at least one beam portion 313x that connects the fitting portion 311x and the annular end surface portion 312x to each other.

In the tube container 1x according to the second embodiment of the present disclosure, the cap portion 30x is made of a resin composition. From the viewpoint of the recyclability of the tube container 1x, the cap portion 30x is preferably made of a resin composition containing a polyester resin as a main component.

As the polyester resin in the cap portion 30x, the same polyester resin as that in the first substrate layer SL1x can be used. From the viewpoint of the recyclability of the tube container 1x, the polyester resin of the cap portion 30x is preferably homopolyethylene terephthalate, or polyethylene terephthalate such as copolymerized polyethylene terephthalate obtained by copolymerizing ethylene glycol, terephthalic acid, and a third component, or glycol-modified polyethylene terephthalate, and more preferably homopolyethylene terephthalate. From the viewpoint of the formability of the cap portion 30x, the polyester resin in the cap portion 30x is preferably an amorphous polyester resin (amorphous polyethylene terephthalate, glycol-modified polyethylene terephthalate, or the like).

### Tube Container with Content

As described above, the tube container 1x can accommodate a content in an internal space formed by the tubular body 10x and the spout portion 20x. The content is not particularly limited, and may be a content that can be accommodated in the tube container 1 of the first embodiment of the present disclosure, or may be a content accommodated in a conventionally known tube container.

### Manufacturing Method of Tube Container

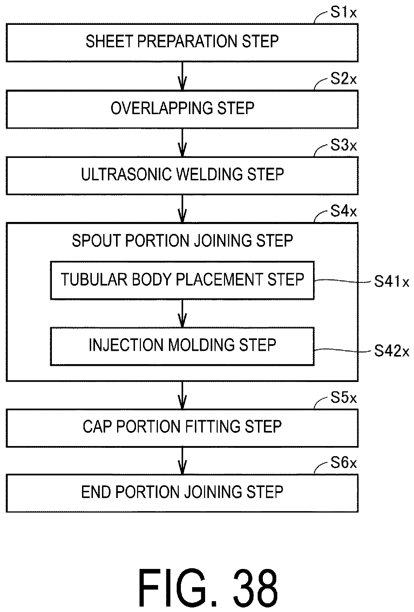

Next, a manufacturing method of the tube container 1x according to the second embodiment of the present disclosure will be described. FIG. 38 is a flowchart illustrating a manufacturing method of the tube container according to the second embodiment of the present disclosure. As illustrated in FIG. 38, the manufacturing method of the tube container 1x according to the present embodiment includes a sheet preparation step S1x, an overlapping step S2, an ultrasonic welding step S3, a spout portion joining step S4x, a cap portion fitting step S5x, and an end portion joining step S6x.

In the sheet preparation step S1x, the sheet Sx is prepared by layering a plurality of layers on each other. For example, the sheet Sx may be prepared by bonding the first substrate layer SL1x formed of a single-layer film and the second substrate layer SL2x formed of a single-layer film on which the barrier layer BLx is vapor-deposited with the adhesive layer ALx by dry lamination. A commercially available layered film including the first substrate layer SL1x and the second substrate layer SL2x may be prepared.

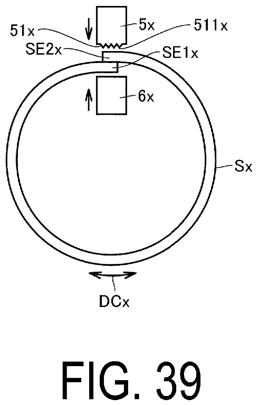

FIG. 39 is a schematic view of the sheet in the overlapping step and the ultrasonic welding step of the second embodiment of the present disclosure. As illustrated in FIG. 39, in the overlapping step S2, the prepared sheet Sx is formed into a tubular shape, and the first side end portion SE1x and the second side end portion SE2x are overlapped with each other.

In the ultrasonic welding step S3, the first side end portion SE1x and the second side end portion SE2x are sandwiched between an ultrasonic horn 5x positioned on one side out of the inner side and the outer side in the radial direction of the sheet Sx formed in the tubular shape and an anvil 6x positioned on the other side out of the inner side and the outer side in the radial direction, and then ultrasonically welded to each other. At this time, the first side end portion SE1x and the second side end portion SE2x are pressed in the thickness direction of the sheet Sx by the ultrasonic horn 5x and the anvil 6x while being oscillated by ultrasonic waves from the ultrasonic horn 5x. In the present embodiment, the ultrasonic horn 5x is positioned on the outer side of the sheet Sx in the radial direction, and the anvil 6x is positioned on the inner side of the sheet Sx in the radial direction. Note that the ultrasonic horn 5x may be positioned on the inner side of the sheet Sx in the radial direction, and the anvil 6x may be positioned on the outer side of the sheet Sx in the radial direction.

At least one of the ultrasonic horn 5x and the anvil 6x includes a concavo-convex shape 51x to be pressed against the sheet Sx when sandwiching the sheet Sx. In the present embodiment, only the ultrasonic horn 5x includes the concavo-convex shape 51x. Both of the ultrasonic horn 5x and the anvil 6x may include the concavo-convex shape, or only the anvil 6x may include the concavo-convex shape.

In the present embodiment, the ultrasonic horn 5x including the concavo-convex shape 51x is positioned on the outer side in the radial direction of the sheet Sx formed in the tubular shape, and the anvil 6x is positioned on the inner side in the radial direction of the sheet Sx formed in the tubular shape. Thus, irregularities are formed on the weld portion outer circumferential surface 123x along the concavo-convex shape 51x of the ultrasonic horn 5x. The ultrasonic horn 5x including the concavo-convex shape 51x may be positioned on the inner side of the sheet Sx in the radial direction, and the anvil 6x may be positioned on the outer side of the sheet Sx in the radial direction. In that case, as in the first modification of the present embodiment, irregularities are formed on the weld portion inner circumferential surface 124x along the concavo-convex shape 51x (see FIG. 32). In the present embodiment, the second side end portion SE2x is locally pushed into the first side end portion SE1x at a plurality of locations by convex portions 511x of the concavo-convex shape 51x. Accordingly, the resin components are partially mixed with each other during the welding. Consequently, the first side end portion SE1x and the second side end portion SE2x are firmly welded to each other.

The concavo-convex shape 51x is positioned so as to overlap with the entirety of the first side end portion SE1x and the second side end portion SE2x when viewed from the radial direction of the sheet Sx formed in the tubular shape. Accordingly, in the present embodiment, the irregularities are formed on the entirety of the weld portion 12x in the circumferential direction DCx. In addition, when viewed from the radial direction of the sheet Sx formed in the tubular shape, the width of the concavo-convex shape 51x in the circumferential direction of the sheet Sx formed in the tubular shape is preferably larger than the width of the region where the first side end portion SE1x and the second side end portion SE2x are overlapped with each other in the sheet Sx. Accordingly, the first side end portion SE1x and the second side end portion SE2x can be more reliably welded to each other even when the length of the width of the region where the first side end portion SE1x and the second side end portion SE2x are overlapped with each other is changed from a designed length or even when the ultrasonic horn 5x and the anvil 6x are displaced.

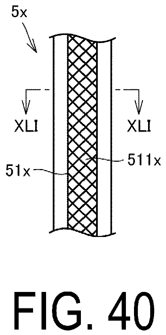

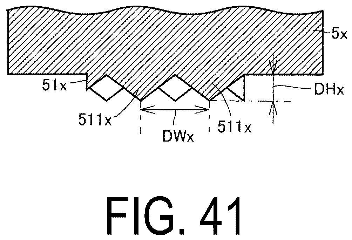

FIG. 40 is a plan view of the ultrasonic horn used in the manufacturing method of the tube container according to the second embodiment of the present disclosure, as viewed from a direction facing the anvil. FIG. 41 is a cross-sectional view of the ultrasonic horn of FIG. 40 as viewed from the arrow direction of line XLI-XLI.

As illustrated in FIGS. 40 and 41, a height DHx of the convex portion 511x of the concavo-convex shape 51x is preferably larger than the thickness of the sheet Sx. The height DHx is more preferably 1.1 times or more, still more preferably 1.2 times or more, and most preferably 1.5 times or more the thickness of the sheet Sx. By locally pressurizing the overlapped portions of the first side end portion SE1x and the second side end portion SE2x with the convex portions 511x, frictional heat due to ultrasonic waves is easily applied to the overlapped surfaces of the first side end portion SE1x and the second side end portion SE2x. When the height DHx is larger than the thickness of the sheet Sx, both the first side end portion SE1x and the second side end portion SE2x, which are melted, easily flow between the convex portions 511x. As a result, the boundary surface Bx between the first side end portion SE1x and the second side end portion SE2x is easily deformed along the concavo-convex shape 51x. Accordingly, the area of the boundary surface Bx is increased, the peeling stress applied to the weld portion 12x is further dispersed, and the strength of the weld portion 12x is further improved. The height DHx is preferably three times or less the thickness of the sheet Sx. When the height DHx is three times or less, it is possible to prevent the convex portions 511x from penetrating the sheet Sx. The height DHx is, for example, about 300 µm.

The shape of each of the plurality of convex portions 511x is not particularly limited, but is preferably a substantially quadrangular pyramid shape, for example. The convex portions 511x are positioned so as to be arranged along one direction and a direction orthogonal to the one direction when viewed from an opposing direction of the ultrasonic horn 5x and the anvil 6x. Accordingly, the convex portions 123Ax of the weld portion 12x are formed in a lattice pattern.

A separation distance DWx between the apexes of the plurality of convex portions 511x is preferably 0.4 mm or more and 2.0 mm or less. When the separation distance DWx is 0.4 mm or more, the resin components of the sheet Sx are more likely to flow in. When the separation distance DWx is 2.0 mm or less, it is possible to suppress the resin components having flowed between the convex portions 511x from leaking from the concavo-convex shape 51x. The concavo-convex shape 51x is not necessarily formed so as to overlap the entirety of the first side end portion SE1x and the second side end portion SE2x, but is preferably formed so as to overlap the entirety thereof.

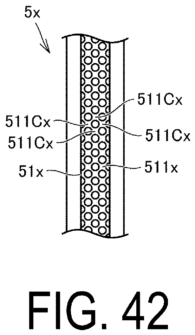

Note that the concavo-convex shape 51x is not limited to the above-described shape. FIG. 42 is a plan view of an ultrasonic horn in which convex portions of a concavo-convex shape are connected to each other in the second embodiment of the present disclosure. As illustrated in FIG. 42, when viewed from the opposing direction, each of the plurality of convex portions 511x may be connected to the convex portion 511x located closest thereto. That is, the convex portions 511x may be formed in a lattice pattern expanding over the entirety of the concavo-convex shape 51x. In that case, it is preferable that respective intersection points 511Cx of the lattice formed by the convex portions 511x in the concavo-convex shape 51x are arranged at intervals of 0.4 mm or more and 2.0 mm or less. This makes it easier for the resin components of the sheet Sx to flow into the concave portions of the concavo-convex shape 51x.

In the spout portion joining step S4x, the spout portion 20x is joined to the tubular body 10x. In the present embodiment, the spout portion 20x is joined to the tubular body 10x by so-called insert molding. As illustrated in FIG. 38, the spout portion joining step S4x includes a tubular body placement step S41x and an injection molding step S42x. In the spout portion joining step S4x, the spout portion 20x may be joined to the tubular body 10x by so-called compression molding instead of the above-described insert molding, or the spout portion 20x may be joined to the tubular body 10x by ultrasonic welding.

In the cap portion fitting step S5x, the cap portion 30x formed in advance is fitted to the spout portion 20x. As a molding method of the cap portion 30x, a conventionally known method such as injection molding or compression molding can be employed. In the end portion joining step S6x, a pair of portions of the sheet Sx facing each other in a direction orthogonal to the axial direction of the tubular body 10x are welded to each other at the another end portion 14x. At this time, the pair of portions of the sheet Sx are preferably ultrasonically welded to each other.

In this way, the tube container 1x according to the present embodiment is manufactured. When a tube container with a content is manufactured, for example, the content may be filled into the tubular body 10x from the another end portion 14x side after the spout portion joining step S4x or the cap portion fitting step S5x and before the end portion joining step S6x.

The tubular body 10x according to the second embodiment of the present disclosure and the tube container 1x including the tubular body 10x have excellent recyclability. Therefore, the tubular body 10x according to the second embodiment of the present disclosure and the tube container 1x including the tubular body 10x comply with the sustainable circular economy demanded by the SDGs (sustainable development goals) and can greatly contribute to the reduction of plastic waste.

As described above, in the present embodiment, the first substrate layer SL1x is located on the centermost side in the radial direction of the tubular body 10x and contains a polyester resin as a main component. The first substrate layer SL1x is formed of a non-stretched film or a uniaxially stretched film. The second substrate layer SL2x is layered on the first substrate layer SL1x in the radial direction and contains a polyester resin as a main component. The second substrate layer SL2x is formed of a biaxially stretched film.

When the tube container 1x according to the present embodiment is vertically dropped, breakage of the tubular body 10x due to collision with a drop point is suppressed. Specifically, the impact due to the collision is first transmitted from the cap portion 30x to the tubular body 10x via the spout portion 20x. Here, in the present embodiment, since the first substrate layer SL1x is formed of a non-stretched film or a uniaxially stretched film as described above, the joint strength between the first substrate layer SL1x containing a polyester resin as a main component and the spout portion 20x made of a resin composition containing a polyester resin as a main component at the one end portion of the tubular body 10x is improved as a whole. Thus, it is possible to suppress the occurrence of a crack in the tubular body 10x from a portion where the joint strength between the spout portion 20x and the tubular body 10x is relatively small. At the same time, since the second substrate layer SL2x is formed of a biaxially stretched film, the strength of the sheet Sx, that is, the strength of the tubular body 10x itself is improved. Accordingly, breakage of the tubular body 10x due to the impact is suppressed.

In the present embodiment, the sheet Sx may further include the third substrate layer SL3x. The third substrate layer SL3x is layered on the side opposite to the first substrate layer SL1x when viewed from the second substrate layer SL2x. The third substrate layer SL3x contains a polyester resin as a main component. The third substrate layer SL3x is formed of a non-stretched film or a uniaxially stretched film.

With the above-described configuration, the first substrate layer SL1x and the third substrate layer SL3x are easily welded to each other at the weld portion 12x, and the joint strength of the sheet Sx can be further improved at the weld portion 12x.

The tube container 1x according to the present embodiment further includes the cap portion 30x. The cap portion 30x is detachably attached to the spout portion 20x. The cap portion 30x includes the top surface portion 31x and the circumferential side portion 32x. The top surface portion 31x is in contact with the spout port 21x. The circumferential side portion 32x is located around the spout portion 20x while extending from a circumferential end edge of the top surface portion 31x when viewed from the axial direction. The top surface portion 31x includes the fitting portion 311x and the annular end surface portion 312x. The fitting portion 311x is fitted to the spout port 21x. The annular end surface portion 312x is located so as to surround the fitting portion 311x and is continuous with the circumferential side portion 32x when viewed from the axial direction. At least a part of the annular end surface portion 312x is located farther away from the tubular body 10x in the axial direction than the fitting portion 311x.

With the above-described configuration, when the tube container 1x is vertically dropped, the annular end surface portion 312x is likely to collide with a drop point earlier than the fitting portion 311x. Thus, when compared to the case where the fitting portion 311x directly collides with a drop point, it is possible to reduce the impact transmitted to the spout portion 20x (the spout port 21x) via the fitting portion 311x. Consequently, breakage of the tubular body 10x due to the impact can be further suppressed.

### Third Embodiment

Next, a tube container according to a third embodiment of the present disclosure will be described. The tube container according to the third embodiment of the present disclosure is different from the tube container according to the second embodiment of the present disclosure mainly in the shape of the leading end edge of the extending portion. Thus, description of the same configurations as those of the tube container according to the second embodiment of the present disclosure will not be repeated.

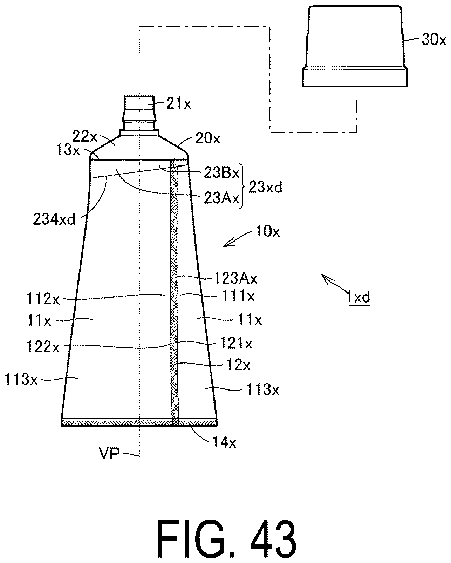

FIG. 43 is a front view of a state in which a cap portion is removed from the tube container according to the third embodiment of the present disclosure. As illustrated in FIG. 43, in a tube container 1xd according to the third embodiment of the present disclosure, an extending portion 23xd includes a first extending portion 23Ax and a second extending portion 23Bx located on the other side. The first extending portion 23Ax is located on one side with respect to a virtual plane VP extending parallel to the axial direction while passing through a geometric center point of the extending portion 23xd when viewed from the axial direction, and the second extending portion 23Bx is located on the other side.

The weight of the first extending portion 23Ax is larger than the weight of the second extending portion 23Bx. According to this configuration, since the weight of the first extending portion 23Ax is larger than the weight of the second extending portion 23Bx, when the tube container 1xd is vertically dropped, the entirety of the tube container 1xd is inclined to the first extending portion side with respect to the vertical direction. The tube container 1xd (specifically, the cap portion 30x) collides with a drop point in a state of being inclined to the first extending portion side. Thus, a component force in the axial direction of the impact force due to the collision is reduced. Consequently, the impact transmitted to the tubular body 10x via the extending portion 23xd is also reduced. Accordingly, breakage of the tubular body 10x due to the impact is suppressed.

A leading end edge 234xd of the first extending portion 23Ax is located farther away from the shoulder portion 22x in the axial direction than a leading end edge 234xd of the second extending portion 23Bx. Accordingly, the weight of the first extending portion 23Ax can be easily made larger than the weight of the second extending portion 23Bx.

More specifically, the leading end edge 234xd extends along another virtual plane that is not orthogonal to the virtual plane. Accordingly, the weight of the first extending portion 23Ax can be more easily made larger than the weight of the second extending portion 23Bx.

Note that the configuration for making the weight of the first extending portion 23Ax larger than the weight of the second extending portion 23Bx is not limited to the above-described configuration. For example, in the case where the entirety of the leading end edge 234xd extends in a direction orthogonal to the axial direction, the weight of the first extending portion 23Ax may be made larger than the weight of the second extending portion 23Bx by making the first extending portion 23Ax thicker than the second extending portion 23Bx.

### Fourth Embodiment

Next, a tube container according to a fourth embodiment of the present disclosure will be described. The tube container according to the fourth embodiment of the present disclosure is different from the tube container according to the second embodiment of the present disclosure in the configuration of the shoulder portion. Thus, description of the same configurations as those of the tube container according to the second embodiment of the present disclosure will not be repeated.

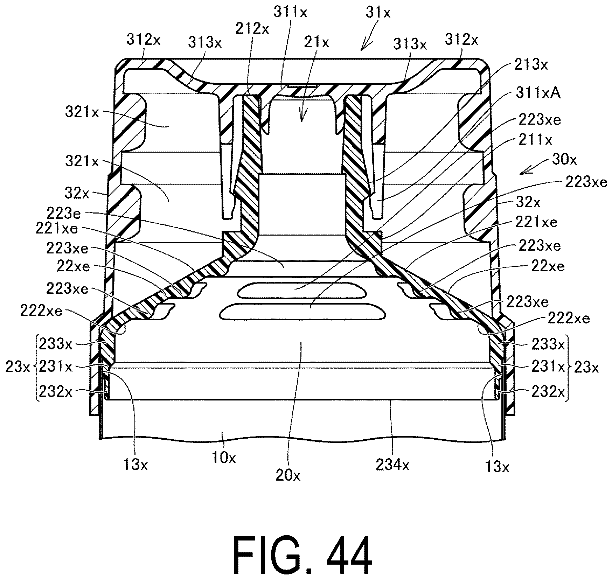

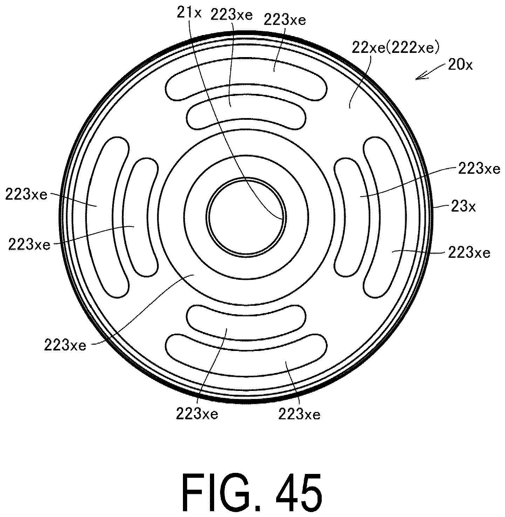

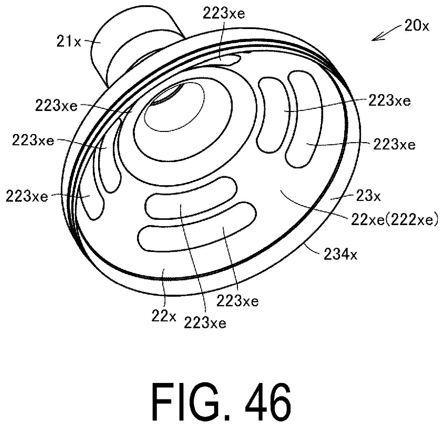

FIG. 44 is a partial cross-sectional view of the tube container according to the fourth embodiment of the present disclosure. FIG. 44 is a cross-sectional view similar to FIG. 33. FIG. 45 is a bottom view of a spout portion according to the fourth embodiment of the present disclosure as viewed from an extending portion side. FIG. 46 is a perspective view of the spout portion according to the fourth embodiment of the present disclosure.

As illustrated in FIGS. 44 to 46, a concave portion or a convex portion is formed on an outer surface 221xe or an inner surface 222xe of a shoulder portion 22xe. When the tube container 1x is vertically dropped and the impact of collision between a drop point and the tube container 1x (the cap portion 30x) is transmitted from the spout port 21x to the extending portion 23x via the shoulder portion 22xe, the transmission direction of the impact at the shoulder portion 22xe can be disturbed by the concave portion or the convex portion. Thus, the impact transmitted to the extending portion 23x can be reduced. Consequently, the impact transmitted from the joint portion 23 1x to the tubular body 10x is also reduced, and breakage of the tubular body 10x due to the impact is further suppressed.

In the present embodiment, the outer surface 221xe of the shoulder portion 22xe is formed smoothly, and a convex portion 223xe is formed on the inner surface 222xe of the shoulder portion 22xe. According to this configuration, since the outer surface 221xe of the shoulder portion 22xe is formed smoothly, the hand feeling of the shoulder portion 22xe is improved. In addition, since the convex portion 223xe is formed on the inner surface 222xe of the shoulder portion 22xe, it is possible to prevent the shoulder portion 22xe from becoming too thin as compared to the case where a concave portion is formed. Consequently, the strength of the shoulder portion 22xe can be improved.

More specifically, the convex portion 223xe is formed in a rib shape. The convex portion 223xe extends along the circumferential direction centered on the spout port 21x when viewed from the axial direction. The convex portion 223xe may extend in an annular shape when viewed from the axial direction. When viewed from the direction in which the convex portion 223xe extends, the convex portion 223xe has a shape in which a corner portion thereof is chamfered, to be specific, the corner portion is chamfered in a curved surface shape (see FIG. 44). Accordingly, when the spout portion 20x receives an impact, it is possible to prevent a crack from being generated in the spout portion 20x with the convex portion 223xe as a starting point.

In the present embodiment, a plurality of convex portions 223xe is formed on the inner surface 222xe of the shoulder portion 22xe. Each of the plurality of convex portions 223xe may extend along a circle centered on the spout port 21x and may be separated from each other when viewed from the axial direction. However, when viewed from the axial direction, it is preferable that one convex portion 223xe extends along a circle having a certain diameter, and it is more preferable that one convex portion 223xe extends in an annular shape without break along a circle having a certain diameter. The plurality of convex portions 223xe may be arranged in the radial direction centered on the spout port 21x. In the present embodiment, each of the plurality of convex portions 223xe is formed so as to extend along any one of a plurality of virtual concentric circles having different diameters with the spout port 21x as a center when viewed from the axial direction. It is also preferable that, when viewed from the axial direction, each of the plurality of convex portions 223xe is formed in an annular shape without break while being arranged so as to be concentric with each other around the spout port 21x.

### Fifth Embodiment

Next, a tube container according to a fifth embodiment of the present disclosure will be described. The tube container according to the fifth embodiment of the present disclosure is different from the tube container 1x according to the second embodiment of the present disclosure only in a part of the configuration of the cap portion. Thus, description of the same configurations as those of the tube container 1x according to the second embodiment of the present disclosure will not be repeated.

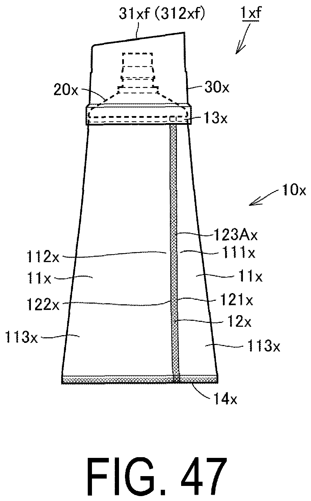

FIG. 47 is a front view of the tube container according to the fifth embodiment of the present disclosure. As illustrated in FIG. 47, in the tube container 1xf according to the fifth embodiment of the present disclosure, the outer surface of a top surface portion 31xf extends so as not to be parallel to a direction orthogonal to the axial direction of the tubular body 10x.

With the above-described configuration, when the tube container 1x is vertically dropped, a portion of the top surface portion 31xf most separated from the tubular body 10x first collides with a drop point. At this time, a part of the impact received by the top surface portion 31xf is also transmitted separately in a direction along the inclined outer surface of the top surface portion 31xf. Thus, it is possible to suppress the impact from being transmitted to the joined part between the tubular body 10x and the spout portion 20x. Consequently, breakage of the tubular body 10x due to the impact can be further suppressed.

More specifically, the outer surface of an annular end surface portion 312xf extends in a plane shape so as not to be parallel to a direction orthogonal to the axial direction of the tubular body 10x.

### Sixth Embodiment

Next, a tube container according to a sixth embodiment of the present disclosure will be described. The tube container according to the sixth embodiment of the present disclosure is different from the tube container 1x according to the second embodiment of the present disclosure only in a part of the configuration of the cap portion. Thus, description of the same configurations as those of the tube container 1x according to the second embodiment of the present disclosure will not be repeated.

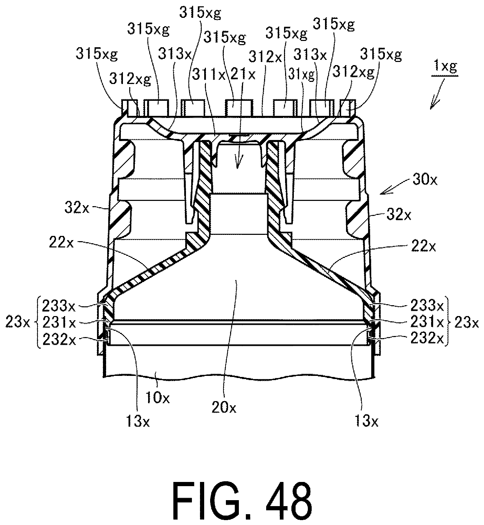

FIG. 48 is a partial cross-sectional view of the tube container according to the sixth embodiment of the present disclosure. FIG. 48 is a cross-sectional view similar to FIG. 33. As illustrated in FIG. 48, in a tube container 1xg according to the sixth embodiment of the present disclosure, a top surface portion 31xg further includes at least one projection portion 315xg. In the present embodiment, the top surface portion 31xg includes a plurality of projection portions 315xg. The projection portions 315xg are disposed side by side in the circumferential direction around the center of the cap portion 30x when viewed from the axial direction of the tubular body 10x.

The projection portion 315xg protrudes outward from an annular end surface portion 312xg in a direction along the axial direction of the tubular body 10x. Thus, when the tube container 1x is vertically dropped, the projection portions 315xg first collide with a drop point. At this time, the projection portions 315xg are crushed by an impact, whereby it is possible to prevent the impact from being transmitted to other portions of the cap portion 30x. Consequently, it is possible to suppress the impact from being transmitted to the joined part between the tubular body 10x and the spout portion 20x.

### Seventh Embodiment

Next, a tube container according to a seventh embodiment of the present disclosure will be described. The tube container according to the seventh embodiment of the present disclosure is different from the tube container 1x according to the second embodiment of the present disclosure in the aspect of the joint between the tubular body and the spout portion. Thus, description of the same configurations as those of the tube container 1x according to the second embodiment of the present disclosure will not be repeated.

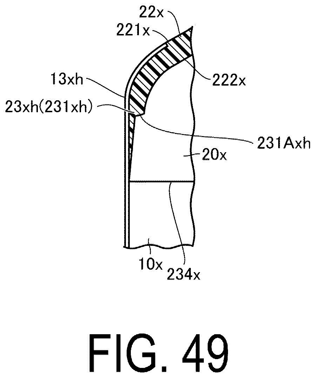

FIG. 49 is a partial cross-sectional view of the tube container according to the seventh embodiment of the present disclosure. FIG. 49 is a cross-sectional view similar to FIG. 34. As illustrated in FIG. 49, in the seventh embodiment of the present disclosure, an extending portion 23xh does not include a leading end portion. Thus, the leading end edge 234x of the extending portion 23xh is composed of a joint portion 231xh.

In the present embodiment, the thickness of the joint portion 231xh is gradually reduced toward the leading end edge 234x. Accordingly, in the present embodiment, when the tube container 1x is vertically dropped, a stress of an impact generated by collision with a drop point is suppressed from being concentrated at the joined part between the joint portion 231xh and the tubular body 10x at the leading end edge 234x. Consequently, breakage of the tubular body 10x due to the impact can be further suppressed.

More specifically, when viewed from a step portion 231Axh, the thickness of a portion of the joint portion 231xh located on the side opposite to the shoulder portion side is gradually reduced toward the leading end edge 234x. Accordingly, in the above-described portion of the joint portion 231xh, concentration of the stress on a specific portion other than the leading end edge 234x is also suppressed until the impact is transmitted to the leading end edge 234x.

Further, in the present embodiment, the joint portion 231xh does not include a base end portion. Thus, the joint portion 231xh is directly connected to the shoulder portion 22x. One end portion 13xh of the tubular body 10x is also joined to a part of the outer surface of the shoulder portion 22x while extending along the outer surface 221x of the shoulder portion 22x.

### Eighth Embodiment

Next, a tube container according to an eighth embodiment of the present disclosure will be described. The tube container according to the eighth embodiment of the present disclosure includes a tubular body actually formed of a sheet including a third substrate layer illustrated in FIG. 28 and the like as a modification of the second embodiment of the present disclosure. Thus, description of the same configurations and effects as those of the tube container 1x according to the second embodiment of the present disclosure will not be repeated.

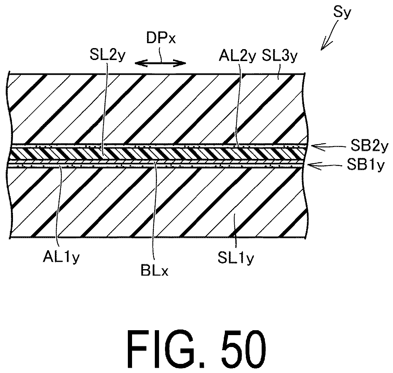

FIG. 50 is a partial cross-sectional view of a sheet constituting a tubular body according to the eighth embodiment of the present disclosure. A first substrate layer SL1y contains a resin component as a main component, and contains, for example, a polyester resin or a polyolefin resin as a main component. From the viewpoint of improving recyclability, the first substrate layer SL1y preferably contains a polyester resin as a main component.

**In** the case where the first substrate layer SL1y contains a polyolefin resin as a main component, examples of the polyolefin resin include polyethylene, polypropylene, and cyclic olefin polymer. From the viewpoint of recyclability, the polyolefin resin of the first substrate layer SL1y is preferably polypropylene.

As in the second embodiment of the present disclosure, the first substrate layer SL1y is preferably formed of a non-stretched or uniaxially stretched film, and more preferably formed of a non-stretched film. When the first substrate layer SL1y is formed of a non-stretched or uniaxially stretched film, surface crystallization of the first substrate layer SL1y is suppressed, and thus the weldability with another layer in performing ultrasonic welding is improved. It is particularly preferable that the first substrate layer SL1y contains a polyester resin as a main component and is formed of a non-stretched film.

In the present embodiment, a second substrate layer SL2y contains a resin component as a main component, and contains, for example, a polyester resin or a polyolefin resin as a main component. From the viewpoint of improving recyclability, the second substrate layer SL2y preferably contains a polyester resin as a main component, similarly to the first substrate layer SL1y.

As the polyolefin resin of the second substrate layer SL2y, a polyolefin resin that can be employed as the polyolefin resin of the first substrate layer SL1y can be used. From the viewpoint of recyclability, the polyolefin resin of the second substrate layer SL2y is preferably polypropylene.

It is particularly preferable that the second substrate layer SL2y contains a polyester resin as a main component and is formed of a biaxially stretched film.

In the present embodiment, a third substrate layer SL3y is located on the outer side of a tubular body 10y in the radial direction when viewed from the first substrate layer SL1y and the second substrate layer SL2y. A sheet Sy may further include another layer between the first substrate layer SL1y and the third substrate layer SL3y. The sheet Sy may further include another layer between the second substrate layer SL2y and the third substrate layer SL3y.

As the resin component of the third substrate layer SL3y, a polyolefin resin, or a polyolefin resin and a polyester resin similar to those that can be employed as the main component of the first substrate layer SL1y and the second substrate layer SL2y can be used. In the case where the third substrate layer SL3y is layered on the side opposite to the first substrate layer SL1y when viewed from the second substrate layer SL2y, the third substrate layer SL3y preferably contains, as a main component, a resin component of the same type as the main component of the first substrate layer SL1y from the viewpoint of adhesiveness of the sheet Sy at a weld portion 12y. Accordingly, the first substrate layer SL1y and the third substrate layer SL3y are welded to each other at the weld portion 12y, and the joint strength of the sheet Sy can be further improved at the weld portion 12y.

As in the second embodiment of the present disclosure, the third substrate layer SL3y is preferably formed of a non-stretched film or uniaxially stretched film, and more preferably formed of a non-stretched film. When the third substrate layer SL3y is formed of a non-stretched or uniaxially stretched film, surface crystallization of the third substrate layer SL3y is suppressed, and thus the weldability with another layer in performing ultrasonic welding is improved. It is particularly preferable that the third substrate layer SL3y contains a polyester resin as a main component and is formed of a non-stretched film.

The third substrate layer SL3y is preferably the outermost layer of the sheet Sy, and is preferably the outermost layer of the sheet Sy at least at the weld portion 12y.

The thickness of the third substrate layer SL3y is preferably 10 µm or more and 300 µm or less, for example. The thickness of the third substrate layer SL3y is preferably 5 µm or more and 200 µm or less, and more preferably 5 µm or more and 100 µm or less, for example.

In the present embodiment, the resin components of the first substrate layer SL 1y, the second substrate layer SL2y, and the third substrate layer SL3y are preferably a polyester resin or polypropylene from the viewpoint of recyclability. However, the sheet Sy including layers containing these resin components is difficult to be welded by high-frequency welding. This is because polyethylene, which is often used as a resin component of a sheet for a conventional tube container, has a melting point of 120°C, whereas a polyester resin has a melting point of about 250°C and polypropylene has a melting point of about 160°C. However, as described above, the sheet Sy can be welded to each other by ultrasonic welding at the weld portion of each embodiment. In other words, the configuration in which the weld portion is formed by ultrasonic welding is particularly effective when the resin components are a polyester resin or polypropylene.

In the present embodiment, the sheet Sy includes a first adhesive layer AL1y corresponding to the adhesive layer ALx of the second embodiment. Further, the sheet Sy includes a second adhesive layer AL2y similar to the second adhesive layer AL2x (see FIG. 28) of the second embodiment.

The sheet Sy may further include a print layer for improving design quality. The print layer may be located on the side opposite to the second substrate layer SL2y when viewed from the third substrate layer SL3y, or may be located between the third substrate layer SL3y and the second substrate layer SL2y. The print layer is preferably located on the side opposite to the second substrate layer SL2y when viewed from the third substrate layer SL3y.

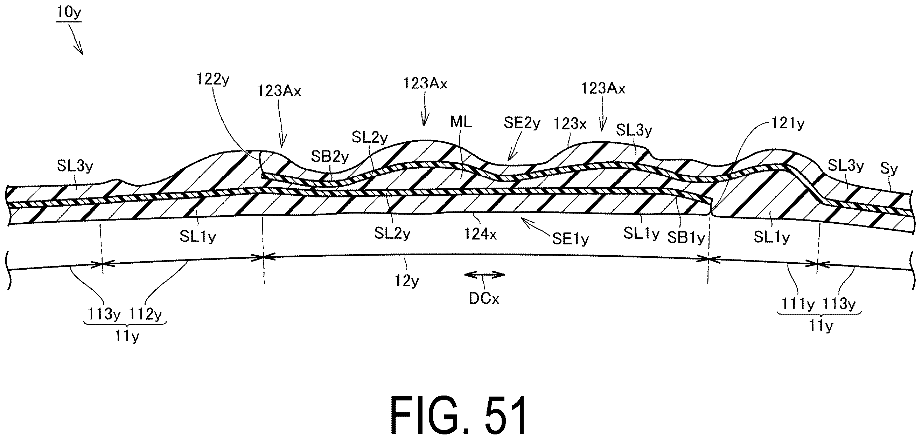

It is also preferable that the sheet Sy does not include the print layer at the weld portion 12y (see FIG. 51 to be described below). This makes it possible to prevent the reduction in aesthetics of the tube container 1 due to the print layer melted in welding the weld portion 12y.

In the case where the sheet Sy includes the print layer, a transparent protective layer may be further layered on the print layer. The transparent protective layer may be, for example, a resin film such as a polypropylene film or a layer made of a transparent ink.

Next, details of a sheet base portion 11y and the weld portion 12y in the eighth embodiment of the present disclosure will be described. FIG. 51 is a partial cross-sectional view of the tubular body in the tube container according to the eighth embodiment of the present disclosure. FIG. 51 illustrates a cross-section in a cross-sectional view similar to FIG. 29 of the second embodiment of the present disclosure.

The average thicknesses of a first base end portion 111y and a second base end portion 112y are different from the thickness (the thickness of an extension portion 113y in the radial direction) of the sheet Sy in a state before the tubular body 10y is formed.

The first base end portion 111y and the second base end portion 112y may include both a portion thicker and a portion thinner in the radial direction than the sheet Sy before the tubular body 10y is formed, or may include only a thicker portion or a thinner portion. For example, in the cross-sectional view illustrated in FIG. 51, the thickness of the first base end portion 111y in the radial direction is thicker than the thickness of the sheet Sy (the thickness of the extension portion 113y in the radial direction) in a state before the tubular body 10y is formed. The second base end portion 112y includes a portion thinner and a portion thicker in the radial direction than the thickness of the sheet Sy (the thickness of the extension portion 113y in the radial direction) in a state before the tubular body 10y is formed.

In the present embodiment, at a first leading end edge 121y, there is a boundary between the first substrate layer SL1y of a first side end portion SE1y and the first substrate layer SL1y of the first base end portion 111y, but the boundary is not necessarily present. That is, the first substrate layer SL1y of the first side end portion SE1y and the first substrate layer SL1y of the first base end portion 111y may be merged with each other so as to be continuous in the circumferential direction DC.

A first interlayer portion SB1y between the first substrate layer SL1y and the second substrate layer SL2y at the first side end portion SE1y is in contact with the first base end portion 111y within the thickness of the first base end portion 111y when viewed from a direction along the circumferential direction DC. Accordingly, the content of the tube container 1 is less likely to come into contact with the first interlayer portion SB1y between the first substrate layer SL1y and the second substrate layer SL2y at the first side end portion SE1y. Consequently, the occurrence of interlayer peeling between the first substrate layer SL1y and the second substrate layer SL2y due to contact of the content with the first interlayer portion SB1y can be suppressed.

In the present embodiment, at a second leading end edge 122y, there is a boundary between the third substrate layer SL3y of a second side end portion SE2y and the third substrate layer SL3y of the second base end portion 112y, but the boundary is not necessarily present. That is, the third substrate layer SL3y of the second side end portion SE2y and the third substrate layer SL3y of the second base end portion 112y may be merged with each other so as to be continuous in the circumferential direction DC.

A second interlayer portion SB2y between the second substrate layer SL2y and the third substrate layer SL3y at the second side end portion SE2y is in contact with the second base end portion 112y within the thickness of the second base end portion 112y when viewed from a direction along the circumferential direction DC. Accordingly, another object located outside the tubular body 10y is less likely to come into contact with the second interlayer portion SB2y. Consequently, the occurrence of interlayer peeling between the second substrate layer SL2y and the third substrate layer SL3y due to contact of the another object with the second interlayer portion SB2y can be suppressed.

Further, in the present embodiment, the third substrate layer SL3y of the first side end portion SE1y and the first substrate layer SL1y of the second side end portion SE2y are merged with each other to form a merged layer ML. Thus, at least the first side end portion SE1y and the second side end portion SE2y do not clearly form a boundary surface along the circumferential direction DC.

The merged layer ML is a layer formed as one layer by the third substrate layer SL3y of the first side end portion SE1y and the first substrate layer SL1y of the second side end portion SE2y being merged with each other. Thus, the first side end portion SE1y and the second side end portion SE2y are firmly connected to each other.

The merged layer ML is welded to the first substrate layer SL1y of the first base end portion 111y. Specifically, the merged layer ML does not form a boundary with the first substrate layer SL1y of the first base end portion 111y, and is continuous with the first substrate layer SL1y of the first base end portion 111y in the circumferential direction DC. Accordingly, the merged layer ML is firmly connected to the first substrate layer SL1y of the first base end portion 111y. In addition, the merged layer ML is welded to the third substrate layer SL3y of the second base end portion 112y. Specifically, the merged layer ML does not form a boundary with the third substrate layer SL3y of the second base end portion 112y, and is continuous with the third substrate layer SL3y of the second base end portion 112y in the circumferential direction DC. Accordingly, the merged layer ML and the third substrate layer SL3y of the second base end portion 112y are firmly connected to each other.

At the weld portion 12y, the thickness in the radial direction of a portion having the largest thickness in the radial direction is, for example, more than 1.5 times and 3 times or less the thickness of the extension portion 113y of the sheet base portion 11y in the radial direction (i.e., the thickness of the sheet Sy in a state before the first side end portion SE1y and the second side end portion SE2y are welded to each other). At the weld portion 12y, the thickness in the radial direction of a portion having the smallest thickness in the radial direction is, for example, 0.3 times or more and 1.5 times or less the thickness of the extension portion 113y of the sheet base portion 11y in the radial direction (i.e., the thickness of the sheet Sy in a state before the first side end portion SE1y and the second side end portion SE2y are welded to each other).

Also in the present embodiment, since the first leading end edge 121y is joined to the first base end portion 111y, the weld length of the weld portion 12y when viewed from the axial direction of the tubular body 10y is relatively long. Thus, when a peeling stress is applied to the weld portion 12y, the stress is more dispersed. **In** addition, since the first leading end edge 121y is located within the thickness of the first base end portion 111y when viewed from a direction along the circumferential direction DC of the tubular body 10y, the chance of the first leading end edge 121y coming into contact with the outside can be reduced. Thus, it is possible to suppress the first side end portion SE1y and the second side end portion SE2y of the weld portion 12y from being peeled from each other with the first leading end edge 121y as a starting point. Consequently, the strength of the weld portion 12y is improved.

### Other Modifications

The tube container according to each embodiment of the present disclosure may have various other configurations. Hereinafter, tube containers and tube containers with a content according to other modifications of each embodiment of the present disclosure will be described.

**In** each embodiment, the first substrate layer may contain a polyolefin resin as a main component. Examples of the polyolefin resin in the first substrate layer include polypropylene, polyethylene, and a cyclic olefin polymer.

The polypropylene resin that can be employed as a resin component of the first substrate layer, as a resin component of the second substrate layer, and as a resin component of the third substrate layer may be a polypropylene homopolymer (propylene homopolymer) or a polypropylene copolymer (propylene copolymer). Examples of the copolymer include random copolymers of propylene and olefin (e.g., α-C₂₋₆ olefin such as ethylene, 1-butene, 2-butene, 1-pentene, 1-hexene, 3-methylpentene, and 4-methylpentene, or butene-1 and 4-methyl-1-pentene), including, for example, propylene-ethylene random copolymer, propylene-butene random copolymer, and propylene-ethylene-butene random terpolymer. In the case of a copolymer, the proportion of copolymerizable monomer may be 20 wt.% or less, for example, about 0.1 to 10 wt.%. Further, the polypropylene resin may be a crystalline (or crystal) polypropylene resin or a non-crystalline (or non-crystal) polypropylene resin. Examples of other copolymers include a block copolymer which is a copolymer including a polymer block composed of propylene and a polymer block composed of the above-described olefin.

These polypropylene resins may be used alone or in combination of two or more. Among them, crystalline polypropylene resins, particularly, a polypropylene homopolymer (crystalline polypropylene homopolymer) is preferable. When impact resistance or the like is regarded as important, the polypropylene resin is preferably a random copolymer.

The polypropylene resin may have an atactic structure or may have a stereoregularity such as an isotactic structure or a syndiotactic structure. Among them, a polypropylene resin having an isotactic structure is preferable from the viewpoint of crystallinity and the like.

The polypropylene resin may be biomass-derived polypropylene or mechanically recycled or chemical recycled polypropylene.

Examples of polyethylene that can be employed as a resin component of the first substrate layer, as a resin component of the second substrate layer, and as a resin component of the third substrate layer include high-density polyethylene, medium-density polyethylene, low-density polyethylene, linear low-density polyethylene, and ultralow-density polyethylene. Among them, low-density polyethylene and/or linear low-density polyethylene are preferable from the viewpoint of heat sealability.

As the high-density polyethylene, polyethylene having a density of 0.945 g/cm³ or more can be used. As the medium-density polyethylene, polyethylene having a density of 0.925 g/cm³ or more and less than 0.945 g/cm³ can be used. As the low-density polyethylene, polyethylene having a density of 0.900 g/cm³ or more and less than 0.925 g/cm³ can be used. As the linear low-density polyethylene, polyethylene having a density of 0.900 g/cm³ or more and less than 0.925 g/cm³ can be used. As the ultralow-density polyethylene, polyethylene having a density of less than 0.900 g/cm³ can be used.

Polyethylene also includes copolymers of ethylene and other monomers. Examples of the ethylene copolymer include a copolymer composed of ethylene and α-olefin with 3 to 20 carbon atoms. Examples of the α-olefin with 3 to 20 carbon atoms include propylene, 1-butene, 1-pentene, 1-hexene, 1-octene, 1-decene, 1-dodecene, 1-tetradecene, 1-hexadecene, 1-octadecene, 1-eicosene, 3-methyl-1-butene, 4-methyl-1-pentene, and 6-methyl-1-heptene. In addition, a copolymer with vinyl acetate, acrylic acid ester, or the like may be used as long as the object of the present invention is not impaired.

The above-described polyethylene may include biomass-derived polyethylene obtained by polymerization of monomers containing biomass-derived ethylene. Since such biomass-derived polyethylene is a carbon-neutral material, it is possible to reduce environmental loads in manufacturing the tube container according to each embodiment. Since biomass-derived ethylene is used as a monomer which is a raw material, the polyethylene obtained by polymerization is biomass-derived. Note that the raw material monomer of polyethylene does not necessarily contain 100 mass% of biomass-derived ethylene.

The monomer which is the raw material of the biomass-derived polyethylene may further contain ethylene and/or α-olefin derived from fossil fuel, or may further contain α-olefin derived from biomass.

In the tube container according to the modification of each embodiment of the present disclosure, the sheet constituting the tubular body may include two or more second substrate layers (hereinafter, may be referred to as intermediate layers) on which a barrier layer is layered. Each of the two or more intermediate layers may be disposed between the first substrate layer and the third substrate layer. When the sheet includes a first intermediate layer and a second intermediate layer, and both the first substrate layer and the third substrate layer contain polyethylene terephthalate as a main component, each of the second substrate layer of the first intermediate layer and the second substrate layer of the second intermediate layer may be a biaxially stretched film containing polyethylene terephthalate as a main component as a resin component. Examples of the combination of the barrier layer of the first intermediate layer and the barrier layer of the second intermediate layer include a combination of a transparent vapor-deposited layer (ceramic barrier layer) and an aluminum barrier layer, and a combination of two transparent vapor-deposited layers (ceramic barrier layers). The sheet constituting the tubular body may include a second substrate layer which is a biaxially stretched film containing polyethylene terephthalate as a main component, and an intermediate layer which is different from the second substrate layer and includes a biaxially stretched film containing polyethylene terephthalate as a main component.

The sheet constituting the tubular body may further include a reinforcement layer made of nylon or the like. When the sheet S further includes the reinforcement layer, the strength of the tube container is improved, and the tube container can be prevented from being broken when the tube container is dropped. The thickness of the reinforcement layer may be, for example, 5 µm or more and 25 µm or less. For example, the reinforcement layer may be disposed between the first substrate layer and the second substrate layer, or may be disposed between the second substrate layer and the third substrate layer. The first intermediate layer may be a biaxially stretched film containing polyethylene terephthalate as a main component, and the second intermediate layer located on the side opposite to the third substrate layer when viewed from the first intermediate layer may be a reinforcement layer made of nylon or the like as a substrate layer. The contained amount of the polyester resin such as polyethylene terephthalate in the sheet constituting the tubular body is preferably 90 mass% or more as a whole.

In the tube container according to each embodiment of the present disclosure, the inner diameter of a substantially cylindrical portion of the tubular body may be, for example, 25 mm or more and 60 mm or less. It is also preferable that the thickness of the sheet constituting the tubular body is 100 µm or more and 300 µm or less, for example.

The thickness of the first substrate layer may be, for example, 70 µm, 80 µm, 90 µm, or 100 µm. The total thickness of the second substrate layer and the barrier layer may be, for example, 12 µm or 25 µm. The thickness of the third substrate layer may be, for example, 70 µm, 80 µm, 90 µm, or 100 µm. It is also preferable that the thickness of the first substrate layer is 90 µm, and the total thickness of the second substrate layer and the barrier layer is 12 µm, and the thickness of the third substrate layer is 90 µm.

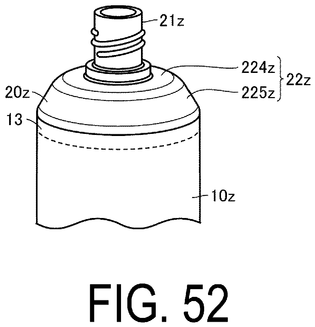

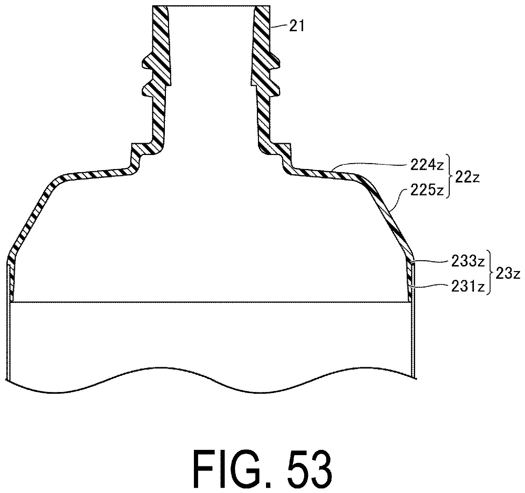

FIG. 52 is a partial perspective view of a tube container according to a first modification example in which the shape of a spout portion is different from that of each embodiment. FIG. 53 is a partial cross-sectional view of the tube container according to the first modification example in which the shape of the spout portion is different from that of each embodiment.

As illustrated in FIGS. 52 and 53, in the tube container according to each embodiment of the present disclosure, an external thread extending spirally may be formed on the outer circumferential surface of a spout port 21z.

A shoulder portion 22z may include a flat plate portion 224z and an inclined surface portion 225z. The flat plate portion 224z may expand from the root of the spout port 21z in a direction substantially orthogonal to the axial direction of a tubular body 10z. The inclined surface portion 225z may extend obliquely with respect to the axial direction from the outer circumferential edge of the flat plate portion 224z toward one end portion 13z of the tubular body 10z. An extending portion 23z includes a joint portion 231z and a base end portion 233z, but does not necessarily include a leading end portion as in the second embodiment of the present disclosure.

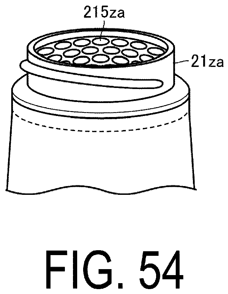

FIG. 54 is a partial perspective view of a tube container according to a second modification example in which the shape of a spout portion is different from that of each embodiment. As illustrated in FIG. 54, a spout port 21za may be provided with a plurality of hole portions 215za for allowing the inside and the outside of the tube container to communicate with each other. Accordingly, the tube container including the spout port 21za described above can suitably discharge a powdery content.

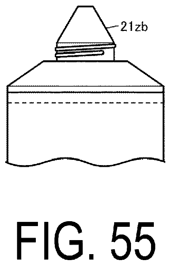

FIG. 55 is a partial front view of a tube container according to a third modification example in which the shape of a spout portion is different from that of each embodiment. As illustrated in FIG. 55, a spout port 21zb may have an outer shape in which the outer and inner diameters decrease toward the leading end.

It is also preferable that the spout portion is made of crystalline polyethylene terephthalate so as to improve a barrier property. In addition, the spout portion may be subjected to a diamond-like carbon (DLC) coating treatment so as to improve the barrier property. In order to improve the barrier property, a resin composition constituting the spout portion may contain polymetaxylylene adipamide (nylon MXD6) which is a polycondensate of metaxylylene diamine and adipic acid or a polycondensate of metaxylylene diamine, adipic acid, and isophthalic acid.

The opening of the spout port may be sealed with a sealing material. The thickness of the sealing material is 50 µm or more and 100 µm or less, for example. The sealing material may include, for example, one or more resin layers containing resin such as polyethylene terephthalate or polyethylene, a barrier layer made of aluminum or the like, a heat seal layer for bonding the sealing material to the spout port, and an anchor coat layer for bonding these layers to each other.

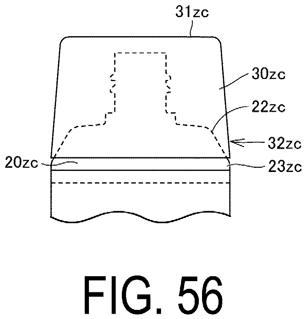

FIG. 56 is a partial front view of a tube container according to a modification example in which the shape of a cap portion is different from that of each embodiment. When a cap portion 30zc is fitted to a spout portion 20zc, an end portion of a circumferential side portion 32zc of the cap portion 30zc on the side opposite to a top surface portion 31zc side may be separated from a shoulder portion 22zc and an extending portion 23z. Accordingly, it is possible to suppress an impact of collision between a drop point and the tube container from being directly transmitted to the shoulder portion 22zc and the extending portion 23z. The cap portion 30zc may be a so-called hinge cap in which the top surface portion 31zc is configured to be openable and closable. Note that an end portion of the circumferential side portion 32zc of the cap portion 30zc on the side opposite to the top surface portion 31zc side may be in contact with the shoulder portion 22zc and the extending portion 23z.

In order to approximate the tube container to a container made of a monomaterial, the tube container according to each embodiment preferably contains, in total, more than 90 mass%, more preferably 95 mass% or more of a polyester resin such as polyethylene terephthalate, preferably contains 5 mass% or less of an adhesive layer and an anchor coat layer, preferably contains 5 mass% or less of a print layer, and 5 mass% or less of a barrier layer containing alumina, silica, an ethylene-vinyl alcohol copolymer resin, or the like.

A food accommodated in the tube container according to each embodiment may be mayonnaise or the like. The content accommodated in the tube container according to each embodiment may include triacylglycerol; diacylglycerol; canola oil, rapeseed oil, sesame oil, sunflower oil, corn oil, rice oil, grape oil, or the like.

Note that, in the end portion joining step of the manufacturing method of a tube container according to each embodiment, a pair of portions of the sheet are ultrasonically welded to each other, but the portions of the sheet may be welded to each other by a hot air method. In addition, in the end portion joining step of the manufacturing method of a tube container according to each embodiment, portions of the sheet may be joined to each other with an adhesive such as a hot melt adhesive.

In the description of the above-described embodiments, Examples, and modifications, configurations that can be combined may be combined with each other.

The embodiments and Examples disclosed herein should be considered as being illustrative in all respects and not restrictive. The scope of the present invention is defined by the terms of the claims, rather than the description above, and is intended to include any modifications within the scope and meaning equivalent to the terms of the claims.

### Reference Signs List

1, 1x, 1xd, 1xf, 1xg Tube container; 10, 10a, 10b, 10x, 10xa, 10y, 10z Tubular body; 11, 11x, 11y Sheet base portion; 111, 111x, 111y First base end portion; 112, 112x, 112y Second base end portion; 113, 113x, 113y Extension portion; 12, 12b, 12x, 12y Weld portion; 121, 121x, 121y First leading end edge; 122, 122x, 122y Second leading end edge; 123, 123a, 123x, 123xa Weld portion outer circumferential surface; 124, 124a, 124x, 124xa Weld portion inner circumferential surface; 126, 127 Smooth region; 13, 13x, 13xh, 13z One end portion; 14, 14x Another end portion; 20, 20x, 20zc Spout portion; 21, 21x, 21z, 21za, 21zb Spout port; 211x Connection end portion; 212x Spout end portion; 213x Locked portion; 215za Hole portion; 22, 22x, 22xe, 22z, 22zc Shoulder portion; 221 Joint end portion; 221x, 221xe Outer surface; 222x, 222xe Inner surface; 224z Flat plate portion; 225z Inclined surface portion; 231Ax, 231Axh Step portion; 23x, 23xd, 23xh, 23z Extending portion; 23Ax First extending portion; 23Bx Second extending portion; 231x, 231xc, 231xh, 231z Joint portion; 232x, 232xb, 232xc Leading end portion; 233x, 233z Base end portion; 234x, 234xd Leading end edge; 30x, 30zc Cap portion; 31x, 31xf, 31xg, 31zc Top surface portion; 311Ax Locking portion; 311x Fitting portion; 312x, 312xf, 312xg Annular end surface portion; 313Ax Through hole; 313x Beam portion; 315xg Projection portion; 32x, 32zc Circumferential side portion; 321x Rib; 5, 5a, 5x Ultrasonic horn; 51, 51a, 51x Concavo-convex shape; 52A First flat region; 53A Second flat region; 6, 6x Anvil; 7 Mold; 71a First mold; 72a Second mold; 81 spout portion anvil; 82 spout portion ultrasonic horn; AL, ALx Adhesive layer; AL1y First adhesive layer; AL2x Second adhesive layer; AL2y Second adhesive layer; B, Bx Boundary surface; BL, BLx Barrier layer; M Molding material; ML Merged layer; S, Sx, Sy Sheet; SB Boundary portion; SB1y First interlayer portion; SB2y Second interlayer portion; SE1x, SE1y, SE1 First side end portion; SE2, SE2y, SE2x Second side end portion; SL1x, SL1y, SL1 First substrate layer; SL2, SL2x, SL2y Second substrate layer; SL3y, SL3x Third substrate layer.

## Claims

1. A tube container comprising:
a tubular body including a weld portion having a strip shape, the weld portion being formed by curving or bending a single sheet such that a first side end portion of the sheet in a plane direction and a second side end portion of the sheet located opposite to the first side end portion are overlapped in a thickness direction of the sheet and then welding the first side end portion and the second side end portion to each other; and
a spout portion joined to one end portion of the tubular body in an axial direction,
the tubular body further including a sheet base portion located between the first side end portion and the second side end portion of the sheet in the plane direction,
the sheet base portion including a first base end portion which is a portion continuous with the second side end portion in the sheet ,
the weld portion including a first leading end edge which is a leading end edge of the first side end portion in a circumferential direction of the tubular body and is joined to the first base end portion, and
the first leading end edge being located within a thickness of the first base end portion when viewed from a direction along the circumferential direction.

2. The tube container according to claim 1, wherein
the sheet includes a first substrate layer located on a centermost side in a radial direction of the tubular body,
the first substrate layer contains a polyester resin as a main component, and
the first substrate layer is formed of a non-stretched film or a uniaxially stretched film.

3. The tube container according to claim 2, wherein the first substrate layer contains amorphous polyethylene terephthalate as a main component.

4. The tube container according to claim 2 or 3, wherein the first substrate layer contains, as a main component, a polyester resin made of a recycled material or a biomass-derived material.

5. The tube container according to any one of claims 2 to 4, wherein
the sheet further includes a second substrate layer layered on the first substrate layer, the second substrate layer containing a polyester resin as a main component, and
the second substrate layer is formed of a non-stretched film, a uniaxially stretched film, or a biaxially stretched film.

6. The tube container according to claim 5, wherein
the sheet further includes a third substrate layer layered on a side opposite to the first substrate layer when viewed from the second substrate layer, the third substrate layer containing a polyester resin as a main component, and
the third substrate layer is formed of a non-stretched film or a uniaxially stretched film.

7. The tube container according to any one of claims 2 to 6, wherein
the tubular body includes another end portion in the axial direction,
portions of the sheet facing each other in a direction orthogonal to the axial direction are welded to each other at the another end portion, whereby the tubular body is closed at the another end portion, and
the sheet has a thickness of 12 µm or more and 300 µm or less.

8. The tube container according to any one of claims 2 to 7, wherein
the spout portion is made of a resin composition containing a polyester resin as a main component,
the spout portion includes
a spout port allowing an inside and an outside of the tube container to communicate with each other, and
a shoulder portion connecting the spout port and the one end portion of the tubular body,
the shoulder portion includes a joint end portion joined to the first substrate layer constituting an inner circumferential surface of the one end portion of the tubular body.

9. The tube container according to any one of claims 1 to 8, wherein the spout portion is made of a resin composition containing amorphous polyethylene terephthalate as a main component.

10. The tube container according to any one of claims 1 to 9, wherein the spout portion is made of a resin composition containing a polyester resin produced from a recycled material or a biomass-derived material.

11. The tube container according to any one of claim 1 to 10, further comprising a cap portion detachably attached to the spout portion, wherein
the spout portion includes
a spout port allowing an inside and an outside of the tube container to communicate with each other, and
a shoulder portion connecting the spout port and the one end portion of the tubular body,
the cap portion includes
a top surface portion in contact with the spout port, and
a circumferential side portion located around the spout portion while extending from a circumferential end edge of the top surface portion when viewed from the axial direction,
the top surface portion includes
a fitting portion fitted to the spout port, and
an annular end surface portion being located so as to surround the fitting portion and being continuous with the circumferential side portion when viewed from the axial direction, and
at least a part of the annular end surface portion is located farther away from the tubular body in the axial direction than the fitting portion.

12. A tube container with a content, comprising:
the tube container according to any one of claims 1 to 11; and
a content accommodated in the tube container,
the content containing at least one of an oil-soluble compound, an oily component, a volatile oily component, and a flavoring agent or a sweetener, or a surfactant.

13. A manufacturing method of a tube container, the manufacturing method being a method of manufacturing the tube container according to any one of claims 1 to 11, the manufacturing method comprising:
preparing the sheet;
overlapping the first side end portion and the second side end portion with each other while forming the sheet, which has been prepared, into a tubular shape;
ultrasonically welding the first side end portion and the second side end portion by sandwiching the first side end portion and the second side end portion between an ultrasonic horn and an anvil, the ultrasonic horn being positioned on one side out of an inner side and an outer side in a radial direction of the sheet formed in the tubular shape, the anvil being positioned on another side out of the inner side and the outer side in the radial direction; and
joining the spout portion to the tubular body,
at least one of the ultrasonic horn and the anvil including a concavo-convex shape to be pressed against the sheet when sandwiching the sheet.

14. The manufacturing method of a tube container according to claim 13, wherein
the joining the spout portion includes
placing the tubular body inside a mold, and
injection-molding the spout portion on the tubular body by filling the resin composition, which has been melted, onto the tubular body inside the mold in a state in which the tubular body is placed inside the mold.
